# EUROPÄISCHE PATENTSCHRIFT

(11) **EP 2 783 764 B1**
(45) Veröffentlichungstag und Bekanntmachung des Hinweises auf die Patenterteilung: **13.07.2016**
(21) Anmeldenummer: 13001994.6
(22) Anmeldetag: 16.04.2013
(51) Int. Cl.: B09C 1/06, B29B 17/02, F27B 7/00, C10B 47/30

(54) **Pyrolyseanlage und Verfahren zur Rückgewinnung von Kohlenstofffasern aus kohlenstofffaserhaltigen Kunststoffen, und rückgewonnene Kohlenstofffasern**
Pyrolysis assembly and method for the recovery of carbon fibres from plastics containing carbon fibre, and recycled carbon fibres
Installation de pyrolyse et procédé destinés à la récupération de fibres de carbone à partir de matières synthétiques contenant des fibres de carbone, et fibres de carbone récyclées

(30) Priorität: 28.03.2013 EP 13001625
(43) Veröffentlichungstag der Anmeldung: 01.10.2014
(73) Patentinhaber: ELG Carbon Fibre International GmbH, 47138 Duisburg (DE)
(72) Erfinder: Gehr, Marco, 51789 Lindlar (DE); Wilcox, Lee, 47138 Duisburg (DE); Strehlke, Ingo Kurt, 45130 Essen (DE); Alsop, Stewart, 47138 Duisburg (DE)
(74) Vertreter: Von Rohr Patentanwälte Partnerschaft mbB

(56) Entgegenhaltungen:
- EP-B1- 2 152 487
- WO-A1-03/089212
- JP-A- 2001 200 266
- JP-A- 2008 032 300
- PIMENTA S ET AL: "Recycling carbon fibre reinforced polymers for structural applications: Technology review and market outlook", WASTE MANAGEMENT, ELSEVIER, NEW YORK, NY, US, Bd. 31, Nr. 2, 1. Februar 2011 (2011-02-01), Seiten 378-392, XP027542673, ISSN: 0956-053X [gefunden am 2010-12-01]
- JOSEPH P HEIL ET AL: "Mechanical and wetting behavior of recycled carbon fibers recovered from pyrolysis processes", INTERNATIONAL SAMPE TECHNICAL CONFERENCE; SAMPE 2012 - BALTIMORE, MD MAY 21 - MAY 24, 2012,, 1 January 2012 (2012-01-01), page 15PP, XP009183043,
- Guozhan Jiang: "8 TH INTERNATIONAL CONFERENCE ON COMPOSITE MATERIALS", 18TH INTERNATIONAL CONFERENCE ON COMPOSITE MATERIALS, 1 January 2011 (2011-01-01), pages 1-6, XP055175023, Retrieved from the Internet: URL:http://www.iccm-central.org/Proceeding s/ICCM18proceedings/data/2. Oral Presentation/Aug26(Friday)/F28 Recycling/F28-3-IF1504.pdf [retrieved on 2015-03-09]

## Beschreibung

Die vorliegende Erfindung betrifft das technische Gebiet der Rückgewinnung (Rezyklierung) von Kohlenstofffasern aus kohlenstofffaserhaltigen Kunststoffen, insbesondere aus kohlenstofffaserverstärkten Kunststoffen (CFKs), vorzugsweise aus kohlenstofffaserhaltigen bzw. kohlenstofffaserverstärkten Verbundwerkstoffen (Kompositmaterialien).

Insbesondere betrifft die vorliegende Erfindung eine Pyrolyseanlage zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien), sowie deren Verwendung zur Rückgewinnung (Rezyklierung) von Kohlenstofffasern aus kohlenstofffaserhaltigen Kunststoffen.

Weiterhin betrifft die vorliegende Erfindung ein Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs), vorzugsweise aus kohlenstofffaserhaltigen bzw. kohlenstofffaserverstärkten Verbundwerkstoffen (Kompositmaterialien), sowie die durch dieses Verfahren erhältlichen rezyklierten Kohlenstofffasern und deren Verwendung.

Des Weiteren betrifft die vorliegende Erfindung Kunststoffe, Baustoffe oder zementäre Systeme, welche nach dem erfindungsgemäßen Verfahren erhältliche rezyklierte Kohlenstofffasern umfassen bzw. welche unter Verwendung von nach dem erfindungsgemäßen Verfahren erhältlichen rezyklierten Kohlenstofffasern hergestellt sind.

Schließlich betrifft die vorliegende Erfindung Formkörper (z. B. Bauteile), Formen und Flächenmaterialien (z. B. Vliesstoffe), insbesondere in Form von Kompositmaterialien oder Compounds, welche nach dem erfindungsgemäßen Verfahren erhältliche rezyklierte Kohlenstofffasern umfassen bzw. welche unter Verwendung von nach dem erfindungsgemäßen Verfahren erhältlichen rezyklierten Kohlenstofffasern hergestellt sind.

Im Allgemeinen können kohlenstofffaserverstärkte Kunststoffe (synonym auch CFKs genannt) als Faser-Kunststoff-Verbundwerkstoffe bezeichnet werden, bei welchen eine Vielzahl von Kohlenstofffasern, vorzugsweise in mehreren Lagen, als Verstärkung in eine Matrix, wie Kunststoff, eingebettet werden. Als Kunststoffmatrix können sowohl Duromere, wie Epoxidharze, Acrylate und Polyurethane, als auch Thermoplaste, wie Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC), verwendet werden. Es ist jedoch auch möglich, Kohlenstofffasern in eine Matrix aus Keramik (synonym auch als keramische Faserverbundstoffe bezeichnet) einzubetten, um thermisch sehr belastbare Bauteile, wie Bremsscheiben, zu erhalten.

Kohlenstofffaserverstärke Kunststoffe (CFKs) weisen eine hohe Festigkeit und Steifigkeit bei gleichzeitig geringem Gewicht auf und werden vorzugsweise in Bereichen eingesetzt, wo hohe gewichtsspezifische Festigkeiten und Steifigkeiten erforderlich sind. Beispielsweise werden CFKs in der Luft- und Raumfahrt, in der Windkraftindustrie, im Fahrzeugbau oder für Sportgeräte, wie Fahrradrahmen, Speedskates, Tennisschläger, Sportpfeile und Angelruten, verwendet. Im Bauwesen können kohlenstofffaserverstärke Kunststoffe (CFKs) in Form von Lamellen oberflächlich auf die Bauteiloberfläche geklebt werden, um Bauwerke zu verstärken.

Die Festigkeit und Steifigkeit von aus kohlenstofffaserverstärkten Kunststoffen (CFKs) hergestellten Materialien bzw. Bauteilen ist im Allgemeinen - wie bei anderen Faser-Matrix-Verbundwerkstoffen - in Faserrichtung wesentlich höher als quer zur Faserrichtung. So kann beispielsweise quer zu den Kohlenstofffasern die Festigkeit geringer sein als die Festigkeit des verwendeten Matrixmaterials. Um eine gleichmäßige Festigkeit und Steifigkeit der Materialien bzw. Bauteile aus CFKs in alle Raumrichtungen zu gewährleisten, werden einzelne Faserlagen in verschiedenen Richtungen verlegt. Beispielsweise können im Fall von Hochleistungskonstruktionsbauteilen die Faserrichtungen mittels Computerberechnungen, wie der klassischen Laminattheorie, bestimmt werden, um die vorgegebene Festigkeit und Steifigkeit zu erreichen.

Die zur Herstellung von CFKs verwendeten Kohlenstoffprimärfasern (synonym auch virgin fibers genannt) werden überwiegend industriell aus kohlenstoffhaltigen Ausgangsmaterialien, insbesondere Polyacrylnitril (PAN), durch Stabilisierungsreaktionen an Luft, nachfolgender Pyrolyse in inerter Atmosphäre und anschließender Graphitisierung hergestellt. Die Steifigkeit und Festigkeit der Kohlenstoff-primärfasern kann dabei während des Herstellprozesses durch die Vorspannung sowie die Temperaturen bei der Carbonisierung und Graphitisierung gezielt gesteuert werden, so dass verschiedene Fasertypen kommerziell erhältlich sind. Aufgrund ihrer kostengünstigen Herstellung werden überwiegend HT-Fasern (hochfeste Fasern) sowie IM-Fasern (Intermediate Modulus Fasern) als Kohlenstoffprimärfasern eingesetzt. Um die Adhäsion der Kohlenstoffprimärfasern nach der Graphitisierung zu erhöhen, kann eine Oxidation der Oberfläche der Kohlenstoffprimärfasern mittels elektrochemischer Behandlung durchgeführt werden. Im Allgemeinen werden die Kohlenstoffprimärfasern anschließend mit einem Schlichtmittel, wie einem Epoxidharz, versehen und zu sogenannten Rovings zusammengefasst. Diese Rovings werden in einem letzten Schritt auf konventionelle Textilspindeln aufgewickelt.

In Abhängigkeit der Faserlänge der eingesetzten Kohlenstoffprimärfasern können zur Herstellung von kohlenstofffaserverstärkten Kunststoffen (CFKs) verschiedene Verfahren verwendet werden. CFK-Teile mit langen Kohlenstoffprimärfasern können im Allgemeinen mittels Harzinjektionsverfahren (auch als Resin Transfer Moulding (RTM) bezeichnet) hergestellt werden. In einem ersten Schritt des Harzinjektionsverfahrens werden sogenannte Preforms hergestellt, welche aus einer Lage oder aus mehreren Lagen von verwobenen Kohlenstoffprimärfasern bestehen, um eine gleichbleibende Festigkeit und Steifigkeit in alle Raumrichtungen zu gewährleisten. Diese Preforms werden in einem zweiten Schritt in einer geschlossenen Gussform mit einer verflüssigten Matrix aus Kunststoff und gegebenenfalls Härter versetzt. Nach Aushärtung der Matrix und Entfernung von überschüssigem Randmaterial werden die entsprechenden CFK-Bauteile erhalten.

Die Herstellung von kohlenstofffaserverstärkten Kunststoffen (CFKs) mit kurzen Kohlenstoffprimärfasern, insbesondere mit zerkleinerten Kohlenstoffprimärfasern, erfolgt im Allgemeinen mittels Spritzgießverfahren. Dazu werden die zerkleinerten Kohlenstoffprimärfasern chargenweise mit einer verflüssigten Matrix aus Kunststoff(en) vermischt, extrudiert und anschließend mittels Spritzgießverfahren zu CFK-Bauteilen verarbeitet.

Der Einsatz von kohlenstofffaserverstärken Kunststoffen (CFKs) führt jedoch im Vergleich zu dem Einsatz von gleichartigen Bauteilen aus Leichtmetallen, wie Aluminium, Magnesium und Titan, zu erheblich höheren Kosten in Bezug auf das endfertige Erzeugnis. Dies hängt insbesondere mit der aufwendigen und kostenintensiven Herstellung von Kohlenstoffprimärfasern aus kohlenstoffhaltigen Ausgangsmaterialien, insbesondere Polyacrylnitril (PAN), zusammen. Zudem steigt der weltweite Verbrauch an Kohlenstoffprimärfasern zur Herstellung von CFK-Bauteilen stark an, so dass aufgrund der hohen weltweiten Nachfrage an Kohlenstoffprimärfasern keine signifikante Reduzierung der Kosten bei dem Einsatz von kohlenstofffaserverstärkten Kunststoffen zu erwarten ist.

Trotz des hohen Bedarfs an Kohlenstoffprimärfasern werden große Mengen an unverarbeiteten, aber bereits mit einem Kunststoff vorimprägnierten Kohlenstoffprimärfasern (Prepregs oder auch Preimpregnated Fibers genannt), bei welchen der Kunststoff ausgehärtet ist oder welche das Lagerdatum überschritten haben, als CFK-haltiger Abfall entsorgt.

Auch fallen bei der Herstellung von Flugzeugteilen und Teilen für Windkrafträder sowie aufgrund von zu entsorgenden Modellformen, Produktionsabfällen, Prototypen, Fehlchargen und sogenannten "End-of-life"-Komponenten große Mengen an CFK-haltigen Kunststoffabfällen an, welche entsorgt werden müssen.

Die Entsorgung von CFK-haltigen Kunststoffabfällen auf Mülldeponien ist jedoch aufgrund der darin enthaltenen wertvollen Kohlenstofffasern unwirtschaftlich. Weiterhin wird im Allgemeinen erwartet, dass die CFK-haltigen Kunststoffabfälle aufgrund ihrer chemischen Inertheit über einen langen Zeitraum hinweg unverändert bleiben und auf Mülldeponien nicht abgebaut werden können. Darüber hinaus ist eine unbegrenzte Entsorgung von CFK-haltigen Abfällen aufgrund von gesetzlichen Vorschriften in vielen europäischen Ländern nicht ohne Weiteres möglich oder sogar untersagt.

Somit besteht ein großer Bedarf an kostengünstigen und effizienten Pyrolyseanlagen und Verfahren zur Rückgewinnung bzw. Rezyklierung von Kohlenstofffasern aus CFK-haltigen Abfällen, insbesondere vor dem Hintergrund des weltweit bestehenden Bedarfs an Kohlenstofffasern für die Herstellung von CFK-Bauteilen.

Im Stand der Technik werden Kohlenstofffasern aus CFK-haltigem Material (CFK-Material) mittels Pyrolyse zurückgewonnen bzw. rezykliert. Unter Pyrolyse versteht man insbesondere eine thermochemische Spaltung organischer Verbindungen, bei welcher durch hohe Temperaturen, beispielsweise im Bereich von 300 bis 1.000 °C, große organische Moleküle in kleinere organische Moleküle gespalten werden. Im Allgemeinen wird bei der Pyrolyse kein Sauerstoff zugeführt. Somit ist bislang die Verwendung von abgedichteten und komplexen Pyrolyseanlagen sowie aufwendigen Verfahrensführungen erforderlich, um eine inerte Atmosphäre oder die Verwendung eines Vakuums während der Entfernung der Kunststoffmatrix zu gewährleisten. Allerdings werden Pyrolyseverfahren gelegentlich auch in sauerstoffhaltiger Atmosphäre betrieben, insbesondere unter kontrollierten Bedingungen.

Eine derartige Pyrolyseanlage wird in der Druckschrift EP 0 636 428 A1 beschrieben. Dort wird ein Schutzgasofen zur Durchführung der Pyrolyse eingesetzt, in welchem CFK-haltiges Material unter einer Schutzgasatmosphäre pyrolysiert wird. Jedoch wird die Pyrolyse über einen langen Zeitraum durchgeführt, weshalb die Rezyklierung somit unwirtschaftlich ist und sich nicht für den industriellen Maßstab eignet. Weiterhin ist eine aufwendige Nachbehandlung der rezyklierten Materialien mit weiteren Pyrolyseschritten vorgesehen, um kohlenstoffhaltige Formkörper zu erhalten.

Weiterhin ist bei den bekannten Pyrolyseanlagen mit Bandöfen und den darin durchgeführten Verfahren zur Rückgewinnung von Kohlenstofffasern aus CFK-Material keine Umwälzung des CFK-Materials möglich. Es erfolgt somit keine Vermischung des CFK-Materials und demzufolge auch keine gleichmäßige Beheizung aller Bereiche des auf dem Transportband befindlichen CFK-Materials. Das Ergebnis sind erhebliche Pyrolyse- und Harzrückstände auf der Oberfläche der rezyklierten Kohlenstofffasern, welche sich negativ auf die Einarbeitung in eine Kunststoffmatrix auswirken können.

Eine derartige Pyrolyseanlage ist beispielsweise in der Druckschrift DE 10 2008 002 846 B4 sowie in deren Patentfamilienäquivalent EP 2 282 879 A1 beschrieben. Die Pyrolyse der Kunststoffmatrix wird in einer Pyrolyseanlage, welche einen Bandofen umfasst, durchgeführt, wobei die CFK-haltigen Abfälle zunächst vorsortiert und anschließend auf geringe Größen zerkleinert werden müssen. Zudem ist eine Nachbehandlung der rezyklierten Kohlenstofffasern erforderlich, um ein Verknäulen der rezyklierten Kohlenstofffasern zu vermeiden.

Darüber hinaus wird in der Druckschrift WO 2010/075952 A1 eine Pyrolyseanlage beschrieben, welche eine Prozesskammer in Form eines Bandofens umfasst. Die Prozesskammer weist neben Heizquellen in Form von Heißlufteinlässen und elektrischen Widerstandheizungen auch Mikrowellen-Strahlungsquellen auf, weshalb folglich eine aufwendige Vorrichtung zur Durchführung der Rezyklierung erforderlich ist.

Schließlich beschreibt die Druckschrift EP 2 152 487 B1 eine Pyrolyseanlage mit einem Bandofen, wobei der Anteil an Sauerstoff im Bandofen mittels Steuerungseinrichtungen gezielt gesteuert wird, so dass im Wesentlichen eine Pyrolyse und kein Verbrennen oder Vergasen der Kunststoffmatrix erfolgt.

Weiterhin führen die vorgenannten Pyrolyseanlagen und Verfahren neben der großen Menge an Pyrolyserückständen auf der Oberfläche der rezyklierten Kohlenstofffasern auch zu hohen Kosten für die Rückgewinnung (Rezyklierung) von Kohlenstofffasern aus CFK-haltigen Abfällen aufgrund von deren Komplexität. Des Weiteren werden die Oberflächen CFK-haltiger Abfälle in den vorgenannten Pyrolyseanlagen und Verfahren aufgrund der nicht optimalen Durchmischung nicht gleichmäßig behandelt. Darüber hinaus weisen die rezyklierten Kohlenstofffasern häufig Qualitätsschwankungen auf.

Zudem müssen die CFK-haltigen Abfälle vor der Rückgewinnung (Rezyklierung) aufwendig vorbehandelt werden, insbesondere durch mechanische und/oder chemische Verfahren.

Aus diesem Grund ist bislang der Einsatz von rezyklierten Kohlenstofffasern in CFK-Bauteilen aufgrund der zuvor beschriebenen Nachteile nur begrenzt möglich.

Auch sind im Stand der Technik Verfahren zur Rezyklierung von Kohlenstofffasern aus CFK-haltigen Abfällen im Labormaßstab bekannt. Jedoch sind auch diese Verfahren oftmals komplex und ungeeignet für die Rezyklierung von Kohlenstofffasern im industriellen Maßstab.

Das Dokument JP 2008-032300 A betrifft einen indirekt beheizten Drehrohrofen zur Verbrennung von organischem Abfall.

Das Dokument JP 2001-200266 A betrifft die Karbonisierung von festen Abfallstoffen.

Das Dokument EP 2 152 487 B1 betrifft eine Vorrichtung und ein Verfahren zur Rezyklierung von Kohlenstofffasern aus CFK-Materialien.

Das Dokument WO 03/089212 A1 betrifft gleichermaßen ein Verfahren und eine Vorrichtung zur Rezyklierung von Kohlenstoff- oder Glasfasern aus entsprechenden Kompositmaterialien, insbesondere ein Verfahren zur Rezyklierung von Kohlenstoff- oder Glasfasern aus faserverstärkten Kompositmaterialien unter thermischer Behandlung in einem zweistufigen Verfahren, wobei in einem ersten Verfahrensschritt das faserverstärkte Kompositmaterial einer Pyrolyse unterzogen wird, welcher sich in einem nachfolgenden zweiten Verfahrensschritt eine weitere "*Upgrading*"-Behandlung anschließt.

Der Fachartikel gemäß PIMENTA S ET AL: "Recycling carbon fibre reinforced polymers for structural applications: Technology review and market outlook", WASTE MANAGEMENT, ELSEVIER, NEW YORK, NY, US, Bd. 31, Nr. 2, 1. Februar 2011, Seiten 378 bis 392, XP027542673, ISSN: 0956-053X, gibt einen Überblick über die im Jahr 2010 existierenden Rezyklierungsverfahren von Kohlenstofffasern aus CFRPs.

Der Fachartikel gemäß HEIL J P ET AL: "Mechanical and Wetting Behavior of Recycled Carbon Fibers Recovered from Pyrolysis Processes", International SAMPE Technical Conference 2012, beschreibt die mechanischen und Benetzungseigenschaften von pyrolytisch hergestellten rezyklierten Kohlenstofffasern.

Schließlich betrifft der Fachartikel gemäß JIANG G ET AL: "Measurement of Surface Energy of Recycled Carbon Fibers Using a Capillary Intrusion Method", 18th International Conference on Composite Materials, 21 Aug 2011 - 26 Aug 2011, Jeju, South Korea, die Messung der Oberflächenenergie rezyklierter Kohlenstofffasern mittels der sogenannten Kapillarintrusionsmethode.

Der vorliegenden Erfindung liegt daher die Aufgabe zugrunde, eine Pyrolyseanlage sowie ein entsprechendes Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien), bereitzustellen, wobei die zuvor geschilderten, mit dem Stand der Technik verbundenen Nachteile zumindest weitgehend vermieden oder aber wenigstens abgeschwächt werden sollen.

Insbesondere ist eine Aufgabe der vorliegenden Erfindung die Bereitstellung einer Pyrolyseanlage und eines entsprechenden Verfahrens zur Rückgewinnung (Rezyklierung) von Kohlenstofffasern aus kohlenstofffaserhaltigen Kunststoffen, wobei die Pyrolyseanlage bzw. das Verfahren eine gleichmäßige Erwärmung des CFK-haltigen Materials während der Zersetzung der Kunststoffmatrix gewährleisten soll. Zudem soll die Pyrolyseanlage bzw. das Verfahren eine kostengünstige und im industriellen Maßstab durchführbare Rückgewinnung (Rezyklierung) von Kohlenstofffasern ermöglichen. Des Weiteren sollen durch den Einsatz der Pyrolyseanlage bzw. des Verfahrens rezyklierte Kohlenstofffasern erhalten werden, welche zumindest im Wesentlichen frei sind von Pyrolyse- bzw. Verkokungsrückständen und eine gute Einarbeitbarkeit in Kunststoffe aufweisen.

Die Anmelderin hat nun in überraschender Weise gefunden, dass die zuvor geschilderte Problemstellung in effizienter Weise gelöst werden kann, wenn eine Pyrolyseanlage zur Rückgewinnung (Rezyklierung) von Kohlenstofffasern aus kohlenstofffaserhaltigen Kunststoffen eingesetzt wird, welche unter anderem einen indirekt beheizten Drehrohrofen mit Austrittsöffnungen aufweist. Durch den Einsatz des indirekt beheizten Drehrohrofens mit Austrittsöffnungen wird eine genau spezifizierte Atmosphäre innerhalb des Drehrohrofens ermöglicht, da entstehendes Pyrolysegas durch die Austrittsöffnungen kontrolliert entfernt werden kann und durch diese Entfernung insbesondere der Sauerstoffgehalt innerhalb des indirekt beheizten Drehrohrofens kontrolliert werden kann. Zudem wird durch die gleichmäßige Durchmischung des CFK-Materials infolge des Drohrohrofens eine gleichmäßige Erwärmung und somit eine gleichmäßige Pyrolyse der Kunststoffmatrix gewährleistet. Aufgrund der gleichmäßigen Pyrolyse der Kunststoffmatrix werden rezyklierte Kohlenstofffasern erhalten, welche zumindest im Wesentlichen vollständig vom Matrixmaterial befreit sind und im Wesentlichen keine Pyrolyserückstände (synonym nachfolgend auch als Pyrolysekoksrückstände bezeichnet) auf der Oberfläche der rezyklierten Kohlenstofffasern aufweisen und somit eine bessere Einarbeitbarkeit in Kunststoffe im Vergleich zu Kohlenstoffprimärfasern und herkömmlich rezyklierten Kohlenstofffasern besitzen.

Zur Lösung des zuvor geschilderten Problems schlägt die vorliegende Erfindung somit eine Pyrolyseanlage zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien), nach Anspruch 1 vor. Weitere, vorteilhafte Eigenschaften der erfindungsgemäßen Pyrolyseanlage sind Gegenstand der diesbezüglichen, auf die Pyrolyseanlage gerichteten Unteransprüche.

Weiterer Gegenstand der vorliegenden Erfindung ist die Verwendung der Pyrolyseanlage gemäß der vorliegenden Erfindung zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien), nach Anspruch 8.

Wiederum weiterer Gegenstand der vorliegenden Erfindung ist ein Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien), nach Anspruch 9.

Weiterhin sind Gegenstand der vorliegenden Erfindung die durch das erfindungsgemäße Verfahren erhältlichen rezyklierten Kohlenstofffasern nach Anspruch 10. Weitere, vorteilhafte Eigenschaften der erfindungsgemäßen rezyklierten Kohlenstofffasern sind Gegenstand der diesbezüglichen, auf die rezyklierten Kohlenstofffasern gerichteten Unteransprüche.

Des Weiteren ist ein wiederum weiterer Gegenstand der vorliegenden Erfindung die erfindungsgemäße Verwendung der rezyklierten Kohlenstofffasern, wie sie in den entsprechenden Verwendungsansprüchen beschrieben bzw. definiert ist.

Zudem sind Gegenstand der vorliegenden Erfindung Kunststoffe, Baustoffe oder zementäre Systeme gemäß Anspruch 14, welche nach dem erfindungsgemäßen Verfahren erhältliche rezyklierte Kohlenstofffasern umfassen bzw. welche unter Verwendung von nach dem erfindungsgemäßen Verfahren erhältlichen rezyklierten Kohlenstofffasern hergestellt sind.

Schließlich sind Gegenstand der vorliegenden Erfindung Formkörper (z.B. Bauteile), Formen und Flächenmaterialien (z.B. Vliesstoffe), insbesondere in Form von Kompositmaterialien oder Compounds, gemäß Anspruch 15, welche nach dem erfindungsgemäßen Verfahren erhältliche rezyklierte Kohlenstofffasern umfassen bzw. welche unter Verwendung von nach dem erfindungsgemäßen Verfahren erhältlichen rezyklierten Kohlenstofffasern hergestellt sind.

Es versteht sich von selbst, dass besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies ausdrücklich beschrieben ist.

Im Übrigen gilt, dass der Fachmann anwendungsbezogen oder einzelfallbedingt von den nachfolgend aufgeführten Zahlen-, Werte- bzw. Bereichsangaben abweichen kann, ohne dass er den Rahmen der vorliegenden Erfindung verlässt.

Gegenstand der vorliegenden Erfindung - gemäß einem **ersten** Aspekt der vorliegenden Erfindung - ist somit eine Pyrolyseanlage zur Rückgewinnung von Kohlenstofffasern aus kohlenstofffaserhaltigen Kunststoffen, insbesondere aus kohlenstofffaserverstärkten Kunststoffen, vorzugsweise aus kohlenstofffaserhaltigen und/oder kohlenstofffaserverstärkten Verbundwerkstoffen,
mit einem langgestreckten, im Betrieb kontinuierlich arbeitenden Pyrolyseofen zur kontinuierlichen Pyrolyse von CFK-Material,
mit einer Eintragstation zum Eintragen von zu verarbeitendem CFK-Material in den Pyrolyseofen an dessen einem Ende,
mit einer Austragstation zum Austragen von rückgewonnenem Kohlenstoff-Fasermaterial aus dem Pyrolyseofen an dessen anderem Ende,
mit einer Gasabzugsvorrichtung für im Pyrolyseofen erzeugtes Pyrolysegas und mit einer Steuerungseinrichtung, insbesondere zur Regelung zumindest einzelner Bestandteile des Gases im Pyrolyseofen, insbesondere zur Regelung des Sauerstoffanteils des Gases im Pyrolyseofen,
wobei der Pyrolyseofen ein indirekt beheizter Drehrohrofen ist, der zumindest folgende Bestandteile aufweist:
ein langgestrecktes, die Aufnahme für das zu verarbeitende CFK-Material bildendes Drehrohr, das mit der Eintragstation und der Austragstation in Verbindung steht, wobei das Drehrohr zumindest auf einem Teil seiner Länge auf seinem Mantel mit Austrittsöffnungen zum Abführen von bei der Pyrolyse entstehendem Pyrolysegas versehen ist, und
ein das Drehrohr zumindest zum Teil umgebendes, nach außen isoliertes Gehäuse mit Durchtritten für die Eintragstation und gegebenenfalls auch für die Austragstation und mit Abfuhrleitungen insbesondere für das Pyrolysegas, wobei im Gehäuse entlang der Länge des Drehrohrs mehrere Abschnitte mit unterschiedlich oder verschieden voneinander regelbaren Gastemperaturen vorgesehen sind;
wobei die Austrittsöffnungen im Drehrohr zumindest in dem Abschnitt mit der höchsten Gastemperatur vorgesehen sind;
wobei der Pyrolyseofen verschiedene Abschnitte aufweist, nämlich mindestens eine Aufwärmzone, eine erste Pyrolysezone, eine zweite Pyrolysezone und eine Abkühlzone, und die Zusammensetzung des Gases und die Temperatur im Pyrolyseofen in den verschiedenen Abschnitten des Drehrohrs unterschiedlich regelbar sind, nämlich mit einem definierten Sauerstoffanteil und mit einer definierten Temperatur in der ersten Pyrolysezone und mit einem definierten Sauerstoffanteil und mit einer definierten Temperatur in der zweiten Pyrolysezone; und
wobei die Pyrolyseanlage weiterhin eine in Prozessrichtung vor oder stromaufwärts zu der Eintragstation angeordnete Zerkleinerungsvorrichtung zur Zerkleinerung von zu verarbeitendem CFK-Material aufweist.

Ein Drehrohrofen im Sinne der vorliegenden Erfindung ist insbesondere ein Ofen für kontinuierliche, Wärme zuführende Prozesse in der Verfahrenstechnik. Im Gegensatz zu einem direkt beheizten Drehrohrofen, bei welchem die Wärmezufuhr innerhalb des Ofens erfolgt, wird bei einem indirekt beheizten Drehrohrofen die Wärme von außerhalb des Reaktionsraums über die Drehrohrwand übertragen. Im Allgemeinen weist der indirekt beheizte Drehrohrofen eine Eintragstation, häufig in Form einer Eintragschnecke oder eines Eintragbandes, das Drehrohr, das den Kern des Drehrohrofens bildet, eine Austragstation am Ende des Drehrohrofens zum Austragen des bearbeiteten Materials, eine Lagerung des Drehrohrs sowie einen Antrieb für das Drehrohr oder mehrere Antriebe über die Länge des Drehrohrs verteilt, und schließlich ein das Drehrohr umgebendes, nach außen isoliertes Gehäuse, in dem die benötigte Wärmemenge für das Innere des Drehrohrs auf irgendeine Weise eingebracht oder erzeugt wird, auf.

Der erfindungsgemäß eingesetzte indirekt beheizte Drehrohrofen hat zumindest die folgenden Bestandteile:

Ein langgestrecktes, die Aufnahme für das zu verarbeitende CFK-Material bildendes Drehrohr, das mit der Eintragstation und der Austragstation in Verbindung steht, wobei das Drehrohr zumindest auf einem Teil seiner Länge auf seinem Mantel mit Austrittsöffnungen zum Abführen von bei der Pyrolyse entstehendem Pyrolysegas versehen ist, und ein das Drehrohr umgebendes, nach außen isoliertes Gehäuse mit Durchtritten für die Eintragstation und die Austragstation und mit Abfuhrleitungen insbesondere für das Pyrolysegas.

Erfindungsgemäß ist das Drehrohr des als Pyrolyseofen eingesetzten Drehrohrofens in diesem Fall besonders ausgestaltet: Es hat nämlich zumindest auf einem Teil seiner Länge auf seinem Mantel Austrittsöffnungen zum Abführen von bei der Pyrolyse entstehendem Pyrolysegas. Damit ist der Pyrolyseofen in Form eines Drehrohrofens in besonderer Weise auf die Besonderheiten der Pyrolyse abgestimmt. Das Pyrolysegas sollte am Entstehungsort möglichst umgehend aus dem Drehrohr entweichen können, um den Prozess der Pyrolyse möglichst wenig zu behindern.

Bei einem herkömmlichen Bandofen des Standes der Technik ist das CFK-Material im Pyrolyseofen zwar nach oben frei und das entstehende Pyrolysegas kann an jeder Stelle nach oben entweichen, jedoch findet keine ausreichende Umwälzung und Durchmischung des zu behandelnden CFK-Materials statt. Bei Einsatz eines herkömmlichen Drehrohrs in einem Drehrohrofen des Standes der Technik kann dagegen das entstehende Pyrolysegas nicht nach oben entweichen, so dass das Pyrolysegas das CFK-Material umgeben würde und die weitere Pyrolyse behindern würde. Ein herkömmlicher Drehrohrofen des Standes der Technik hätte somit zwar einen gewissen Effekt hinsichtlich der Vermischung und Umwälzung des CFK-Materials, welcher jedoch durch erhebliche Nachteile in Bezug auf die nicht mögliche Abführung des bei der Pyrolyse entstehenden Pyrolysegases zunichte gemacht würde. Erst die erfindungsgemäße Verwendung bzw. das erfindungsgemäße Vorsehen der Austrittsöffnungen im Mantel zumindest auf einem Teil seiner Länge, nämlich zumindest dort, wo besonders viel Pyrolysegas anfällt, führt zu einer angepassten Lösung für eine Pyrolyseanlage zur Rückgewinnung (Rezyklierung) von kohlenstofffaserhaltigen Kunststoffen.

Durch den Einsatz der erfindungsgemäßen Pyrolyseanlage, welche einen indirekt beheizten Drehrohrofen mit Austrittsöffnungen umfasst, wird einerseits eine gleichmäßige Mischung, Umwälzung und Durchwärmung des CFK-Materials im Pyrolyseofen ermöglicht; andererseits wird gleichzeitig eine effiziente Abführung der Pyrolysegase durch die Austrittsöffnungen im Drehrohrmantel ermöglicht. Dies resultiert in optimalen Pyrolysebedingungen und somit in einer selektiven Entfernung nur der Kunststoffmatrix ohne Zerstörung der zurückzugewinnenden Kohlenstofffasern an jedem beliebigen Ort des Drehrohrofens, so dass zumindest im Wesentlichen keine Pyrolyserückstände an der Oberfläche der rezyklierten Kohlenstofffasern nach der vollständigen Entfernung der Kunststoffmatrix zurückbleiben.

Weiterhin wird durch die Austrittsöffnungen des indirekt beheizten Drehrohrofens der erfindungsgemäßen Pyrolyseanlage eine Steuerung der Atmosphäre, insbesondere des Sauerstoffgehalts, innerhalb des Drehrohrofens ermöglicht. In Kombination mit der indirekten Beheizung des Drehrohrofens, durch welchen Temperaturschwankungen vermieden werden, ist eine selektive und zumindest im Wesentlichen vollständige Entfernung der Kunststoffmatrix möglich, ohne dass die rezyklierten Kohlenstofffasern zerstört, insbesondere übermäßig stark beschädigt und/oder übermäßig stark oxidiert, werden, da dies in signifikant reduzierten mechanischen Eigenschaften der rezyklierten Kohlenstofffasern resultieren würde.

Die Kombination aus gleichmäßiger Erwärmung und Mischung des CFK-haltigen Materials mit der gezielten Steuerung des Sauerstoffgehalts und/oder der Temperatur, welche durch Verwendung der erfindungsgemäßen Pyrolyseanlage mit dem indirekt beheizten Drehrohrofen mit Austrittsöffnungen ermöglicht wird, führt zu rezyklierten Kohlenstofffasern gleichbleibend hoher Qualität, welche zum einen zumindest im Wesentlichen keine Pyrolyse- bzw. Verkokungsrückstände an deren Oberfläche aufweisen. Zum anderen resultiert die obige Kombination in einer teilweisen Oxidation nur der Oberfläche der rezyklierten Kohlenstofffasern, d. h. in einer rauheren und bindungsaffinen, insbesondere hydrophilen, Oberfläche und in einer Erhöhung sauerstoffhaltiger Gruppen an der Oberfläche der resultierenden rezyklierten Kohlenstofffasern, wie Hydroxy-, Aldehyd-, Carboxylgruppen etc. Die teilweise Oxidation der Oberfläche der aus der Kombination von erfindungsgemäßer Pyrolyseanlage und erfindungsgemäßer Verfahrensführung resultierenden rezyklierten Kohlenstofffasern führt aufgrund der rauheren und funktionalisierten, insbesondere hydrophileren Oberfläche der rezyklierten Kohlenstofffasern zu einer erhöhten Benetzbarkeit und somit auch zu einer verbesserten Einarbeitbarkeit in Kunststoffe im Vergleich zu Kohlenstoffprimärfasern oder herkömmlich rezyklierten Kohlenstofffasern.

Im Ergebnis wird mit der erfindungsgemäßen Pyrolyseanlage mit einem indirekt beheizten Drehrohrofen mit Austrittsöffnungen im Drehrohrmantel in Kombination mit der gezielten Steuerung des Sauerstoffgehalts und/oder der Temperatur erreicht, dass die rezyklierten Kohlenstofffasern zumindest im Wesentlichen keine Pyrolyserückstände mehr aufweisen, jedoch die mechanischen und elektrischen Eigenschaften der rezyklierten Kohlenstofffasern durch die Rezyklierung nicht bzw. nicht signifikant beeinträchtigt werden. Weiterhin weisen die rezyklierten Kohlenstofffasern aufgrund der teilweisen Oxidation der Oberfläche der rezyklierten Kohlenstofffasern eine verbesserte Benetzbarkeit und folglich eine verbesserte Einarbeitbarkeit in Kunststoffe auf.

Weitere Vorteile, Eigenschaften, Aspekte und Merkmale der vorliegenden Erfindung ergeben sich aus der folgenden Beschreibung von in der Zeichnung dargestellten, bevorzugten Ausführungsbeispielen. Die oben beschriebenen und/oder in den Ansprüchen und/oder in den nachfolgenden Figurenbeschreibungen offenbarten Merkmale können bedarfsweise auch miteinander kombiniert werden, auch wenn dies nicht im Einzelnen ausdrücklich beschrieben ist.

Es zeigt:
- Fig. 1: schematisch einen Längsschnitt des Drehrohrs, nicht geschnitten, gemäß einer bevorzugten Ausführungsform der erfindungsgemäßen Pyrolyseanlage;
- Fig. 2: ausschnittweise eine vergrößerte Darstellung der Pyrolyseanlage aus Fig. 1 im Bereich ihres rechten Endes, also im Bereich der Eintragstation;
- Fig. 3: schematisch eine Darstellung eines Querschnitts durch die Pyrolyseanlage aus Fig. 1 im Anfangsbereich des Pyrolyseofens;
- Fig. 3A: schematisch eine Darstellung eines Misch- und Förderelements gemäß einer bevorzugten Ausführungsform der vorliegenden Erfindung;
- Fig. 3B: schematisch eine ausschnittsweise Vergrößerung des in Fig. 3A dargestellten Misch- und Förderelements;
- Fig. 4: schematisch eine Schleusenanordnung für die Eintragstation gemäß einer bevorzugten Ausführungsform der erfindungsgemäßen Pyrolyseanlage;
- Fig. 5: schematisch einen Ablauf des erfindungsgemäßen Verfahrens zur Rückgewinnung (Rezyklierung) von Kohlenstofffasern aus kohlenstofffaserhaltigen Kunststoffen gemäß einer bevorzugten Ausführungsform des erfindungsgemäßen Verfahrens;
- Fig. 6A: schematisch eine Darstellung einer Kohlenstoffprimärfaser des Standes der Technik mit einer glatten Oberfläche;
- Fig. 6B: schematisch eine Darstellung einer mit einem nichterfindungsgemäßen Verfahren erhaltenen rezyklierten Kohlenstofffaser des Standes der Technik, welche Pyrolyse- bzw. Verkokungsrückstände sowie Rillen aufweist; und
- Fig. 6C: schematisch eine Darstellung einer mit dem erfindungsgemäßen Verfahren erhaltenen rezyklierten Kohlenstofffaser, welche Rillen aufweist.

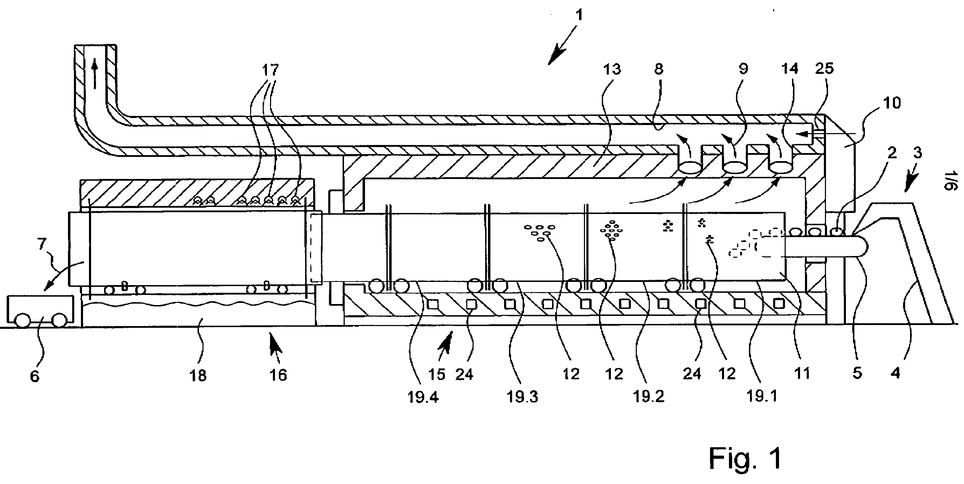

Die in Fig. 1 bis 3 dargestellte Pyrolyseanlage dient im dargestellten Ausführungsbeispiel zur Rückgewinnung von Kohlenstofffasern aus mit Kohlenstofffasern verstärkten Kunststoffen (CFK). Für den gesamten Hintergrund dieser Rückgewinnungstechnik darf auf die einleitend genannten Quellen zum Stand der Technik verwiesen werden.

Die Fig. 1 bis 3 zeigen eine erfindungsgemäße Pyrolyseanlage zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien), mit einem langgestreckten, im Betrieb kontinuierlich arbeitenden Pyrolyseofen 1 zur kontinuierlichen Pyrolyse von CFK-Material 2, mit einer Eintragstation 3 zum Eintragen von zu verarbeitendem CFK-Material 2 in den Pyrolyseofen 1 an dessen einem Ende, mit einer Austragstation 6 zum Austragen von rückgewonnenem Kohlenstoff-Fasermaterial 7 aus dem Pyrolyseofen 1 an dessen anderem Ende, mit einer Gasabzugsvorrichtung 8 für im Pyrolyseofen 1 erzeugtes Pyrolysegas 9, welches dann in eine Abgasbehandlungseinrichtung, insbesondere Nachverbrennung, geleitet werden kann, und mit einer Steuerungseinrichtung 10, insbesondere zur Regelung zumindest einzelner Bestandteile des Gases im Pyrolyseofen 1, insbesondere zur Regelung des Sauerstoffanteils (Sauerstoffgehalts) des Gases im Pyrolyseofen 1. Der Pyrolyseofen 1 ist ein indirekt beheizter Drehrohrofen, der zumindest folgende Bestandteile aufweist: ein langgestrecktes, die Aufnahme für das zu verarbeitende CFK-Material 2 bildendes Drehrohr 11, das mit der Eintragstation 3 und der Austragstation 6 in Verbindung steht, wobei das Drehrohr 11 zumindest auf einem Teil seiner Länge auf seinem Mantel mit Austrittsöffnungen 12 zum Abführen von bei der Pyrolyse entstehendem Pyrolysegas 9 versehen ist, und ein das Drehrohr 11 zumindest zum Teil umgebendes, nach außen isoliertes Gehäuse 13 mit Durchtritten für die Eintragstation 3 und gegebenenfalls auch für die Austragstation 6 und mit Abfuhrleitungen 14 insbesondere für das Pyrolysegas 9.

Die in Fig. 1 in einem Längsschnitt schematisch dargestellte Pyrolyseanlage hat als Kern einen langgestreckten, kontinuierlich arbeitenden Pyrolyseofen 1 zur kontinuierlichen Pyrolyse von CFK-Material 2. Rechts in Fig. 1 sieht man eine Eintragstation 3 zum Eintragen des zu verarbeitenden CFK-Materials 2. In Fig. 1 wird dieses CFK-Material 2 mittels einer Schütte 4 auf ein umlaufendes Transportband 5 geschüttet, welches das CFK-Material 2 dann in den Pyrolyseofen 1 an dessen einem Ende hineintransportiert.

Links in Fig. 1 befindet sich eine Austragstation 6 zum Austragen von rückgewonnenem Kohlenstoff-Fasermaterial bzw. rezyklierten Kohlenstofffasern 7 aus dem Pyrolyseofen 1. Dort ist die Austragstation 6 als einfache verfahrbare Auffangwanne dargestellt. Die Pyrolyseanlage hat eine Gasabzugsvorrichtung 8 für Pyrolysegas 9, das im Pyrolyseofen 1 erzeugt wird. In Fig. 1 ist das strömende Pyrolysegas 9 durch bogenförmige Pfeile angedeutet.

Schließlich hat die Pyrolyseanlage eine Steuerungseinrichtung 10 zur Regelung der Gasatmosphäre im Pyrolyseofen 1, insbesondere zur Regelung einzelner Bestandteile des Gases im Pyrolyseofen 1, vorzugsweise zur Regelung des Sauerstoffanteils bzw. Sauerstoffgehalts.

Im Rahmen der vorliegenden Erfindung ist es bevorzugt, wenn der Sauerstoffanteil des Gases im Pyrolyseofen 1 während der Pyrolyse der Kunststoffmatrix des CFK-Materials unterstöchiometrisch in Bezug auf die zur vollständigen Zersetzung der Kunststoffmatrix benötigte Menge eingestellt wird. Weiterhin ist es bevorzugt, wenn in einer weiteren Zone des Pyrolyseofens 1 oder nach erfolgter Pyrolyse der Kunststoffmatrix der Sauerstoffgehalt überstöchiometrisch in Bezug auf die zur Zersetzung der Kunststoffmatrix benötigte Menge eingestellt wird, um etwaige Pyrolyserückstände auf der Oberfläche der rezyklierten Kohlenstofffasern zumindest im Wesentlichen vollständig zu entfernen und die Oberfläche zumindest teilweise zu oxidieren.

Zum Verständnis der Lehre der Erfindung sollen nun Fig. 1, 2 und 3 gemeinsam betrachtet werden, weil sie unterschiedliche Aspekte der Lehre der Erfindung gut erkennen lassen.

Gemäß der Erfindung ist der Pyrolyseofen 1 ein indirekt beheizter Drehrohrofen. Dieser indirekt beheizte Drehrohrofen weist zunächst ein langgestrecktes, die Aufnahme für das zu verarbeitende CFK-Material 2 bildendes Drehrohr 11 auf. Dieses steht mit der Eintragstation 3 einerseits und der Austragstation 6 andererseits in Verbindung. Das Drehrohr ist, wie an sich bei einem Drehrohrofen üblich (siehe beispielsweise DE 10 2004 036 109 A1), drehbar gelagert, z. B. entweder über Rollen oder über entsprechende Kugellager. Außerdem gibt es einen Drehantrieb für das Drehrohr 11, der in Fig. 1 nicht dargestellt ist. Man sieht, dass rechts die Eintragstation 3 mit ihrem Transportband 5 in das Drehrohr 11 ein wenig hineinragt und dass links der Auffangbehälter der Austragstation 6 unmittelbar unterhalb des Austritts des Drehrohrs 11 steht.

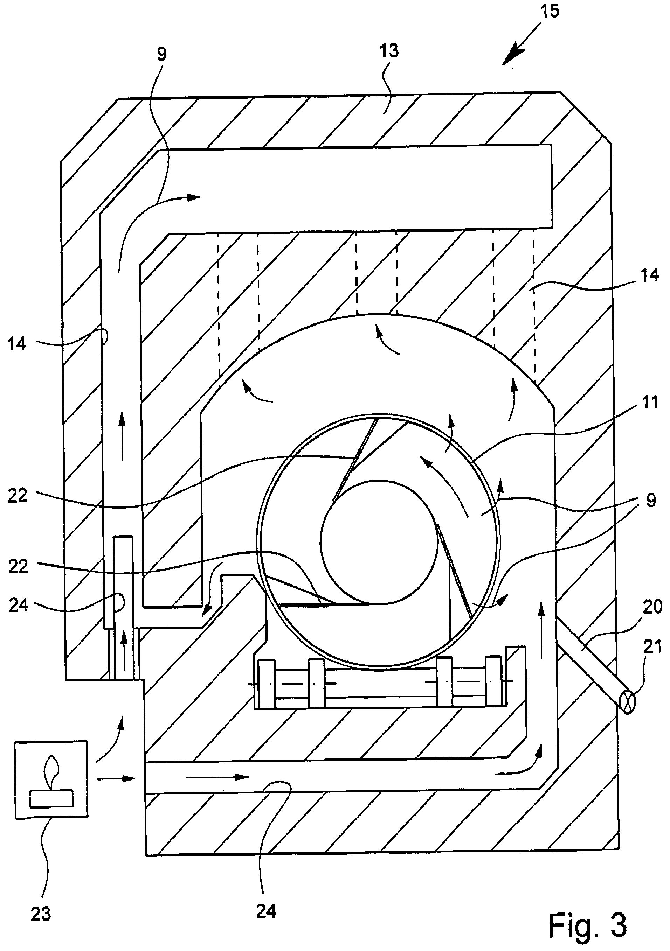

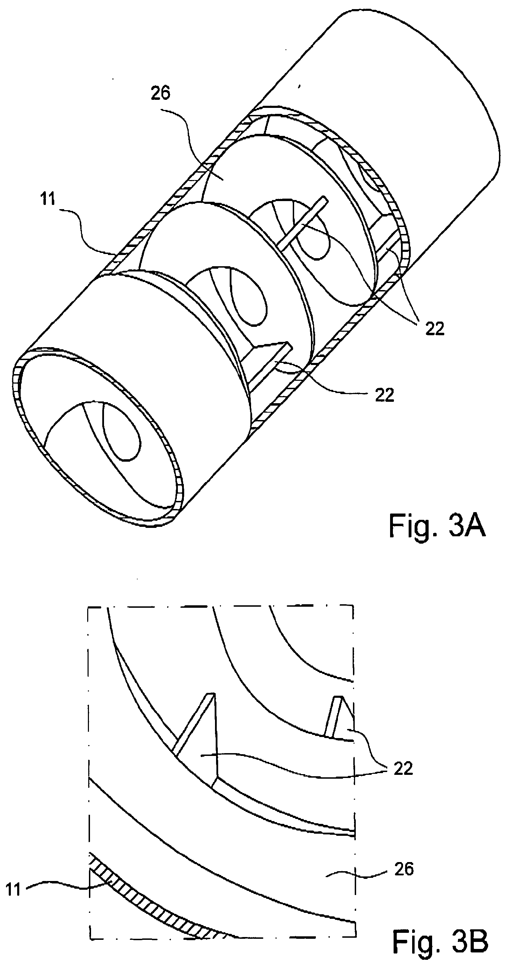

Erfindungswesentlich ist, dass das Drehrohr 11 zumindest auf einem Teil seiner Länge auf seinem Mantel mit Austrittsöffnungen 12 zum Abführen von bei der Pyrolyse entstehendem Pyrolysegas 9 versehen ist. Man sieht diese Austrittsöffnungen 12 in Fig. 1 an verschiedenen Stellen. In Fig. 3 sind die Austrittsöffnungen 12 im Drehrohr 11 durch die dort dargestellten Strömungspfeile des Pyrolysegases 9 angedeutet.

Wesentlich ist, dass das Pyrolysegas 9 aus dem Drehrohr 11 nahe seiner Entstehungsstelle kontinuierlich abgeführt werden kann. Damit kann, wie eingangs erläutert, der Sauerstoffgehalt innerhalb des Drehrohrs 11 gezielt gesteuert werden.

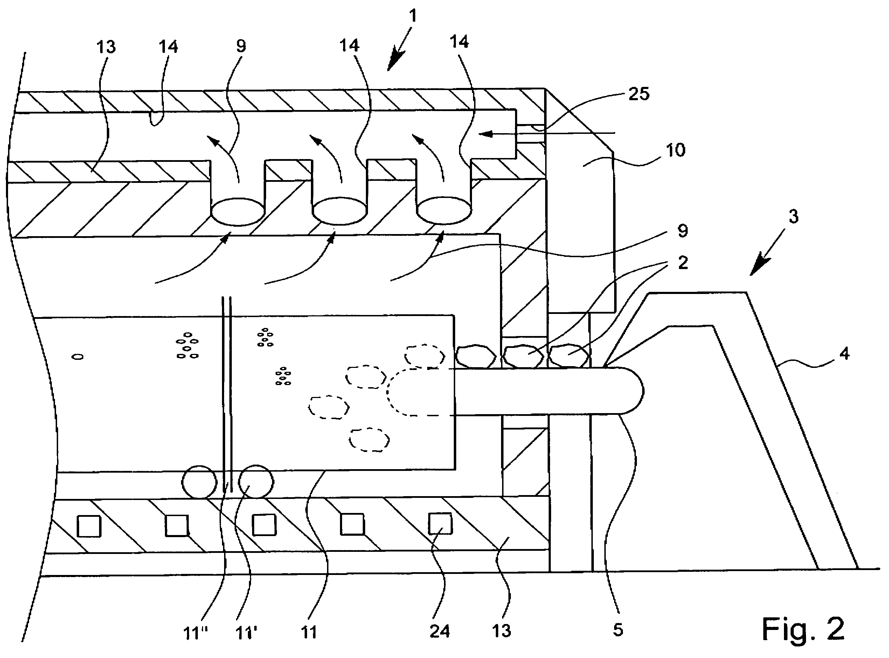

Fig. 2 zeigt das rechte, der Eintragstation 3 zugewandte Ende des Pyrolyseofens 1 in vergrößerter Darstellung. Ergänzend zu Fig. 1 sieht man unten in Fig. 2 Rollenlager 11' des Drehrohrs 11. Diese Rollenlager 11' stützen das Drehrohr so ab, dass in Längsrichtung temperaturbedingte Ausdehnungen ermöglicht werden. Zwischen diesen Rollenlagern 11' befindet sich jeweils ein Zahnkranz 11", an dem ein entsprechender Drehantrieb angreift.

Weiterer erfindungswesentlicher Bestandteil der Pyrolyseanlage ist im Pyrolyseofen 1 ein das Drehrohr 11 umgebendes, nach außen isoliertes Gehäuse 13 mit einem Durchtritt für die Eintragstation 3. In Fig. 1 sieht man rechts den Durchtritt für die Eintragstation 3, stark isoliert gegenüber dem Drehrohr 11. Die Isolierung trägt der Tatsache Rechnung, dass es sich hier um das "heiße" Ende des Drehrohrs 11 handelt. Links in Fig. 1 hingegen findet sich die Austragstation 6 bereits außerhalb des Gehäuses 13. Auf diese Besonderheit wird nachfolgend noch eingegangen.

Im Gehäuse 13 befinden sich schließlich auch Abfuhrleitungen 14, in denen insbesondere das Pyrolysegas 9 abgeführt wird.

Das in Fig. 1 dargestellte bevorzugte Ausführungsbeispiel einer erfindungsgemäßen Pyrolyseanlage zeichnet sich nach weiterer Besonderheit dadurch aus, dass das Drehrohr 11 eine erste, von der Eintragstation 3 ausgehende Heizsektion 15 und eine zweite, daran anschließende und zur Austragstation 6 führende Kühlsektion 16 aufweist. In Fig. 1 sieht man die Heizsektion 15 des Drehrohrs 11 rechts dort, wo auch das Gehäuse 13 vorgesehen ist. Dieses umgibt das Drehrohr 11 nur in der Heizsektion 15. Nur dort bedarf es der Isolierung nach außen, da nur dort der hohe Wärmeeintrag erforderlich ist. Dort finden sich auch die Abfuhrleitungen 14 für das Pyrolysegas 9. Etwas links von der Mitte der Darstellung der Pyrolyseanlage in Fig. 1 sieht man den Durchtritt des Drehrohrs 11 in die Kühlsektion 16. Der Durchtritt im Gehäuse 13 liegt also nicht an der Austragstation 6, sondern mitten im Pyrolyseofen 1 zwischen Heizsektion 15 und Kühlsektion 16.

Fig. 2 zeigt das rechte Ende der Heizsektion 15 des Pyrolyseofens 1.

Das dargestellte und bevorzugte Ausführungsbeispiel macht deutlich, dass im dargestellten Ausführungsbeispiel das Drehrohr 11 in der Kühlsektion 16 mit Wasser gekühlt wird, das von oben her über Sprühdüsen 17 verteilt und unter der Kühlsektion 16 des Drehrohrs 11 in einer Auffangwanne 18 aufgefangen wird.

Dadurch ist es möglich, dass an der Austragstation 6 die rezyklierten Kohlenstofffasern 7 mit bereits relativ niedriger Temperatur ausgetragen werden können.

Es empfiehlt sich, dass das Drehrohr 11 jedenfalls in der Kühlsektion 16 keine Austrittsöffnungen aufweist.

Was die Gestaltung des Drehrohrs 11 in der Heizsektion 15 des Pyrolyseofens 1 betrifft, so ist es dort vorgesehen, dass die Austrittsöffnungen 12 über den Umfang des Drehrohrs 11 im Wesentlichen gleichmäßig verteilt angeordnet sind. In Fig. 1 und 2 sind nur einige der auf dem Umfang verteilt angeordneten Austrittsöffnungen 12 angedeutet. Das ist aber so zu verstehen, dass das nur beispielhaft für den kompletten Umfang des Drehrohrs 11 gilt. Eine Verteilung auf dem gesamten Umfang ist schon deshalb sinnvoll, weil sich das Drehrohr 11 kontinuierlich dreht.

In Fig. 1 und 2 ist zu erkennen, dass die Größe der Austrittsöffnungen 12 im dort dargestellten Ausführungsbeispiel nicht überall gleich ist. Im ersten Abschnitt ganz rechts sind die Austrittsöffnungen 12 noch relativ klein. Dort ist das CFK-Material 2 noch nicht so stark aufgeheizt, so dass nur geringe Mengen an Pyrolysegas 9 abgegeben werden. Große Mengen an Pyrolysegas 9 entstehen erst in den folgenden beiden Abschnitten der Heizsektion 15, so dass dort die Austrittsöffnungen 12 im Drehrohr 11 auch wesentlich größer im Durchmesser gestaltet sind. Im dann folgenden Abschnitt nehmen die Austrittsöffnungen in Dichte und Größe wieder ab, weil dort die Pyrolyse weitgehend beendet ist.

Selbstverständlich sollte die Größe der Austrittsöffnungen 12 bzw. die unterschiedlichen Größen der Austrittsöffnungen 12 auf die Größe des CFK-Materials 2 sowie der darin enthaltenen Kohlenstofffasern abgestimmt sein, damit das CFK-Material 2 oder die bereits rezyklierten Kohlenstofffasern nicht aus dem Drehrohr 11 nach außen in das Gehäuse 13 fallen. Dies sollte jedoch nicht in erheblichem Maße der Fall sein, da andernfalls dem Rückgewinnungsaspekt entgegengewirkt würde.

In einer nicht dargestellten Variante der Lehre der Erfindung kann man auch vorsehen, das Drehrohr 11 dadurch auf unterschiedliche CFK-Materialien 2 abzustimmen, dass man die Austrittsöffnungen 12 im Drehrohr 11 verstellbar ausführt.

Fig. 1 und 2 zeigen noch eine weitere Besonderheit der Konstruktion der erfindungsgemäßen Pyrolyseanlage in diesem Ausführungsbeispiel. Man sieht, dass die Abfuhrleitungen 14 für das Pyrolysegas sich im Gehäuse 13 in der Heizsektion 15 und dort wiederum an deren der Eintragstation 3 zugewandten Ende befinden. Mit dieser Anordnung im der Eintragstation 3 zugewandten ersten Drittel des Gehäuses 13 wird erreicht, dass weiter hinten im Gehäuse 13 anfallendes, besonders heißes Pyrolysegas 9 entgegen der Durchlaufrichtung des CFK-Materials 2 in Richtung der Eintragstation 3 strömt und dort zusätzlich zur Aufheizung des CFK-Materials 2 beiträgt. Mit dieser "Rückströmung" erreicht man also eine gleichmäßigere Wärmeverteilung hin zu dem Eintragsende des Pyrolyseofens 1.

Zuvor ist bereits angedeutet worden, dass das Drehrohr 11 im Pyrolyseofen 1 der erfindungsgemäßen Pyrolyseanlage auch in der Beheizung in besonderer Weise ausgestaltet sein sollte. Erfindungsgemäß ist nach bevorzugter Lehre vorgesehen, dass im Gehäuse 13 entlang der Länge des Drehrohrs 11 mehrere Abschnitte 19 mit unterschiedlichen Gastemperaturen vorgesehen sind und dass die Austrittsöffnungen 12 im Drehrohr 11 zumindest in dem Abschnitt mit der höchsten Gastemperatur vorgesehen sind.

Über den unterschiedlichen Anfall von Pyrolysegas 9 in den unterschiedlichen Abschnitten 19 der Heizsektion 15 des Drehrohrs 11 ist oben bereits etwas gesagt worden. In weiterer Ausgestaltung gerade der zuletzt erläuterten Lehre der Erfindung empfiehlt es sich, dass der Pyrolyseofen 1 mehrere Abschnitte 19 aufweist, insbesondere mindestens eine Aufwärmzone 19.1, eine erste Pyrolysezone 19.2, eine zweite Pyrolysezone 19.3 und eine Abkühlzone 19.4.

Weiterhin wird gemäß der vorliegenden Erfindung die Zusammensetzung des Gases im Pyrolyseofen 1 in den verschiedenen Abschnitten 19 des Drehrohrs 11 unterschiedlich geregelt, und zwar insbesondere mit einem geringen Sauerstoffanteil (Sauerstoffgehalt) in einer ersten Pyrolysezone 19.2 und mit einem im Vergleich zur ersten Pyrolysezone 19.2 höheren Sauerstoffanteil (Sauerstoffgehalt) in einer zweiten Pyrolysezone 19.3

Zudem ist es erfindungsgemäß bevorzugt vorgesehen, dass die Zusammensetzung des Gases und/oder die Temperatur im Pyrolyseofen 1 in den verschiedenen Abschnitten 19 des Drehrohrs 11 unterschiedlich geregelt ist, nämlich mit einem definierten Sauerstoffanteil (Sauerstoffgehalt) G(B1) und mit einer definierten Temperatur T(B1) in einer ersten Pyrolysezone 19.2 und mit einem definierten Sauerstoffanteil (Sauerstoffgehalt) G(B2) und mit einer definierten Temperatur T(B2) in einer zweiten Pyrolysezone 19.3. Insbesondere wird dabei der Sauerstoffgehalt G(B2) in der zweiten Pyrolysezone B2 gegenüber dem Sauerstoffgehalt G(B1) in der ersten Pyrolysezone B1 erhöht und/oder die Temperatur T(B2) in der zweiten Pyrolysezone B2 gegenüber der Temperatur T(B1) in der ersten Pyrolysezone B1 erhöht.

Die Temperaturangaben, insbesondere die Angabe der Temperaturen T(B1) und T(B2), und die in diesem Zusammenhang nachfolgend noch aufgeführten konkreten Temperaturwerte bzw. Temperaturwertebereiche beziehen sich insbesondere auf die Temperaturen, welche in dem zu behandelnden bzw. zu rezyklierenden Gegenstand erreicht werden.

Fig. 3 zeigt im Querschnitt nahe der Eintragstation 3 in der Heizsektion 15 des Pyrolyseofens 1 rechts einen Lufteintritt 20 mit einem Steuerventil 21, welcher der Zufuhr von Luft und damit von Sauerstoff in den ersten Abschnitt 19.1 der Heizsektion 15 dient.

Fig. 1 und 2 lassen nur angedeutet erkennen, dass im dargestellten und bevorzugten Ausführungsbeispiel das Drehrohr 11 von der Eintragstation 3 zur Austragstation 6 hin abfallend geneigt angeordnet ist. Allein durch diese Neigung und die Drehung des Drehrohrs 11 um seine Längsachse ergibt sich schon eine axiale Transportbewegung des CFK-Materials 2 im Drehrohr 11. Im dargestellten und bevorzugten Ausführungsbeispiel ist dazu aber ferner vorgesehen, dass das Drehrohr 11 im Inneren außerdem noch mit Mischelementen 22 versehen ist, nämlich mit den in Fig. 3 gut erkennbaren Wendeblechen.

Die Figurendarstellungen gemäß Fig. 3A und 3B zeigen eine Besonderheit, die bei einem erfindungsgemäß eingesetzten Drehrohr 11 bevorzugt eingesetzt wird. Vorgesehen ist nämlich bevorzugt die Kombination von Mischelement 22 einerseits und einem Förderelement 26, bevorzugt in Form einer Förderschnecke, insbesondere einer schnecken-, helix- oder schraubenförmig verlaufenden Förderschnecke, vorzugsweise einer archimedischen Schnecke, andererseits. Wie in der Ausschnittsdarstellung des Förderelements 26 gemäß Fig. 3B dargestellt, sind die Mischelemente 22 erfindungsgemäß bevorzugt zwischen den einzelnen Windungen des Förderelements 26 in Form einer Förderschnecke, insbesondere einer archimedischen Schnecke, angeordnet. So erfolgt eine Zwangsführung des CFK-Materials 2 in Längsrichtung des Drehrohrs 11.

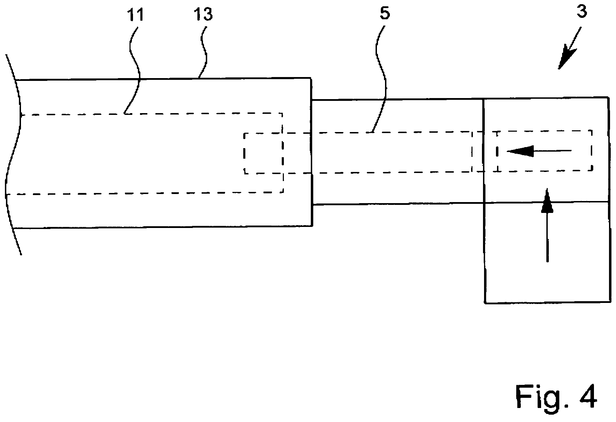

Fig. 4 zeigt noch eine Besonderheit, die in den anderen Figuren der Zeichnung nicht dargestellt ist. In einer Variante der Erfindung kann man nämlich vorsehen, dass die Eintragstation 3 nicht, wie in Fig. 1 dargestellt, offen mit einem Transportband 5 ausgestattet ist, sondern als Eintragschleuse ausgeführt ist. Die Eintragschleuse 3 gemäß Fig. 4 arbeitet wie eine Art Windfang, wodurch gewährleistet ist, dass der durch das Eintragen von CFK-Material 2 unvermeidliche Sauerstoffeintrag in den ersten Abschnitt 19.1 der Heizsektion 15 des Pyrolyseofens 1 mengenmäßig kontrolliert werden kann. Die Schleuse erlaubt immerhin eine noch quasi-kontinuierliche Zuführung von CFK-Material 2 in einzelnen "Portionen". Für die genaue Steuerung mittels der Steuerungseinrichtung 10 ist dies aber trotzdem von großem Vorteil.

Fig. 1 bis 3 zeigen im Zusammenhang ferner, dass die Beheizung des Pyrolyseofens 1 von mindestens einem außen angeordneten Gasbrenner 23 aus über Heizgasleitungen 24 im Gehäuse 13 erfolgt. In Fig. 3 sieht man links unten den Anschluss des externen Brenners 23 und die Pfeile zeigen die Strömung des Heizgases in den Heizgasleitungen 24 hinein in den Innenraum des Gehäuses 13, in dem sich das Drehrohr 11 dreht. Diese Gase verlassen dann zusammen mit dem Pyrolysegas wieder das Gehäuse 13 über die Abfuhrleitungen 14. In Fig. 1 erkennt man die Zufuhr über die Heizgasleitungen 24, die quer zur Längserstreckung des Drehrohrs 11 im Boden des Gehäuses 13 angeordnet sind.

In Fig. 1 erkennt man oben rechts im Übrigen an der dortigen Abfuhrleitung 14 einen Anschluss 25 für einen typischerweise hier anzuschließenden Nachbrenner. Durch diesen werden die Temperaturen der Gase in den Abfuhrleitungen 14 stark erhöht, so dass dort eine Nachverbrennung des Pyrolysegases 9 erfolgt.

In Fig. 3 sieht man eine Vor-Verbrennung auch bereits eingangsseitig ausgehend vom Gasbrenner 23. Hier wird nämlich unmittelbar in einer Abfuhrleitung 14 am Ausgang des das Drehrohr 11 aufnehmenden Raumes im Gehäuse 13 eine Nachverbrennung begonnen.

Typische Temperaturen im Drehrohr 11 liegen zwischen 200 °C bis 750 °C, typische Temperaturen oben hinter dem Anschluss 25 hingegen bei 1.000 bis 1.200 °C. Auch insoweit darf auf die ausführlichen Erläuterungen im eingangs behandelten Stand der Technik verwiesen werden.

Ein weiterer Gegenstand der vorliegenden Erfindung - gemäß einem **zweiten** Aspekt der vorliegenden Erfindung - ist die Verwendung einer Pyrolyseanlage gemäß der vorliegenden Erfindung zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien).

Für weitergehende Ausführungen zu diesem erfindungsgemäßen Aspekt kann auf die voranstehenden Ausführungen zu der erfindungsgemäßen Pyrolyseanlage verwiesen werden, welche in Bezug auf diesen erfindungsgemäßen Aspekt entsprechend gelten.

Ein wiederum weiterer Gegenstand der vorliegenden Erfindung - gemäß einem **dritten** Aspekt der vorliegenden Erfindung - ist ein Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien),
wobei ein Gegenstand auf Basis eines Kohlenstofffasern enthaltenden Kunststoffs, welcher Kohlenstofffasern in einer Kunststoffmatrix umfasst, einer mehrstufigen Pyrolyse in Gegenwart von Sauerstoff unterzogen wird, wobei bei der Pyrolyse der Kunststoff der Kunststoffmatrix unter Erhalt der Kohlenstofffasern zersetzt wird,
wobei die Pyrolyse in einer Pyrolyseanlage gemäß der vorliegenden Erfindung mit einem Pyrolyseofen durchgeführt wird, wobei der Pyrolyseofen mindestens die folgenden Behandlungszonen, nämlich die folgenden Abschnitte des Drehrohrs, in der nachfolgend spezifizierten Abfolge umfasst und der Gegenstand in dieser Abfolge die nachfolgenden Behandlungszonen durchläuft:
(A) eine Aufwärmzone A, in welcher der zu behandelnde und/oder zu rezyklierende Gegenstand auf eine definierte Temperatur T(A) erwärmt wird,
(B1) nachfolgend eine erste Pyrolysezone B1, in welcher bei einer definierten Temperatur T(B1) und einem definierten Sauerstoffgehalt G(B1) eine Pyrolyse des Kunststoffs der Kunststoffmatrix des zu behandelnden Gegenstands einsetzt und/oder durchgeführt wird,
(B2) nachfolgend eine zweite Pyrolysezone B2, in welcher bei einer definierten Temperatur T(B2) und einem definierten Sauerstoffgehalt G(B2) eine abschließende Pyrolyse des nach der Pyrolysezone B1 noch verbleibenden Kunststoffs der Kunststoffmatrix des zu behandelnden Gegenstands bis zur zumindest im Wesentlichen vollständigen Entfernung durchgeführt wird,
(C) nachfolgend eine Abkühlzone C zum Abkühlen der aus der zweiten Pyrolysezone B2 erhaltenen rezyklierten Kohlenstofffasern RF,
wobei der Sauerstoffgehalt G(B2) in der zweiten Pyrolysezone B2 gegenüber dem Sauerstoffgehalt G(B1) in der ersten Pyrolysezone B1 um 3 Vol.-% bis 25 Vol.-% erhöht wird und wobei die Temperatur T(B2) in der zweiten Pyrolysezone B2 gegenüber der Temperatur T(B1) in der ersten Pyrolysezone B1 um 25 °C bis 300 °C erhöht wird.

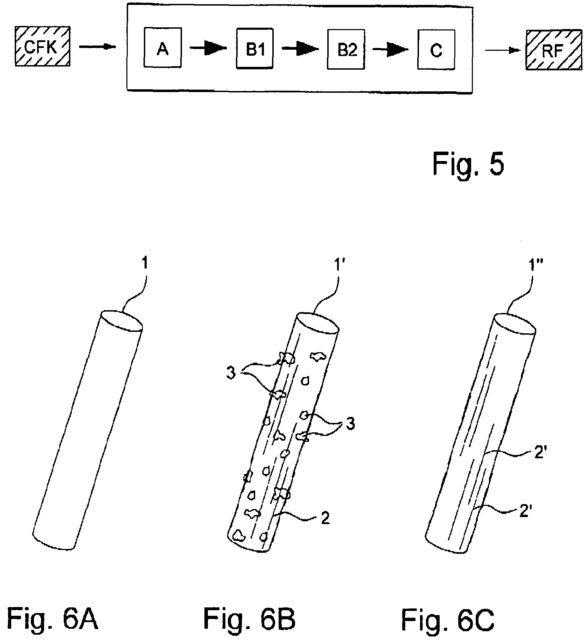

Das erfindungsgemäße Verfahren, welches in einer Pyrolyseanlage gemäß Fig.1 durchgeführt werden kann, ist in Fig. 5 dargestellt. Dargestellt ist das erfindungsgemäße Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs bzw. CFK-Materialien), vorzugsweise aus kohlenstofffaserhaltigen und/oder kohlenstofffaserverstärkten Verbundwerkstoffen (Kompositmaterialien), wobei ein Gegenstand auf Basis eines Kohlenstofffasern enthaltenden Kunststoffs, welcher Kohlenstofffasern in einer Kunststoffmatrix umfasst, einer mehrstufigen Pyrolyse in Gegenwart von Sauerstoff unterzogen wird, wobei bei der Pyrolyse der Kunststoff der Kunststoffmatrix unter Erhalt der Kohlenstofffasern zersetzt wird, wobei die Pyrolyse in einer Pyrolyseanlage gemäß einem der vorangehenden Ansprüche mit einer Pyrolysevorrichtung P, insbesondere einem Pyrolyseofen 1, durchgeführt wird, wobei die Pyrolysevorrichtung P mindestens die folgenden Behandlungszonen, insbesondere die folgenden Abschnitte 19 des Drehrohrs 11, in der nachfolgend spezifizierten Abfolge umfasst und der Gegenstand in dieser Abfolge die nachfolgenden Behandlungszonen durchläuft:
(A) eine Aufwärmzone A (entspricht dem Bezugszeichen 19.1 in Fig. 1), in welcher der zu behandelnde und/oder zu rezyklierende Gegenstand auf eine definierte Temperatur T(A) erwärmt wird,
(B1) nachfolgend eine erste Pyrolysezone B1 (entspricht dem Bezugszeichen 19.2 in Fig. 1), in welcher bei einer definierten Temperatur T(B1) und einem definierten Sauerstoffgehalt G(B1) eine Pyrolyse des Kunststoffs der Kunststoffmatrix des zu behandelnden Gegenstands einsetzt und/oder durchgeführt wird,
(B2) nachfolgend eine zweite Pyrolysezone B2 (entspricht dem Bezugszeichen 19.3 in Fig. 1), in welcher bei einer definierten Temperatur T(B2) und einem definierten Sauerstoffgehalt G(B2) eine abschließende Pyrolyse des nach der Pyrolysezone B1 (entspricht dem Bezugszeichen 19.2 in Fig. 1) noch verbleibenden Kunststoffs der Kunststoffmatrix des zu behandelnden Gegenstands bis zur zumindest im Wesentlichen vollständigen Entfernung durchgeführt wird,
(C) nachfolgend eine Abkühlzone C (entspricht dem Bezugszeichen 19.4 in Fig. 1) zum Abkühlen der aus der zweiten Pyrolysezone B2 (entspricht dem Bezugszeichen 19.3 in Fig. 1) erhaltenen rezyklierten Kohlenstofffasern RF (entspricht dem Bezugszeichen 7 in Fig. 1),
wobei der Sauerstoffgehalt G(B2) in der zweiten Pyrolysezone B2 (entspricht dem Bezugszeichen 19.3 in Fig. 1) gegenüber dem Sauerstoffgehalt G(B1) in der ersten Pyrolysezone B1 (entspricht dem Bezugszeichen 19.2 in Fig. 1) erhöht wird und/oder wobei die Temperatur T(B2) in der zweiten Pyrolysezone B2 (entspricht dem Bezugszeichen 19.3 in Fig. 1) gegenüber der Temperatur T(B1) in der ersten Pyrolysezone B1 (entspricht dem Bezugszeichen 19.2 in Fig. 1) erhöht wird.

Die Temperaturangaben, insbesondere die Angabe der Temperaturen T(B1) und T(B2), und die in diesem Zusammenhang nachfolgend noch aufgeführten konkreten Temperaturwerte bzw. Temperaturwertebereiche beziehen sich insbesondere auf die Temperaturen, welche in dem zu behandelnden bzw. zu rezyklierenden Gegenstand erreicht werden.

Fig. 5 zeigt schematisch - gemäß einer bevorzugten Ausführungsform der Erfindung - einen Ablauf des erfindungsgemäßen Verfahrens zur Rückgewinnung (Rezyklierung) von Kohlenstofffasern aus kohlenstofffaserhaltigen Kunststoffen, welches in der Pyrolyseanlage gemäß Fig. 1 durchgeführt wird. Die Kunststoffmatrix des zu behandelnden kohlenstofffaserhaltigen Kunststoffs CFK wird in einer Pyrolyseeinrichtung P zunächst in einer Aufwärmzone A (entspricht dem Bezugszeichen 19.1 in Fig. 1) auf eine definierte Temperatur erwärmt und im nachfolgenden Schritt in einer ersten Pyrolysezone B1 (entspricht dem Bezugszeichen 19.2 in Fig. 1) bei einer definierten Temperatur und einem definierten Sauerstoffgehalt einer selektiven Pyrolyse unterzogen. In einer auf die erste Pyrolysezone B1 folgenden zweiten Pyrolysezone B2 (entspricht dem Bezugszeichen 19.3 in Fig. 1) erfolgen die abschließende Pyrolyse der noch verbleibenden Kunststoffmatrix des kohlenstofffaserhaltigen Kunststoffs CFK bis zur zumindest im Wesentlichen vollständigen Entfernung der Kunststoffmatrix sowie die vollständige Entfernung der Pyrolyserückstände auf der Oberfläche der rezyklierten Kohlenstofffasern bei einer definierten Temperatur und einem definierten Sauerstoffgehalt. Anschließend erfolgt in einer Abkühlzone C (entspricht dem Bezugszeichen 19.4 in Fig. 1) eine Abkühlung, so dass schließlich die auf diese Weise erhaltenen rezyklierten Kohlenstofffasern RF (entspricht dem Bezugszeichen 7 in Fig. 1) resultieren.

Fig. 6A zeigt schematisch eine Kohlenstoffprimärfaser 1 des Standes der Technik, welche eine glatte Oberflächenstruktur aufweist.

Fig. 6B zeigt schematisch eine rezyklierte Kohlenstofffaser 1' des Standes der Technik, welche durch ein nichterfindungsgemäßes Verfahren erhalten wird. Die Oberfläche der rezyklierten Kohlenstofffaser 1' weist Rillen 2 auf, welche durch die Oxidation der Oberfläche der Kohlenstofffaser während der Rezyklierung entstehen. Weiterhin befindet sich eine signifikante Menge an Pyrolyse- bzw. Verkokungsrückständen 3 auf der Oberfläche der herkömmlich rezyklierten Kohlenstofffaser 1'. Aufgrund der signifikanten Menge an Pyrolyse- bzw. Verkokungsrückstand 3 ist die Einarbeitbarkeit der herkömmlich rezyklierten Kohlenstofffaser 1', welche durch ein nichterfindungsgemäßes Verfahren erhalten wird, in Kunststoffe nicht bzw. nicht signifikant besser als die Einarbeitbarkeit der Kohlenstoffprimärfaser 1.

Fig. 6C zeigt schematisch eine rezyklierte Kohlenstofffaser 1", welche durch das erfindungsgemäße Verfahren erhalten wird. Die Oberfläche der rezyklierten Kohlenstofffaser weist in Folge der Oxidation der rezyklierten Kohlenstofffaser während der Rezyklierung Rillen 2' auf. Jedoch befinden sich aufgrund der erfindungsgemäßen Verfahrensführung keine Pyrolyse- bzw. Verkokungsrückstände auf der Oberfläche der erfindungsgemäßen rezyklierten Kohlenstofffaser 1". Somit weist die erfindungsgemäße rezyklierte Kohlenstofffaser 1" sowohl gegenüber der Kohlenstoffprimärfaser 1 als auch gegenüber der nichterfindungsgemäß rezyklierten Kohlenstofffaser 1' eine signifikant verbesserte Einarbeitbarkeit in Kunststoffe auf.

Die schematischen Darstellungen gemäß Fig. 6A, 6B und 6C entsprechen mikroskopischen Analysen der Anmelderin an den entsprechenden Produkten.

Eine Besonderheit der vorliegenden Erfindung ist insbesondere darin zu sehen, dass durch die Kombination aus erfindungsgemäßer Pyrolyseanlage, umfassend einen indirekt beheizten Drehrohrofen mit Austrittsöffnungen, und erfindungsgemäßer Verfahrensführung, insbesondere einer Erhöhung des Sauerstoffgehalts und/oder der Temperatur in der zweiten Pyrolysezone, rezyklierte Kohlenstofffasern erhalten werden, welche überraschenderweise zumindest im Wesentlichen keinerlei Pyrolyserückstände aufweisen und zudem, insbesondere aufgrund der teilweisen Oxidation der Oberfläche der Kohlenstofffasern, eine bessere Benetzbarkeit im Vergleich zu Kohlenstoffprimärfasern und zu herkömmlich rezyklierten Kohlenstofffasern aufweisen.

Somit ermöglicht die Kombination aus erfindungsgemäßer Pyrolyseanlage und erfindungsgemäßem Verfahren eine selektive Entfernung des Kunststoffs der Kunststoffmatrix, wobei jedoch die rezyklierten Kohlenstofffasern nicht zerstört werden und folglich keine signifikante Verschlechterung der mechanischen Eigenschaften, insbesondere der Zugfestigkeit und des Elastizitätsmoduls, und elektrischen Eigenschaften eintritt, so dass die Materialeigenschaften der rezyklierten Kohlenstofffasern zumindest im Wesentlichen denen von Kohlenstoffprimärfasern entsprechen.

Weiterhin wird durch die Kombination aus erfindungsgemäßer Pyrolyseanlage und erfindungsgemäßem Verfahren die Oberfläche der rezyklierten Kohlenstofffasern geringfügig oxidiert, d. h. die Oberfläche ist rauher und die Anzahl der sauerstoff-haltigen funktionellen Gruppen an der Oberfläche der Kohlenstofffasern, wie Phenol-, Carboxyl-, Carbonyl-, Aldehyd-, Keto-, Hydroxy- und/oder Oxogruppen, ist signifikant größer als im Fall von Kohlenstoffprimärfasern oder herkömmlich rezyklierten Kohlenstofffasern.

Die aus der oxidierten Oberfläche resultierende Aufrauhung und größere Hydrophilie der rezyklierten Kohlenstofffasern führt zu einer verbesserten Benetzbarkeit und somit auch zu einer verbesserten Einarbeitbarkeit der rezyklierten Kohlenstofffasern in Kunststoffe, Baustoffe oder zementäre Systeme.

Gemäß der vorliegenden Erfindung wird der Sauerstoffgehalt G(B2) in der zweiten Pyrolysezone B2 gegenüber dem Sauerstoffgehalt G(B1) in der ersten Pyrolysezone B1 mindestens um 3 Vol.-%, insbesondere mindestens um 5 Vol.-%, vorzugsweise mindestens um 7,5 Vol.-%, besonders bevorzugt mindestens um 10 Vol.-%, erhöht. Um die Oxidierung der Kohlenstofffasern in der ersten Pyrolysezone B1 zu vermeiden, wird eine geringere Menge an Sauerstoff verwendet als in der zweiten Pyrolysezone B2, in welcher die Entfernung von etwaigen Pyrolyserückständen auf der Oberfläche der rezyklierten Kohlenstofffasern erfolgt. Der Zerfall der Kunststoffmatrix findet somit zumindest im Wesentlichen im ersten Pyrolyseabschnitt B1 bei niedrigeren Sauerstoffgehalten statt als die Entfernung von Pyrolyserückständen in der zweiten Pyrolysezone B2. Die Anwesenheit von nur geringen Mengen an Sauerstoff in der ersten Pyrolysezone B1 wird einerseits durch die Eintragstation 3, insbesondere in Form einer Eintrittsschleuse, erreicht, andererseits insbesondere aber auch dadurch, dass die Atmosphäre in der ersten Pyrolysezone B1 im Wesentlichen mit Dampf gesättigt ist, welcher insbesondere aus bei der Pyrolyse der Kunststoffmatrix auftretenden gasförmigen Zersetzungsprodukten besteht und welcher an sich nur einen geringen Anteil an Sauerstoff aufweist.

In diesem Zusammenhang ist es vorgesehen, dass der Sauerstoffgehalt G(B2) in der zweiten Pyrolysezone B2 gegenüber dem Sauerstoffgehalt G(B1) in der ersten Pyrolysezone B1 um 3 Vol.-% bis 25 Vol.-%, insbesondere um 5 Vol.-% bis 20 Vol.-%, vorzugsweise um 7,5 Vol.-% bis 17,5 Vol.-%, besonders bevorzugt um 10 Vol.-% bis 15 Vol.-%, erhöht wird. Wie bereits vorstehend ausgeführt, wird in der zweiten Pyrolysezone B2 ein höherer Sauerstoffgehalt als in der ersten Pyrolysezone B1 eingestellt, um etwaige Pyrolyserückstände an der Oberfläche der rezyklierten Kohlenstofffasern zumindest im Wesentlichen vollständig zu entfernen.

Besonders gute Ergebnisse werden im Rahmen der vorliegenden Erfindung erhalten, wenn der Sauerstoffgehalt G(B1) in der ersten Pyrolysezone B1 auf Werte im Bereich von 0,1 Vol.-% bis 12 Vol.-%, insbesondere im Bereich von 0,5 Vol.-% bis 10 Vol.-%, vorzugsweise im Bereich von 0,75 Vol.-% bis 6 Vol.-%, besonders bevorzugt im Bereich von 1 Vol.-% bis 4 Vol.-%, eingestellt wird und der Sauerstoffgehalt G(B2) in der zweiten Pyrolysezone B2 auf Werte im Bereich von 2 Vol.-% bis 30 Vol.-%, insbesondere im Bereich von 3 Vol.-% bis 20 Vol.-%, vorzugsweise im Bereich von 5 Vol.-% bis 17 Vol.-%, besonders bevorzugt im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-%, insbesondere mindestens um 5 Vol.-%, vorzugsweise mindestens um 7,5 Vol.-%, besonders bevorzugt mindestens um 10 Vol.-%, erhöht ist und/oder dass der Sauerstoffgehalt G(B2) in der zweiten Pyrolysezone B2 gegenüber dem Sauerstoffgehalt G(B1) in der ersten Pyrolysezone B1 um 3 Vol.-% bis 25 Vol.-%, insbesondere um 5 Vol.-% bis 20 Vol.-%, vorzugsweise um 7,5 Vol.-% bis 17,5 Vol.-%, besonders bevorzugt um 10 Vol.-% bis 15 Vol.-%, erhöht ist.

Im Rahmen der vorliegenden Erfindung kann es insbesondere vorgesehen sein, dass der Sauerstoffgehalt in der ersten und zweiten Pyrolysezone B1 und B2 gesteuert und/oder kontrolliert wird derart, dass der Sauerstoffgehalt G(B1) in der ersten Pyrolysezone B1 unterstöchiometrisch in Bezug auf die zu zersetzende Kunststoffmatrix eingestellt wird und der Sauerstoffgehalt G(B2) in der zweiten Pyrolysezone B2 überstöchiometrisch in Bezug auf die zu zersetzende Kunststoffmatrix eingestellt wird. Erfindungsgemäß ist es somit bevorzugt, wenn die Zersetzung der Kunststoffmatrix in Anwesenheit niedriger Mengen an Sauerstoff in der ersten Pyrolysezone B1 und die Entfernung etwaiger Pyrolyserückstände in Anwesenheit hoher Mengen an Sauerstoff in der zweiten Pyrolysezone B2 durchgeführt wird. Insbesondere wird in der ersten Pyrolysezone B1 der Sauerstoffgehalt derart eingestellt, dass dieser in einer Menge vorliegt, welche geringer ist als die Menge an Sauerstoff, welche für die Verbrennung der gasförmigen Zersetzungsprodukte der Kunststoffmatrix benötigt wird; die geringe Menge an Sauerstoff in der ersten Pyrolysezone B1 ist erforderlich, um eine Oxidation der Kohlenstofffasern und somit eine teilweise oder vollständige Zerstörung der Kohlenstofffasern, welche in signifikant verschlechterten mechanischen und elektrischen Eigenschaften resultiert, zu vermeiden. Jedoch ist für die vollständige Verbrennung etwaiger Pyrolyserückstände auf der Oberfläche der rezyklierten Kohlenstofffasern in der zweiten Pyrolysezone B2 ein höherer Sauerstoffgehalt in der Atmosphäre in Bezug auf die zu zersetzende Kunststoffmatrix erforderlich.

Bevorzugt kann es erfindungsgemäß vorgesehen sein, dass der Sauerstoffgehalt während der Pyrolyse, vorzugsweise während des gesamten Verfahrens, insbesondere der Sauerstoffgehalt G(B1) in der ersten Pyrolysezone B1 und der Sauerstoffgehalt G(B2) in der zweiten Pyrolysezone B2, gesteuert und/oder kontrolliert wird, vorzugsweise durch Abziehen von aus der Zersetzung der Kunststoffmatrix stammenden Zersetzungsprodukten, insbesondere gasförmigen Zersetzungsprodukten, und/oder durch Zufuhr von Sauerstoff, bevorzugt in Form von Luft. Erfindungsgemäß wird der Sauerstoffgehalt in der ersten Pyrolysezone B1 und in der zweiten Pyrolysezone B2 durch Abziehen der gasförmigen Zersetzungsprodukte der Kunststoffmatrix durch die Austrittsöffnungen des indirekt beheizten Drehrohrofens gesteuert, so dass der Sauerstoffgehalt in der ersten Pyrolysezone B1 ausreichend hoch ist, um die Zersetzung und teilweise Verbrennung der Kunststoffmatrix zu ermöglichen, jedoch andererseits gering genug ist, um eine Zerstörung der Kohlenstofffasern durch Oxidation auf ein Mindestmaß zu beschränken oder ganz zu vermeiden. Weiterhin ist erfindungsgemäß der Sauerstoffgehalt in der zweiten Pyrolysezone B2 derart eingestellt, dass eine Verbrennung etwaiger Pyrolyserückstände auf der Oberfläche der rezyklierten Kohlenstofffasern gewährleistet ist und eine teilweise Oxidation der Oberfläche der rezyklierten Kohlenstofffasern erfolgt, ohne jedoch die rezyklierten Kohlenstofffasern zu zerstören. Die Einstellung des Sauerstoffgehalts in der ersten Pyrolysezone B1 und der zweiten Pyrolysezone B2 erfolgt erfindungsgemäß durch Abziehen der gasförmigen Zersetzungsprodukte der Kunststoffmatrix durch die Austrittsöffnungen des indirekt beheizten Drehrohrofens. Durch Abziehen der Verbrennungsgase entsteht eine Sogwirkung, aufgrund derer Luft durch die vorzugsweise offene Pyrolyseanlage in die jeweilige Zone des indirekt beheizten Drehrohrofens strömt. Somit ist die Steuerung und/oder Kontrolle des Sauerstoffgehalts in der jeweiligen Pyrolysezone verfahrenstechnisch sehr leicht durchzuführen und erfordert keinen Einsatz von kostenintensiven Gasen, wie Sauerstoff.

In diesem Zusammenhang kann es vorgesehen sein, dass der Sauerstoffgehalt während der Pyrolyse, vorzugsweise während des gesamten Verfahrens, insbesondere der Sauerstoffgehalt G(B1) in der ersten Pyrolysezone B1 und der Sauerstoffgehalt G(B2) in der zweiten Pyrolysezone B2, über Sauerstofferfassungseinrichtungen, insbesondere sauerstoffsensitive Sensoren und/oder Drucksonden, erfasst wird. Dabei kann insbesondere mittels der Sauerstofferfassungseinrichtungen der Sauerstoffgehalt durch Abziehen von aus der Zersetzung der Kunststoffmatrix stammenden Zersetzungsprodukten, bevorzugt mittels einer Gasabzugsvorrichtung, und/oder durch Zufuhr von Sauerstoff gesteuert und/oder kontrolliert werden. Im Rahmen der vorliegenden Erfindung kann der Sauerstoffgehalt in der ersten Pyrolysezone B1 und der zweiten Pyrolysezone B2 über Sensoren und/oder Drucksonden, wie Pitotrohre, erfasst werden. Der ermittelte Sauerstoffgehalt dient im Rahmen der vorliegenden Erfindung zur Steuerung der Gasabzugsvorrichtung in Abhängigkeit des ermittelten Sauerstoffgehalts und des Sollwerts des Sauerstoffgehalts in der jeweiligen Pyrolysezone. So kann der Sauerstoffgehalt durch Abziehen von gasförmigen Verbrennungsgasen in der ersten und der zweiten Pyrolysezone durch die Austrittsöffnungen des indirekt beheizten Drehrohrofens erhöht werden, da durch Abziehen der gasförmigen Zersetzungsprodukte aufgrund der entstehenden Sogwirkung und der erfindungsgemäß eingesetzten offenen Pyrolyseanlage Luft aus der Umgebung in die jeweilige Pyrolysezone strömt. Durch die Erhöhung des Sauerstoffgehalts in der Atmosphäre der jeweiligen Pyrolysezone wird sowohl die Verbrennung der Kunststoffmatrix als auch etwaiger Pyrolyserückstände auf der Oberfläche der rezyklierten Kohlenstofffasern gefördert. Es erfolgt jedoch auch eine vermehrte Oxidation der Oberfläche der rezyklierten Kohlenstofffasern.

Gemäß einer bevorzugten Ausführungsform der vorliegenden Erfindung wird der Sauerstoffgehalt während der Pyrolyse, vorzugsweise während des gesamten Verfahrens, insbesondere der Sauerstoffgehalt G(B1) in der ersten Pyrolysezone B1 und der Sauerstoffgehalt G(B2) in der zweiten Pyrolysezone B2, gesteuert und/oder kontrolliert derart, dass in der ersten Pyrolysezone B1 zumindest im Wesentlichen selektiv nur die Kunststoffmatrix pyrolysiert und in der zweiten Pyrolysezone B2 zumindest im Wesentlichen selektiv nur die nach der ersten Pyrolysezone B1 noch verbleibende Kunststoffmatrix und Pyrolyse(koks)-rückstände entfernt und die Oberfläche der auf diese Weise rezyklierten Kohlenstofffasern zumindest teilweise oxidiert wird. Durch die Steuerung des Sauerstoffgehalts in der ersten und der zweiten Pyrolysezone B1 und B2 kann die Kunststoffmatrix selektiv pyrolysiert werden, d. h. in Anwesenheit eines gewissen Sauerstoffgehalts selektiv thermal zersetzt werden, ohne dass jedoch eine übermäßige Oxidation der Oberfläche der rezyklierten Kohlenstofffasern stattfindet. Durch die reduzierte Menge an Sauerstoff in der ersten Pyrolysezone B1 wird die thermale Zersetzung der Kunststoffmatrix nicht beeinflusst, jedoch findet eine reduzierte Verbrennung der gasförmigen Zersetzungsprodukte des Kunststoffs der Kunststoffmatrix sowie nur eine geringe Oxidation der Kohlenstofffasern statt. In der zweiten Pyrolysezone B2 wird der Sauerstoffgehalt derart eingestellt, dass noch verbleibende Kunststoffmatrix sowie in der ersten Pyrolysezone B1 gebildete Pyrolyserückstände auf der Oberfläche der rezyklierten Kohlenstofffasern entfernt werden. Aufgrund der höheren Menge an Sauerstoff in der zweiten Pyrolysezone B2 findet dort zudem eine zumindest teilweise Oxidation der Oberfläche der rezyklierten Kohlenstofffasern statt, welche gleichzeitig zu einer verbesserten Benetzbarkeit infolge der hydrophileren und rauheren Oberfläche führt.

Wie zuvor beschrieben, kann es erfindungsgemäß insbesondere vorgesehen sein, dass die Temperatur T(B2) in der zweiten Pyrolysezone B2 gegenüber der Temperatur T(B1) in der ersten Pyrolysezone B1 erhöht ist.

Erfindungsgemäß kann es in diesem Zusammenhang vorgesehen sein, dass die Temperatur T(B2) in der zweiten Pyrolysezone B2 gegenüber der Temperatur T(B1) in der ersten Pyrolysezone B1 mindestens um 25 °C, insbesondere mindestens um 50 °C, vorzugsweise mindestens um 75 °C, besonders bevorzugt mindestens um 100 °C, noch mehr bevorzugt mindestens um 125 °C, ganz besonders bevorzugt mindestens um 150 °C, erhöht wird. Um die im Wesentlichen vollständige Entfernung der Pyrolyserückstände auf der Oberfläche der rezyklierten Kohlenstofffasern in der zweiten Pyrolysezone B2 zu gewährleisten, kann in der zweiten Pyrolysezone B2 eine höhere Temperatur T(B2) gewählt werden als in der ersten Pyrolysezone B1, da bei erhöhten Temperaturen, insbesondere in Kombination mit höheren Sauerstoffgehalten, eine zumindest im Wesentlichen vollständige Entfernung etwaiger Pyrolyse(koks)rückstände auf der Oberfläche der rezyklierten Kohlenstofffasern gewährleistet ist. Jedoch sollte die Temperatur einen gewissen Maximalwert nicht überschreiten, da andernfalls die rezyklierten Kohlenstofffasern übermäßig oxidieren und infolge der dabei auftretenden, zumindest teilweisen Zerstörung der rezyklierten Kohlenstofffasern auch deren mechanische Stabilität signifikant verringert werden könnte.

Insbesondere kann es vorgesehen sein, dass die Temperatur T(B2) in der zweiten Pyrolysezone B2 gegenüber der Temperatur T(B1) in der ersten Pyrolysezone B1 um 25 °C bis 300 °C, insbesondere um 50 °C bis 250 °C, vorzugsweise um 75 °C bis 200 °C, besonders bevorzugt um 100 °C bis 175 °C, erhöht wird.

Bevorzugt kann es erfindungsgemäß vorgesehen sein, dass die Temperatur T(B1) in der ersten Pyrolysezone B1 im Bereich von 375 °C bis 475 °C, insbesondere im Bereich von 390 °C bis 465 °C, vorzugsweise im Bereich von 415 °C bis 455 °C, besonders bevorzugt im Bereich von 430 °C bis 445 °C, eingestellt wird und die Temperatur T(B2) in der zweiten Pyrolysezone B2 im Bereich von 450 °C bis 750 °C, insbesondere im Bereich von 480 °C bis 690 °C, vorzugsweise im Bereich von 510 °C bis 675 °C, besonders bevorzugt im Bereich von 515 °C bis 650 °C, eingestellt wird, jedoch mit der Maßgabe, dass die Temperatur T(B2) in der zweiten Pyrolysezone B2 gegenüber der Temperatur T(B1) in der ersten Pyrolysezone B1 mindestens um 25 °C, insbesondere mindestens um 50 °C, vorzugsweise mindestens um 75 °C, besonders bevorzugt mindestens um 100 °C, noch mehr bevorzugt mindestens um 125 °C, ganz besonders bevorzugt mindestens um 150 °C, erhöht ist und/oder dass die Temperatur T(B2) in der zweiten Pyrolysezone B2 gegenüber der Temperatur T(B1) in der ersten Pyrolysezone B1 um 25 °C bis 300 °C, insbesondere um 50 °C bis 250 °C, vorzugsweise um 75 °C bis 200 °C, besonders bevorzugt um 100 °C bis 175 °C, erhöht ist. Die erste Pyrolysezone B1 dient dazu, selektiv die Kunststoffmatrix zu zersetzen und die dabei entstehenden gasförmigen Zersetzungsprodukte mit in der Atmosphäre der Pyrolysezone B1 vorhandenem Sauerstoff zumindest teilweise zu verbrennen; aufgrund der geringen Mengen an Sauerstoff in der Atmosphäre der ersten Pyrolysezone B1 erfolgt eine verzögerte Zersetzung der Kunststoffmatrix, so dass sich Pyrolyserückstände auf der Oberfläche der Kohlenstofffasern bilden können. Diese Pyrolyserückstände müssen in einer zweiten Pyrolysezone B2 bei höheren Temperaturen als in der ersten Pyrolysezone B1 entfernt werden, wobei eine übermäßige Oxidation der rezyklierten Kohlenstofffasern - wie zuvor ausgeführt - durch die Einstellung einer definierten Temperatur und eines definierten Sauerstoffgehalts vermieden wird.

In diesem Zusammenhang kann es vorgesehen sein, dass die Temperatur während der Pyrolyse, vorzugsweise während des gesamten Verfahrens, insbesondere die Temperatur T(B1) in der ersten Pyrolysezone B1 und die Temperatur T(B2) in der zweiten Pyrolysezone B2, gesteuert und/oder kontrolliert wird, vorzugsweise über Temperaturerfassungseinrichtungen, insbesondere temperatursensitive Sensoren. Die Steuerung der Temperatur in der ersten und der zweiten Pyrolysezone B1 und B2 mittels temperatursensitiver Sensoren ist empfehlenswert, um zum einen die selektive Pyrolyse der Kunststoffmatrix in der ersten Pyrolysezone B1 zu gewährleisten und andererseits die vollständige Entfernung etwaiger Pyrolyserückstände auf der Oberfläche der rezyklierten Kohlenstofffasern in der zweiten Pyrolysezone B2 sicherzustellen. In diesem Zusammenhang sollte daher eine definierte Steuerung der Temperaturen T(B1) und T(B2) in der ersten und zweiten Pyrolysezone B1 und B2 sichergestellt sein, um eine übermäßige Oxidation und/oder Zerstörung der Kohlenstofffasern, welche in einer signifikant reduzierten mechanischen Stabilität der rezyklierten Kohlenstofffasern resultieren würde, zu vermeiden.

Erfindungsgemäß bevorzugt kann es vorgesehen sein, dass die Temperatur während der Pyrolyse, vorzugsweise während des gesamten Verfahrens, insbesondere die Temperatur T(B1) in der ersten Pyrolysezone B1 und die Temperatur T(B2) in der zweiten Pyrolysezone B2, gesteuert und/oder kontrolliert wird derart, dass in der ersten Pyrolysezone B1 zumindest im Wesentlichen selektiv nur die Kunststoffmatrix pyrolysiert und in der zweiten Pyrolysezone B2 zumindest im Wesentlichen selektiv nur die nach der ersten Pyrolysezone B1 noch verbleibende Kunststoffmatrix und Pyrolyse(koks)rückstände entfernt werden und die Oberfläche der auf diese Weise rezyklierten Kohlenstofffasern zumindest teilweise oxidiert wird.

Erfindungsgemäß wird der Sauerstoffgehalt G(B2) in der zweiten Pyrolysezone B2 gegenüber dem Sauerstoffgehalt G(B1) in der ersten Pyrolysezone B1 erhöht und die Temperatur T(B2) in der zweiten Pyrolysezone B2 gegenüber der Temperatur T(B1) in der ersten Pyrolysezone B1 erhöht. In diesem Zusammenhang ist es gemäß der vorliegenden Erfindung bevorzugt, wenn der Sauerstoffgehalt G(B1) in der ersten Pyrolysezone B1 auf Werte im Bereich von 0,1 Vol.-% bis 12 Vol.-%, insbesondere im Bereich von 0,5 Vol.-% bis 10 Vol.-%, vorzugsweise im Bereich von 0,75 Vol.-% bis 6 Vol.-%, besonders bevorzugt im Bereich von 1 Vol.-% bis 4 Vol.-%, eingestellt wird und der Sauerstoffgehalt G(B2) in der zweiten Pyrolysezone B2 auf Werte im Bereich von 2 Vol.-% bis 30 Vol.-%, insbesondere im Bereich von 3 Vol.-% bis 20 Vol.-%, vorzugsweise im Bereich von 5 Vol.-% bis 17 Vol.-%, besonders bevorzugt im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-%, insbesondere mindestens um 5 Vol.-%, vorzugsweise mindestens um 7,5 Vol.-%, besonders bevorzugt mindestens um 10 Vol.-%, erhöht ist und/oder dass der Sauerstoffgehalt G(B2) in der zweiten Pyrolysezone B2 gegenüber dem Sauerstoffgehalt G(B1) in der ersten Pyrolysezone B1 um 3 Vol.-% bis 25 Vol.-%, insbesondere um 5 Vol.-% bis 20 Vol.-%, vorzugsweise um 7,5 Vol.-% bis 17,5 Vol.-%, besonders bevorzugt um 10 Vol.-% bis 15 Vol.-%, erhöht ist. Weiterhin ist es gemäß der vorliegenden Erfindung in diesem Zusammenhang bevorzugt, wenn die Temperatur T(B1) in der ersten Pyrolysezone B1 im Bereich von 375 °C bis 475 °C, insbesondere im Bereich von 390 °C bis 465 °C, vorzugsweise im Bereich von 415 °C bis 455 °C, besonders bevorzugt im Bereich von 430 °C bis 445 °C, eingestellt wird und die Temperatur T(B2) in der zweiten Pyrolysezone B2 im Bereich von 450°C bis 750 °C, insbesondere im Bereich von 480 °C bis 690 °C, vorzugsweise im Bereich von 510°C bis 675°C, besonders bevorzugt im Bereich von 515°C bis 650°C, eingestellt wird, jedoch mit der Maßgabe, dass die Temperatur T(B2) in der zweiten Pyrolysezone B2 gegenüber der Temperatur T(B1) in der ersten Pyrolysezone B1 mindestens um 25°C, insbesondere mindestens um 50°C, vorzugsweise mindestens um 75°C, besonders bevorzugt mindestens um 100 °C, noch mehr bevorzugt mindestens um 125°C, ganz besonders bevorzugt mindestens um 150°C, erhöht ist und/oder dass die Temperatur T(B2) in der zweiten Pyrolysezone B2 gegenüber der Temperatur T(B1) in der ersten Pyrolysezone B1 um 25°C bis 300°C, insbesondere um 50°C bis 250°C, vorzugsweise um 75 °C bis 200 °C, besonders bevorzugt um 100°C bis 175 °C, erhöht ist.

Im Rahmen der vorliegenden Erfindung ist es vorgesehen, dass der Sauerstoffgehalt G(B2) in der zweiten Pyrolysezone B2 gegenüber dem Sauerstoffgehalt G(B1) in der ersten Pyrolysezone B1 erhöht wird und die Temperatur T(B2) in der zweiten Pyrolysezone B2 gegenüber der Temperatur T(B1) in der ersten Pyrolysezone B1 erhöht wird. In diesem Zusammenhang ist es weiterhin vorgesehen, dass der Sauerstoffgehalt G(B1) in der ersten Pyrolysezone B1 im Bereich von 0,75 Vol.-% bis 6 Vol.-% eingestellt wird und der Sauerstoffgehalt G(B2) in der zweiten Pyrolysezone B2 im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-% bis 13 Vol.-% erhöht ist. Weiterhin ist es in diesem Zusammenhang erfindungsgemäß bevorzugt, wenn die Temperatur T(B1) in der ersten Pyrolysezone B1 im Bereich von 375 °C bis 475 °C eingestellt wird und die Temperatur T(B2) in der zweiten Pyrolysezone B2 im Bereich von 450°C bis 750°C eingestellt wird, jedoch mit der Maßgabe, dass die Temperatur T(B2) in der zweiten Pyrolysezone B2 gegenüber der Temperatur T(B1) in der ersten Pyrolysezone B1 um 50 °C bis 250 °C erhöht ist.

Wie bereits vorstehend erläutert, führt die Kombination aus erfindungsgemäßer Pyrolyseanlage und erfindungsgemäßer Verfahrensführung, insbesondere der kontrollierten Erhöhung des Sauerstoffgehalts G(B2) und/oder der Temperatur T(B2) in der zweiten Pyrolysezone B2 des indirekt beheizten Drehrohrofens mit Austrittsöffnungen, zu rezyklierten Kohlenstofffasern, welche zumindest im Wesentlichen keine Pyrolyserückstände mehr aufweisen und welche aufgrund einer teilweisen Oxidation der Oberfläche eine hydrophilere und rauhere Oberfläche im Vergleich zu Kohlenstoffprimärfasern oder herkömmlich rezyklierten Kohlenstofffasern aufweisen. Dies führt zu einer besseren Benetzbarkeit und Einarbeitbarkeit der aus der erfindungsgemäßen Verfahrensführung resultierenden rezyklierten Kohlenstofffasern in Kunststoffe im Vergleich zu Kohlenstoffprimärfasern oder herkömmlich rezyklierten Kohlenstofffasern. Gleichzeitig wird die Oxidation der Oberfläche erfindungsgemäß jedoch gezielt gesteuert derart, dass die mechanischen Eigenschaften, insbesondere die mechanische Stabilität, vorzugsweise die Steifigkeit und Zugfestigkeit, der rezyklierten Kohlenstofffasern im Vergleich zu denen von Kohlenstoffprimärfasern im Wesentlichen unverändert bleiben.

Im Allgemeinen kann die Verweildauer des zu rezyklierenden Gegenstands in weiten Bereichen variieren:

Insbesondere liegt die Verweildauer VD(B1) des zu rezyklierenden Gegenstands in der ersten Pyrolysezone B1 im Bereich von 0,1 bis 60 Minuten, insbesondere im Bereich 0,5 bis 30 Minuten, vorzugsweise im Bereich von 0,75 bis 15 Minuten, besonders bevorzugt im Bereich von 1 bis 10 Minuten, ganz besonders bevorzugt im Bereich von 1 bis 8 Minuten. Die Verweildauer in der ersten Pyrolysezone B1 ist insbesondere ausreichend, um zumindest im Wesentlichen eine vollständige Entfernung der Kunststoffmatrix zu gewährleisten; jedoch sollte die Verweildauer in der ersten Pyrolysezone B1 eine gewisse Zeit nicht überschreiten, um eine Oxidation der Kohlenstofffasern sowie übermäßig lange Prozesszeiten und somit unökonomische Prozessdauern zu vermeiden. Die Verweildauer VD(B1) kann beispielsweise durch die Beförderungsgeschwindigkeit der zu rezyklierenden Gegenstände innerhalb der ersten Pyrolysezone B1 und/oder durch die räumliche Länge bzw. Ausdehnung der ersten Pyrolysezone B1 eingestellt werden.

Weiterhin kann es erfindungsgemäß insbesondere vorgesehen sein, dass die Verweildauer VD(B2) des zu rezyklierenden Gegenstands in der zweiten Pyrolysezone B2 im Bereich von 0,01 bis 30 Minuten, insbesondere im Bereich von 0,1 bis 12 Minuten, vorzugsweise im Bereich von 0,5 bis 7,5 Minuten, besonders bevorzugt im Bereich von 1 bis 6 Minuten, ganz besonders bevorzugt im Bereich von 2 bis 5 Minuten, liegt. Erfindungsgemäß ist es von Vorteil, wenn die Verweildauer in der zweiten Pyrolysezone B2 derart gesteuert wird, dass einerseits eine übermäßige Oxidation der Oberfläche der rezyklierten Kohlenstofffasern bei erhöhten Temperaturen vermieden wird, andererseits jedoch etwaige Pyrolyserückstände zumindest im Wesentlichen entfernt werden. Da die Verweildauern insbesondere von der Temperatur und/oder dem Sauerstoffgehalt abhängig sind, sollte bei niedrigen Temperaturen und/oder niedrigen Sauerstoffgehalten eine erhöhte Verweildauer verwendet werden, während höhere Temperaturen und/oder höhere Sauerstoffgehalte in einer niedrigeren Verweildauer resultieren. Zudem ist die Verweildauer in den jeweiligen Pyrolysezonen B1 und B2 insbesondere auch abhängig von den Dimensionen bzw. Größenausdehnungen sowie der Zusammensetzung des zu rezyklierenden Gegenstands. Insbesondere können voluminöse Gegenstände oder harzgetränkte Gegenstände zu einer erhöhten Verweildauer in der ersten und/oder zweiten Pyrolysezone B1 und B2 führen, um zum einen eine vollständige Entfernung der Kunststoffmatrix sowie zum anderen eine vollständige Entfernung etwaiger Pyrolyserückstände auf der Oberfläche der rezyklierten Kohlenstofffasern zu gewährleisten. Die Verweildauer VD(B2) kann beispielsweise durch die Beförderungsgeschwindigkeit der zu rezyklierenden Gegenstände innerhalb der zweiten Pyrolysezone B2 und/oder durch die räumliche Länge bzw. Ausdehnung der zweiten Pyrolysezone B2 eingestellt werden.

In diesem Zusammenhang kann es erfindungsgemäß vorgesehen sein, dass das Verhältnis Q der Verweildauer VD(B1) des zu rezyklierenden Gegenstands in der ersten Pyrolysezone B1 zu der Verweildauer VD(B2) des zu rezyklierenden Gegenstands in der zweiten Pyrolysezone B2 mindestens 1,05, insbesondere mindestens 1,1, vorzugsweise mindestens 1,2, bevorzugt mindestens 1,3, besonders bevorzugt mindestens 1,5, und/oder höchstens 4, insbesondere höchstens 3,5, vorzugsweise höchstens 3, bevorzugt höchstens 2,75, besonders bevorzugt höchstens 2,5, beträgt. Höhere Verweildauern in der ersten Pyrolysezone B1 im Vergleich zur zweiten Pyrolysezone B2 können insbesondere dadurch erreicht werden, dass die Pyrolysezone B1 eine größere räumliche Länge bzw. Ausdehnung aufweist als die Pyrolysezone B2 und/oder dass die Beförderungsgeschwindigkeit der zu rezyklierenden Gegenstände in der ersten Pyrolysezone B1 größer ist als in der zweiten Pyrolysezone B2.

In erfindungsgemäß bevorzugter Weise kann das Verhältnis Q der Verweildauer VD(B1) des zu rezyklierenden Gegenstands in der ersten Pyrolysezone B1 zu der Verweildauer VD(B2) des zu rezyklierenden Gegenstands in der zweiten Pyrolysezone B2 der folgenden Gleichung genügen:
1,05 ≤ Q ≤ 4, insbesondere 1,1 ≤ Q ≤ 3,5, vorzugsweise 1,2 ≤ Q ≤ 3,
bevorzugt 1,2 ≤ Q ≤ 2,75, besonders bevorzugt 1,2 ≤ Q ≤ 2,5

Darüber hinaus kann es erfindungsgemäß vorgesehen sein, dass die Verweildauer des zu rezyklierenden Gegenstands in der Aufwärmzone A im Bereich von 0,05 bis 20 Minuten, insbesondere im Bereich von 0,1 bis 15 Minuten, vorzugsweise im Bereich von 0,5 bis 10 Minuten, besonders bevorzugt im Bereich von 1 bis 5 Minuten, ganz besonders bevorzugt im Bereich von 1,5 bis 4 Minuten, liegt. In diesem Zusammenhang kann es erfindungsgemäß vorgesehen sein, dass die Temperatur in der Aufwärmzone A im Bereich von 50 °C bis 350 °C, insbesondere 100 °C bis 325 °C, vorzugsweise 150 °C bis 300 °C, besonders bevorzugt 205 °C bis 295 °C, liegt. Die Verwendung einer Aufwärmzone A ist von Vorteil, da das zu rezyklierende Material bereits auf eine gewisse Temperatur vorgewärmt wird und somit in der ersten Pyrolysezone B1 sehr schnell eine gleichmäßige Temperatur des zu rezyklierenden Gegenstands erreicht wird. Dies gewährleistet eine gleichmäßige Entfernung der Kunststoffmatrix bei kürzeren Verweildauern und somit auch eine gleichbleibende Qualität der rezyklierten Kohlenstofffasern, da eine ungleichmäßige Entfernung der Kunststoffmatrix infolge von starken Temperaturgradienten vermieden wird. Weiterhin können durch die Verwendung einer Aufwärmzone A die Prozesszeiten des erfindungsgemäßen Verfahrens signifikant reduziert werden, da durch die Aufwärmung des zu rezyklierenden Gegenstands auf eine gewisse Temperatur kürzere Verweilzeiten in der ersten Pyrolysezone B1 ermöglicht werden.

Zudem kann erfindungsgemäß die Verweildauer der rezyklierten Kohlenstofffasern in der Abkühlzone C im Bereich von 0,1 bis 30 Minuten, insbesondere im Bereich von 0,5 bis 25 Minuten, vorzugsweise im Bereich von 1 bis 20 Minuten, besonders bevorzugt im Bereich von 5 bis 18 Minuten, ganz besonders bevorzugt im Bereich von 7,5 bis 15 Minuten, liegen. Insbesondere kann in diesem Zusammenhang die Temperatur in der Abkühlzone C im Bereich von 10 °C bis 350 °C, insbesondere 20 °C bis 250 °C, vorzugsweise 25 °C bis 200 °C, besonders bevorzugt 30 °C bis 150 °C, liegen. Die Abkühlzone C dient zur Vorkühlung der rezyklierten Kohlenstofffasern, so dass eine schnelle nachfolgende Abkühlung der rezyklierten Kohlenstofffasern in der Kühlsektion 16 und somit eine schnelle Weiterverarbeitung, insbesondere Zerkleinerung, Verpackung und/oder Lagerung, gewährleistet ist. Die Abkühlzone C kann beispielsweise durch Luft gekühlt werden, welche in die Abkühlzone C eingeblasen wird.

Was das erfindungsgemäße Verfahren weiterhin anbelangt, so kann das erfindungsgemäße Verfahren grundsätzlich kontinuierlich oder diskontinuierlich, bevorzugt kontinuierlich, durchgeführt werden. Die kontinuierliche Durchführung des erfindungsgemäßen Verfahrens erlaubt einen energiesparenden und somit ökonomischen Prozess, da das Aufrechterhalten einer kontinuierlichen Temperatur wirtschaftlicher ist. Weiterhin werden durch eine kontinuierliche Verfahrensführung Wärmeschwankungen in den Pyrolysezonen B1 und B2, welche einen nachteiligen Einfluss auf die Qualität der rezyklierten Kohlenstofffasern sowie auf die Lebenszeit der Pyrolysevorrichtung P, insbesondere des Pyrolyseofens 1 mit dem indirekt beheizten Drehrohrofen 11, haben könnten, vermieden. Zudem erlaubt die kontinuierliche Verfahrensführung eine direkte Verarbeitung der zu rezyklierenden Gegenstände ohne aufwendige Lagerung des zu rezyklierenden Materials.

Weiterhin kann es gemäß der vorliegenden Erfindung vorgesehen sein, dass die Pyrolysevorrichtung P, welche insbesondere zwischen der ersten Pyrolysezone B1 und der zweiten Pyrolysezone B2 angeordnet ist, mindestens eine weitere Pyrolysezone, insbesondere mindestens zwei weitere Pyrolysezonen, bevorzugt mindestens drei weitere Pyrolysezonen, aufweist. In diesem Zusammenhang kann es erfindungsgemäß auch vorgesehen sein, dass die Pyrolysevorrichtung P, insbesondere zwischen der ersten Pyrolysezone B1 und der zweiten Pyrolysezone B2 angeordnet, 1 bis 10 weitere Pyrolysezonen, insbesondere 2 bis 8 weitere Pyrolysezonen, vorzugsweise 3 bis 7 weitere Pyrolysezonen, bevorzugt 4 bis 6 weitere Pyrolysezonen, aufweist.

Im Zusammenhang mit der Erfindung ist es bevorzugt, wenn eine oder mehrere Zonen der Pyrolysevorrichtung P, vorzugsweise alle Zonen der Pyrolysevorrichtung, physikalisch nicht getrennt sind und/oder ineinander übergehen oder aber wobei eine oder mehrere Zonen der Pyrolysevorrichtung P, insbesondere die erste Pyrolysezone B1 und die zweite Pyrolysezone B2, physikalisch getrennt sind, insbesondere durch eine oder mehrere Schleusen.

Weiterhin kann es im Rahmen der vorliegenden Erfindung vorgesehen sein, dass der zu behandelnde und/oder zu rezyklierende Gegenstand vor der Aufwärmzone A einer Vorbehandlung, insbesondere einer Zerkleinerung, unterzogen wird. Es kann von Vorteil sein, wenn der zu rezyklierende Gegenstand vor der Aufwärmzone A einer Zerkleinerung unterzogen wird, um die maximale Größe des zu rezyklierenden Gegenstands den Dimensionen der Öffnung der Eintragstation 3 der Pyrolyseanlage anzupassen. Insbesondere hängt somit die Größe des eingesetzten zu rezyklierenden Gegenstands von den Dimensionen der Eintragstation 3 der Pyrolyseanlage ab. Es kann jedoch auch vorgesehen sein, dass der zu rezyklierende Gegenstand auf eine geringere Größe zerkleinert wird, als sie die verwendete Eintragstation 3 der Pyrolyseanlage erfordern würde.

In diesem Zusammenhang kann es weiterhin vorgesehen sein, dass die aus dem Verfahren und/oder nach der der Abkühlzone C folgenden Kühlsektion resultierenden rezyklierten Fasern einer Nachbehandlung, insbesondere einer Zerkleinerung, vorzugsweise mittels Schneiden, Hacken, Mahlen und/oder Häckseln, und/oder insbesondere einem Inkontaktbringen mit mindestens einem Behandlungsmittel, vorzugsweise ausgewählt aus Schlichtmitteln, Dispergiermitteln, Entschäumern und Bindemitteln sowie deren Mischungen oder Kombinationen, unterzogen werden. Die Nachbehandlung, insbesondere Zerkleinerung, der rezyklierten Kohlenstofffasern kann in hierfür üblichen, dem Fachmann an sich bekannten Schneidevorrichtungen erfolgen, wobei das Zerkleinern grundsätzlich mittels Nass- oder Trockenverfahren durchgeführt werden kann. Durch mehrfache Zerkleinerung, insbesondere mehrfaches Hacken, können die Faserlängen der rezyklierten Kohlenstofffasern auf die gewünschte Faserlänge eingestellt werden. In diesem Zusammenhang kann es auch vorgesehen sein, dass zur Herstellung von gemahlenen rezyklierten Kohlenstofffasern zuvor gehackte Kohlenstofffasern verwendet werden; die gemahlenen Kohlenstofffasern können durch Vermahlen der gehackten Kohlenstofffasern, insbesondere unter Verwendung von Mühlen, wie Hammermühlen, Pralltellermühlen, Siebkorbmühlen oder dergleichen, erhalten werden. Weiterhin können die rezyklierten Kohlenstofffasern, insbesondere die Oberfläche der rezyklierten Kohlenstofffasern, mit einem Behandlungsmittel versetzt werden, um die Eigenschaften der rezyklierten Kohlenstofffasern an die Eigenschaften der Matrix anzupassen und somit deren Einarbeitbarkeit in Kunststoffe, Baustoffe oder zementäre Systeme zu verbessern.

Für weitergehende Ausführungen zu diesem erfindungsgemäßen Aspekt kann auf die voranstehenden Ausführungen zu den übrigen Erfindungsaspekten verwiesen werden, welche in Bezug auf diesen erfindungsgemäßen Aspekt entsprechend gelten.

Ein wiederum weiterer Gegenstand der vorliegenden Erfindung - gemäß einem **vierten** Aspekt der vorliegenden Erfindung - sind rezyklierte Kohlenstofffasern, welche erhältlich sind durch das erfindungsgemäße Verfahren, wobei die rezyklierten Kohlenstofffasern:
- eine Benetzbarkeit gegenüber Wasser, bestimmt als tensiometrisch gemessener Kontaktwinkel gemäß der Wilhelmy-Methode mittels Einzelfasermessung bei (23 ± 0,5) °C, von höchstens 75° aufweisen,
- einen Anteil an Pyrolyserückständen von weniger als 0,5 Gew.-%, bezogen auf die rezyklierten Kohlenstofffasern und gravimetrisch bestimmt, aufweisen,
- an ihrer Oberfläche sauerstoffhaltige funktionelle Gruppen, nämlich polare und/oder hydrophile Gruppen, ausgewählt aus Phenol-, Carboxyl-, Carbonyl-, Aldehyd-, Keto-, Hydroxy- und/oder Oxogruppen, aufweisen, bestimmt mittels Elektronenspektroskopie zur chemischen Analyse (ESCA), vorzugsweise mittels Röntgenphotoelektronenspektroskopie (XPS), und
- an ihrer Oberfläche Rillen, Riefen, Vertiefungen, Furchen, Kratzer oder Krater aufweisen.

Die Kombination aus erfindungsgemäßer Pyrolyseanlage und erfindungsgemäßer Verfahrensführung schlägt sich unmittelbar in den resultierenden rezyklierten Kohlenstofffasern nieder. Aufgrund des eingesetzten Pyrolyseofens in Form eines indirekt beheizten Drehrohrofens mit Austrittsöffnungen sowie der erfindungsgemäßen Verfahrensführung, insbesondere der teilweisen Oxidation der Oberfläche der pyrolytisch hergestellten rezyklierten Kohlenstofffasern, weisen die aus der Kombination von erfindungsgemäßer Pyrolyseanlage und erfindungsgemäßer Verfahrensführung resultierenden rezyklierten Kohlenstofffasern im Wesentlichen keine Pyrolyserückstände sowie eine rauhere Oberfläche, insbesondere auch Rillen, Riefen, Furchen, Vertiefungen oder dergleichen, auf. Weiterhin ist die Oberfläche der erfindungsgemäßen rezyklierten Kohlenstofffasern aufgrund der teilweisen Oxidation hydrophiler als die Oberfläche von Kohlenstoffprimärfasern oder von herkömmlich rezyklierten Kohlenstofffasern. Die rauhere und hydrophilere Oberfläche der erfindungsgemäßen rezyklierten Kohlenstofffasern führt überraschenderweise zu einer verbesserten Benetzbarkeit und damit auch zu einer verbesserten Einarbeitbarkeit in Kunststoffe im Vergleich zu Kohlenstoffprimärfasern oder herkömmlich rezyklierten Kohlenstofffasern.

Gemäß der vorliegenden Erfindung weisen die rezyklierten Kohlenstofffasern eine Benetzbarkeit gegenüber Wasser, bestimmt als tensiometrisch gemessener Kontaktwinkel gemäß der Wilhelmy-Methode mittels Einzelfasermessung bei (23 ± 0,5) °C, von höchstens 75°, insbesondere höchstens 73°, vorzugsweise höchstens 70°, besonders bevorzugt höchstens 68°, noch mehr bevorzugt höchstens 65°, ganz besonders bevorzugt höchstens 60°, auf.

In diesem Zusammenhang kann es insbesondere vorgesehen sein, dass die rezyklierten Kohlenstofffasern eine Benetzbarkeit gegenüber Wasser, bestimmt als tensiometrisch gemessener Kontaktwinkel gemäß der Wilhelmy-Methode mittels Einzelfasermessung bei (23 ± 0,5) °C, im Bereich von 30° bis 75°, insbesondere 35° bis 73°, vorzugsweise 38° bis 70°, besonders bevorzugt 40° bis 68°, noch mehr bevorzugt 45° und 65°, ganz besonders bevorzugt 50° bis 60°, aufweisen.

Die Bestimmung der Benetzbarkeit der rezyklierten Kohlenstofffasern erfolgt mittels eines Tensiometers gemäß der Wilhelmy-Methode als Einzelfasermessung bei (23 ± 0,5) °C gegenüber Wasser. Bezüglich der Wilhelmy-Methode kann insbesondere auf Abe K., Onishi S., Akijama H., Takiguchi H., Tamada K., Journal of the Surface Science Society of Japan, 2000, 21, Seiten 643 bis 650, sowie auf Baskom W. D., The Wetting Behavior of Fibers, in: Schrader M., Loeb G. Modern Approaches to Wettability: Theory and Applications; Plenum Press, New York 1992, Seiten 359 bis 373 verwiesen werden. Zudem wird für eine detaillierte Beschreibung der Kontaktwinkelmessungen gemäß der Wilhelmy-Methode auch auf die nachfolgenden Ausführungsbeispiele zu der vorliegenden Erfindung verwiesen.

Im Zusammenhang mit der Erfindung ist es bevorzugt, wenn die rezyklierten Kohlenstofffasern einen Anteil an Pyrolyserückständen (Verkokungsrückständen) von weniger als 5 Gew.-%, insbesondere von weniger als 4 Gew.-%, bevorzugt von weniger als 3 Gew.-%, weiter bevorzugt von weniger als 2 Gew.-%, noch mehr bevorzugt von weniger als 1 Gew.-%, besonders bevorzugt von weniger als 0,9 Gew.-%, am meisten bevorzugt von weniger als 0,5 Gew.-%, bezogen auf die rezyklierten Kohlenstofffasern, aufweisen.

Insbesondere kann es erfindungsgemäß vorgesehen sein, dass die rezyklierten Kohlenstofffasern einen Anteil an Pyrolyserückständen (Verkokungsrückständen) im Bereich von 0,001 bis weniger als 0,5 Gew.-%, insbesondere im Bereich von 0,01 bis weniger als 0,5 Gew.-%, vorzugsweise im Bereich von 0,05 bis weniger als 0,5 Gew.-%, bevorzugt im Bereich von 0,1 bis weniger als 0,5 Gew.-%, bezogen auf die rezyklierten Kohlenstofffasern, aufweisen, insbesondere gravimetrisch, vorzugsweise mittels Thermogravimetrie, bestimmt. Ein hoher Anteil an Pyrolyserückständen an der Oberfläche der rezyklierten Kohlenstofffasern würde dagegen einerseits zu einer verschlechterten Einarbeitbarkeit in Kunststoffe, Baustoffe oder zementäre Systeme und andererseits zu einer signifikanten Reduzierung der elektrischen Eigenschaften der rezyklierten Kohlenstofffasern führen. Aus diesem Grund ist es erfindungsgemäß vorgesehen, dass die rezyklierten Kohlenstofffasern einen äußerst geringen Anteil an Pyrolyserückständen aufweisen, um eine hervorragende Einarbeitbarkeit und hervorragende elektrische Eigenschaften zu erhalten. Die Pyrolyserückstände können mittels gravimetrischer Analyse, insbesondere mittels thermogravimetrischer Analyse (TGA), bestimmt werden, wobei die thermogravimetrische Analyse (TGA) bevorzugt ist. Für eine detaillierte Beschreibung der gravimetrischen und der thermogravimetrischen Analyse (TGA) kann auf die erfindungsgemäßen Ausführungsbeispiele verwiesen werden.

Darüber hinaus ist es im Rahmen der vorliegenden Erfindung vorgesehen, dass die rezyklierten Kohlenstofffasern an ihrer Oberfläche sauerstoffhaltige funktionelle Gruppen aufweisen, insbesondere polare und/oder hydrophile Gruppen, insbesondere ausgewählt aus Phenol-, Carboxyl-, Carbonyl-, Aldehyd-, Keto-, Hydroxy- und/oder Oxogruppen, insbesondere bestimmt mittels Elektronenspektroskopie zur chemischen Analyse (ESCA), vorzugsweise mittels Röntgenphotoelektronenspektroskopie (XPS). Die sauerstoffhaltigen funktionellen Gruppen an der Oberfläche der rezyklierten Kohlenstofffasern, welche aus der Kombination von erfindungsgemäßer Pyrolyseanlage und erfindungsgemäßer Verfahrensführung resultieren, führen zu einer hydrophileren Oberfläche der rezyklierten Kohlenstofffasern, welche folglich eine bessere Benetzbarkeit im Vergleich zu hydrophoberen Kohlenstoffprimärfasern oder herkömmlich rezyklierten Kohlenstofffasern aufweisen. Die sauerstoffhaltigen funktionellen Gruppen an der Oberfläche der rezyklierten Kunststofffasern können insbesondere mittels Elektronenspektroskopie zur chemischen Analyse (ESCA), vorzugsweise mittels Röntgenphotoelektronenspektroskopie (XPS), bestimmt werden. Für weitergehende Informationen bezüglich der Durchführung von ESCA- und XPS-Messungen kann auf Levsen K., Physikalische Methoden der Chemie: ESCA, Chemie in unserer Zeit, 10, 1976, Seiten 48 bis 53, sowie auf die erfindungsgemäßen Ausführungsbeispiele verwiesen werden.

Weiterhin ist es vorgesehen, dass die rezyklierten Kohlenstofffasern an ihrer Oberfläche Rillen, Riefen, Vertiefungen, Furchen, Kratzer, Krater oder dergleichen aufweisen. Die Kombination aus erfindungsgemäßer Pyrolyseanlage und erfindungsgemäßer Verfahrensführung resultiert in rezyklierten Kohlenstofffasern, welche im Gegensatz zu Kohlenstoffprimärfasern keine glatte Oberfläche aufweisen. Dies ist insbesondere durch die erfindungsgemäße Verfahrensführung bedingt, insbesondere durch die Oxidation der Oberfläche der rezyklierten Kohlenstofffasern während der Entfernung etwaiger Pyrolyserückstände. Die rauhere Oberfläche der rezyklierten Kohlenstofffasern ist - neben der Anwesenheit der hydrophilen Gruppen - ein Grund für die gute Benetzbarkeit der rezyklierten Kohlenstofffasern, welche durch die Kombination aus erfindungsgemäßer Pyrolyseanlage und erfindungsgemäßer Verfahrensführung erhalten werden.

Im Allgemeinen kann die Faserlänge der rezyklierten Kohlenstofffasern im unzerkleinerten Zustand in weiten Bereichen variieren, Insbesondere weisen die rezyklierten Kohlenstofffasern im unzerkleinerten Zustand eine Faserlänge im Bereich von 0,01 bis 5 m, insbesondere im Bereich von 0,05 bis 3 m, vorzugsweise im Bereich von 0,1 bis 2 m, bevorzugt im Bereich von 0,2 bis 1 m, auf. Die Dimensionen der durch das erfindungsgemäße Verfahren erhaltenen rezyklierten Kohlenstofffasern sind insbesondere abhängig von der Größe der zur Rezyklierung verwendeten Eintragstation 3 der Pyrolyseanlage und von etwaigen vor der Rezyklierung durchgeführten Zerkleinerungsschritten des zu rezyklierenden Gegenstands. Was die Bestimmung der Faserlänge und des Faserdurchmessers im Allgemeinen anbelangt, so kann diese anhand von dem Fachmann an sich wohlbekannten Verfahren vorgenommen werden. Insbesondere können die Faserlänge und der Faserdurchmesser im Allgemeinen mit Bestimmungsverfahren auf Basis von Lichtbeugung, insbesondere Röntgenbeugung und/oder Laserdiffraktometrie, aber auch lichtmikroskopisch, elektronenmikroskopisch oder dergleichen bestimmt werden. Darüber hinaus kann die Bestimmung der Faserlängen und Faserdurchmesser im Millimeterbereich auch mittels Siebanalysen gemäß DIN 66165 erfolgen. Insbesondere beziehen sich die zuvor angeführten Größenangaben auf eine zumindest im Wesentlichen faserförmige Grundstruktur. Weiterhin wird auf die nachfolgenden Ausführungen zur Größenbestimmung verwiesen.

Zudem kann es vorgesehen sein, dass die rezyklierten Kohlenstofffasern eine Zugfestigkeit im Bereich von 1.000 bis 6.000 MPa, insbesondere im Bereich von 1.500 bis 5.000 MPa, vorzugsweise im Bereich von 2.000 bis 4.000 MPa, bevorzugt im Bereich von 2.500 bis 3.500 MPa, aufweisen. Die Bestimmung der Zugfestigkeit kann insbesondere nach EN ISO 527-1 erfolgen.

Weiterhin kann es ihm Rahmen der vorliegenden Erfindung vorgesehen sein, dass die rezyklierten Kohlenstofffasern einen Elastizitätsmodul im Bereich von 20 bis 1.000 GPa, insbesondere im Bereich von 50 bis 800 GPa, vorzugsweise im Bereich von 75 bis 600 GPa, bevorzugt im Bereich von 100 bis 400 GPa, weiter bevorzugt im Bereich von 150 bis 300 GPa, aufweisen. Der Elastizitätsmodul kann insbesondere nach DIN EN 61 bestimmt werden.

Darüber hinaus können die rezyklierten Kohlenstofffasern einen mittleren Faserdurchmesser im Bereich von 0,1 bis 100 µm, insbesondere im Bereich von 1 bis 50 µm, vorzugsweise im Bereich von 2 bis 25 µm, bevorzugt im Bereich von 3 bis 15 µm, besonders bevorzugt im Bereich von 4 bis 10 µm, aufweisen. Die Bestimmung des mittleren Faserdurchmessers kann beispielsweise durch lichtmikroskopische und/oder elektronenmikroskopische Bestimmungsmethoden - wie voranstehend ausgeführt - ermittelt werden.

Gemäß einer erfindungsgemäß bevorzugten Ausführungsform können die rezyklierten Kohlenstofffasern auf ihrer Oberfläche mindestens ein Behandlungsmittel enthalten, insbesondere ausgewählt aus der Gruppe von (i) duroplastischen Kunststoffen, insbesondere Epoxidharzen; (ii) thermoplastischen Kunststoffen, insbesondere Polyolefinharzen; (iii) Dispergiermitteln, insbesondere Fettaminethoxylaten und/oder Dialkylenglykolen; (iv) Entschäumern, insbesondere Polydialkylsiloxanen; sowie deren Mischungen und Kombinationen. Zur Einarbeitung der rezyklierten Kohlenstofffasern, welche aus der Kombination von erfindungsgemäßer Pyrolyseanlage und erfindungsgemäßer Verfahrensführung erhältlich sind, können die rezyklierten Kohlenstofffasern, insbesondere auf ihrer Oberfläche, mit mindestens einem Behandlungsmittel modifiziert werden, um die Oberflächeneigenschaften und somit die Einarbeitbarkeit der rezyklierten Kohlenstofffasern in Kunststoffe, Baustoffe sowie zementäre Systeme zu verbessern bzw. die Oberflächeneigenschaften der erfindungsgemäßen rezyklierten Kohlenstofffasern an die entsprechende Matrix anzupassen. Die Einstellung der Oberflächeneigenschaften auf die entsprechende Matrix führt zu einer homogenen Einarbeitung der rezyklierten Kohlenstofffasern und somit zu einer effektiven Verbesserung bzw. Verstärkung der jeweiligen Matrix.

Zudem kann es im Rahmen der vorliegenden Erfindung vorgesehen sein, dass die rezyklierten Kohlenstofffasern in zerkleinerter Form, insbesondere in gehackter und/oder doppelt gehackter und/oder gemahlener Form, vorliegen. Wie bereits zuvor ausgeführt, kann das Hacken der rezyklierten Kohlenstofffasern in einer hierfür üblichen, dem Fachmann an sich bekannten Schneidevorrichtung erfolgen, wobei das Zerkleinern grundsätzlich mittels Nass- oder Trockenverfahren durchgeführt werden kann. Die Faserlängen der rezyklierten Kunststofffasern können durch mehrfache Zerkleinerung bzw. mehrfaches Hacken entsprechend eingestellt werden. Weiterhin kann es vorgesehen sein, dass die gemahlenen rezyklierten Kunststofffasern aus zuvor gehackten rezyklierten Kohlenstofffasern beispielsweise unter Verwendung von Mühlen, wie Hammermühlen, Pralltellermühlen oder Siebkorbmühlen oder dergleichen, erhalten werden.

In diesem Zusammenhang kann es weiterhin vorgesehen sein, dass die zerkleinerten rezyklierten Kohlenstofffasern eine mittlere Faserlänge im Bereich von 0,01 bis 200 mm, insbesondere im Bereich von 0,1 bis 150 mm, vorzugsweise im Bereich von 0,2 bis 100 mm, bevorzugt im Bereich von 0,5 bis 90 mm, besonders bevorzugt im Bereich von 1 bis 80 mm, ganz besonders bevorzugt im Bereich von 2 bis 70 mm, aufweisen. Die Bestimmung der Faserlänge ist insbesondere nach den voranstehend erläuterten Messmethoden möglich. Weiterhin bezieht sich die vorgenannte Faserlänge auf einfach zerkleinerte rezyklierte Kohlenstofffasern, welche eine größere Faserlänge als mehrfach zerkleinerte rezyklierte Kohlenstofffasern aufweisen. Dies ist jedoch für den Fachmann selbstverständlich.

Zudem kann es vorgesehen sein, dass die zerkleinerten rezyklierten Kohlenstofffasern eine mittlere Faserlänge im Bereich von 0,1 bis 70 mm, insbesondere im Bereich von 0,5 bis 60 mm, vorzugsweise im Bereich von 1 bis 50 mm, bevorzugt im Bereich von 2 bis 40 mm, besonders bevorzugt im Bereich von 3 bis 30 mm, ganz besonders bevorzugt im Bereich von 5 bis 20 mm, aufweisen. Die mittlere Faserlänge der rezyklierten Kohlenstofffasern kann, wie vorstehend ausgeführt, ermittelt werden. In diesem Zusammenhang bezieht sich die vorstehend angegebene Faserlänge auf doppelt zerkleinerte rezyklierte Kohlenstofffasern, welche eine geringere Faserlänge als einfach zerkleinerte rezyklierte Kohlenstofffasern aufweisen.

Weiterhin kann es vorgesehen sein, dass die zerkleinerten rezyklierten Kohlenstofffasern eine mittlere Faserlänge im Bereich von 0,1 bis 1.000 µm, insbesondere im Bereich von 1 bis 900 µm, vorzugsweise im Bereich von 5 bis 700 µm, bevorzugt im Bereich von 10 bis 500 µm, besonders bevorzugt im Bereich von 25 bis 400 µm, ganz besonders bevorzugt im Bereich von 50 bis 350 µm, noch mehr bevorzugt im Bereich von 75 bis 250 µm, aufweisen. Die Bestimmung der mittleren Faserlänge der vorstehend genannten rezyklierten Kohlenstofffasern ist mit den oben angeführten Bestimmungsmethoden möglich. In diesem Zusammenhang bezieht sich die vorstehend angegebene mittlere Faserlänge der rezyklierten Kohlenstofffasern auf gemahlene rezyklierte Kohlenstofffasern.

Was die zerkleinerten rezyklierten Kohlenstofffasern weiterhin anbelangt, so können die zerkleinerten rezyklierten Kohlenstofffasern eine Faserdichte im Bereich von 200 bis 5.000 kg/m³, insbesondere im Bereich von 300 bis 4.500 kg/m³, vorzugsweise im Bereich von 500 bis 4.000 kg/m³, bevorzugt im Bereich von 700 bis 3.500 kg/m³, besonders bevorzugt im Bereich von 1.000 bis 3.000 kg/m³, ganz besonders bevorzugt im Bereich von 1.200 bis 2.500 kg/m³, noch mehr bevorzugt im Bereich von 1.500 bis 2.200 kg/m³, aufweisen. Die Bestimmung der Faserdichte der rezyklierten Kohlenstofffasern ist insbesondere mittels DIN 29971 möglich.

Für weitergehende Ausführungen zu diesem erfindungsgemäßen Aspekt kann auf die voranstehenden Ausführungen zu den übrigen Erfindungsaspekten verwiesen werden, welche in Bezug auf diesen erfindungsgemäßen Aspekt entsprechend gelten.

Weiterhin ist ein weiterer Gegenstand der vorliegenden Erfindung - gemäß einem **fünften** Aspekt der vorliegenden Erfindung - die Verwendung der erfindungsgemäßen rezyklierten Kohlenstofffasern als Additiv, insbesondere als Additiv für Kunststoffe, Baustoffe oder zementäre Systeme oder zur Herstellung von kohlenstofffaserhaltigen Kunststoffen oder zur Inkorporierung in Kunststoffen, insbesondere zur Compoundierung, oder zur Herstellung von Kohlenstofffasern enthaltenden Formkörpern (z. B. Bauteilen), Formen und Flächenmaterialien (z. B. Vliesstoffen).

Im Rahmen der vorliegenden Erfindung können bevorzugt thermoplastische Kunststoffe, thermoplastische Kunststoffmischungen sowie duroplastische Kunststoffe eingesetzt werden. Insbesondere kann der Kunststoff ausgewählt sein aus der Gruppe von Polycarbonatharzen, Polyamidharzen, gesättigten Polyesterharzen, Polyurethanharzen, Polyacetalharzen, Polysulfonharzen, Polyethersulfonharzen (PES), Polyphenylensulfidharzen (PPS), Polystyrolharzen (PS), Polyolefinharzen, Polyvinylchloridharzen, Polyetheretherketonharzen (PEEK), Polyetherimidharzen (PEI), Polyarylenoxidharzen, Polyamidimidharzen, Polyacrylatharzen, Polyimidharzen sowie deren Mischungen und Kombinationen.

In diesem Zusammenhang kann es insbesondere vorgesehen sein, dass die erfindungsgemäßen rezyklierten Kohlenstofffasern zur Compoundierung, insbesondere zur Inkorporierung in Kunststoffe, vorgesehen sind. Insbesondere kann durch die Inkorporierung der erfindungsgemäßen rezyklierten Kohlenstofffasern eine Veredelung der Kunststoffe und/oder insbesondere eine Verbesserung der mechanischen Eigenschaften erreicht werden.

Für weitergehende Ausführungen zu diesem erfindungsgemäßen Aspekt kann auf die voranstehenden Ausführungen zu den übrigen Erfindungsaspekten verwiesen werden, welche in Bezug auf diesen erfindungsgemäßen Aspekt entsprechend gelten.

Des Weiteren sind ein weiterer Gegenstand der vorliegenden Erfindung - gemäß einem **sechsten** Aspekt der vorliegenden Erfindung - Kunststoffe, Baustoffe oder zementäre Systeme, welche rezyklierte Kohlenstofffasern gemäß der vorliegenden Erfindung, wie sie zuvor eingehend beschrieben worden sind, umfassen bzw. welche unter Verwendung von nach dem erfindungsgemäßen Verfahren erhältlichen rezyklierten Kohlenstofffasern, wie sie zuvor eingehend beschrieben worden sind, hergestellt sind. Für weitergehende Ausführungen zu diesem erfindungsgemäßen Aspekt kann auf die voranstehenden Ausführungen zu den übrigen Erfindungsaspekten verwiesen werden, welche in Bezug auf diesen erfindungsgemäßen Aspekt entsprechend gelten.

Schließlich sind ein wiederum weiterer Gegenstand der vorliegenden Erfindung - gemäß einem **siebten** Aspekt der vorliegenden Erfindung - Formkörper (z. B. Bauteile), Formen und Flächenmaterialien (z. B. Vliesstoffe), insbesondere in Form von Kompositmaterialien oder Compounds, welche rezyklierte Kohlenstofffasern gemäß der vorliegenden Erfindung, wie sie zuvor eingehend beschrieben worden sind, umfassen bzw. welche unter Verwendung von nach dem erfindungsgemäßen Verfahren erhältlichen rezyklierten Kohlenstofffasern, wie sie zuvor eingehend beschrieben worden sind, hergestellt sind. Für weitergehende Ausführungen zu diesem erfindungsgemäßen Aspekt kann auf die voranstehenden Ausführungen zu den übrigen Erfindungsaspekten verwiesen werden, welche in Bezug auf diesen erfindungsgemäßen Aspekt entsprechend gelten.

Wie zuvor geschildert, ist die vorliegende Erfindung mit einer Vielzahl von Vorteilen und Besonderheiten verbunden, von denen - in nichtbeschränkender Weise - nachfolgend einige Aspekte herausgestellt werden sollen:

Durch den Einsatz der erfindungsgemäßen Pyrolyseanlage, welche einen indirekt beheizten Drehrohrofen mit Austrittsöffnungen umfasst, wird eine gleichmäßige Mischung, Umwälzung und Durchwärmung des CFK-Materials im Pyrolyseofen unter gleichzeitiger Abführung der Pyrolysegase ermöglicht. Dies resultiert in optimalen Pyrolysebedingungen und somit in einer selektiven Entfernung der Kunststoffmatrix an jedem beliebigen Ort des Drehrohrofens, so dass im Wesentlichen keine Pyrolyse(koks)rückstände auf der Oberfläche der rezyklierten Kohlenstofffasern nach der vollständigen Entfernung der Kunststoffmatrix zurückbleiben.

Weiterhin wird durch die Austrittsöffnungen des indirekt beheizten Drehrohrofens der erfindungsgemäßen Pyrolyseanlage eine Steuerung der Atmosphäre, insbesondere des Sauerstoffgehalts, innerhalb des Drehrohrofens ermöglicht. In Kombination mit der indirekten Beheizung des Drehrohrofens, durch welchen Temperaturschwankungen vermieden werden, ist eine selektive und im Wesentlichen vollständige Entfernung der Kunststoffmatrix möglich, ohne dass die rezyklierten Kohlenstofffasern übermäßig stark beschädigt, insbesondere übermäßig stark oxidiert, werden, da dies in signifikant reduzierten mechanischen und elektrischen Eigenschaften der rezyklierten Kohlenstofffasern resultieren würde.

Die Kombination aus gleichmäßiger Erwärmung und Mischung des CFK-Materials mit der gezielten Steuerung des Sauerstoffgehalts und/oder der Temperatur, welche durch Verwendung der erfindungsgemäßen Pyrolyseanlage und der erfindungsgemäßen Verfahrensführung ermöglicht wird, führt zu rezyklierten Kohlenstofffasern, welche zum einen zumindest im Wesentlichen keine Pyrolyse- bzw. Verkokungsrückstände an deren Oberfläche aufweisen. Zum anderen resultiert die obige Kombination in einer teilweisen Oxidation der Oberfläche der rezyklierten Kohlenstofffasern, d. h. in einer rauheren und bindungsaffinen, insbesondere hydrophilen Oberfläche und in einer Erhöhung sauerstoffhaltiger Gruppen an der Oberfläche der resultierenden rezyklierten Kohlenstofffasern, wie Hydroxy-, Aldehyd-, Carboxylgruppen etc. Die teilweise Oxidation der Oberfläche der aus der Kombination von erfindungsgemäßer Pyrolyseanlage und erfindungsgemäßer Verfahrensführung resultierenden rezyklierten Kohlenstofffasern führt aufgrund der rauheren und funktionalisierten, insbesondere hydrophileren, Oberfläche der rezyklierten Kohlenstofffasern zu einer erhöhten Benetzbarkeit und somit auch zu einer verbesserten Einarbeitbarkeit in Kunststoffe im Vergleich zu Kohlenstoffprimärfasern oder herkömmlich rezyklierten Kohlenstofffasern.

Darüber hinaus wird durch die Kombination der erfindungsgemäßen Pyrolyseanlage und der erfindungsgemäßen Verfahrensführung, insbesondere durch die Steuerung der Temperatur und des Sauerstoffgehalts, während der gesamten Pyrolyse eine übermäßige Oxidation der rezyklierten Kohlenstofffasern vermieden, so dass die erfindungsgemäßen rezyklierten Kohlenstofffasern vergleichbare mechanische Eigenschaften aufweisen wie Kohlenstoffprimärfasern.

Zudem wird aufgrund der stark exothermen Reaktion des Sauerstoff mit den gasförmigen Zersetzungsprodukten der Kunststoffmatrix zur Durchführung des erfindungsgemäßen Verfahrens wesentlich weniger Heizenergie benötigt, so dass das erfindungsgemäße Verfahren äußerst ökonomisch ist. Weiterhin können aufgrund der stark exothermen Reaktion auch die für die Pyrolyse erforderlichen jeweiligen Temperaturen sehr schnell erreicht werden, so dass kurze Verweilzeiten der zu rezyklierenden Gegenstände gemäß dem erfindungsgemäßen Verfahren resultieren. Folglich können mit der erfindungsgemäßen Pyrolyseanlage in Kombination mit dem erfindungsgemäßen Verfahren in kurzer Zeit große Mengen an kohlenstofffaserhaltigen Kunststoffen rezykliert werden.

Vor der Durchführung des erfindungsgemäßen Verfahrens in der erfindungsgemäßen Pyrolyseanlage ist auch keine mechanische und/oder chemische Vorbehandlung der zu rezyklierenden kohlenstofffaserhaltigen Kunststoffe erforderlich, so dass auch rezyklierte Kohlenstofffasern mit großer Faserlänge erhalten werden können, aus welchen nach Zugabe eines Harzes beispielsweise sogenannte Prepregs hergestellt werden können. Jedoch können die rezyklierten Kohlenstofffasern mit großer Faserlänge auch auf definierte Faserlängen zerkleinert werden, wie sie beispielsweise bei der Compoundierung eingesetzt werden.

Auch können laminare Bahnen aus kohlenstofffaserhaltigen Kunststoffen und anderen Verstärkungsmaterialien, wie Glasfasern, ohne aufwendige Abtrennung in dem erfindungsgemäßen Verfahren rezykliert werden, da das erfindungsgemäße Verfahren in einzelnen Bahnlagen aus rezyklierten Kohlenstofffasern resultiert, aus welchen die Entfernung von anderen Verstärkungsmaterialien leicht möglich ist. Zudem ermöglicht das erfindungsgemäße Verfahren, welches in der erfindungsgemäßen Pyrolyseanlage durchgeführt wird, einen kontinuierlichen Betrieb und eine Durchführung auch im industriellen Maßstab.

Weitere Ausgestaltungen, Abwandlungen und Variationen der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung aber nicht beschränken sollen.

### Ausführungsbeispiele:

Die besonderen Vorteile der Erfindung sind im Folgenden am Beispiel der Rückgewinnung (Rezyklierung) von Kohlenstofffasern aus kohlenstofffaserhaltigen Materialien beschrieben.

### A) Verfahren zur Rezyklierung von kohlenstofffaserhaltigen Kunststoffen

Als kohlenstofffaserhaltige Kunststoffe werden kohlenstofffaserverstärkte Kunststoffabfälle (CFK-Abfälle), wie sie beispielsweise im Flugzeugbau (z. B. Flugzeugtragflächen) oder bei Windkrafträdern (z. B. Windflügeln) anfallen, eingesetzt. Falls die CFK-Abfälle größere Dimensionen aufweisen als die Öffnung der Eintragstation der Pyrolyseanlage, so erfolgt vor der Rezyklierung eine Zerkleinerung der CFK-Abfälle mit dem Fachmann an sich bekannten Schneidevorrichtungen.

Die Rezyklierung von Kohlenstofffasern aus den zuvor beschriebenen kohlenstofffaserhaltigen Abfällen in Form von Prepregs erfolgt in den in Tabelle 1 angeführten Pyrolyseanlagen.

**Tabelle 1: Zur Rezyklierung verwendete Pyrolyseanlagen**

| Nr. | Pyrolyseanlage |
|---|---|
| 1 | Pyrolyseanlage mit einem indirekt beheizten Drehrohrofen mit Austrittsöffnungen und einem Abschnitt bzw. einer Behandlungszone |
| 2* | Pyrolyseanlage mit einem indirekt beheizten Drehrohrofen mit Austrittsöffnungen und zwei Abschnitten bzw. zwei Behandlungszonen (vgl. Fig. 1 und 5) |
| 3 | Pyrolyseanlage mit einem indirekt beheizten Drehrohrofen ohne Austrittsöffnungen und einem Abschnitt bzw. einer Behandlungszone |
| 4 | Pyrolyseanlage mit einem indirekt beheizten Drehrohrofen ohne Austrittsöffnungen und zwei Abschnitten bzw. Behandlungszonen |
| 5 | Pyrolyseanlage mit einem Bandofen mit einer Behandlungszone bzw. einem Abschnitt |
| *erfindungsgemäß | |

Die Rezyklierung von kohlenstofffaserhaltigen Kunststoffen wird in den zuvor beschriebenen Pyrolyseanlagen durchgeführt, wobei jeweils die in der Tabelle 2 beschriebenen Verfahrensbedingungen in der jeweiligen Pyrolyseanlage eingestellt werden.

**Tabelle 2: Verfahrensbedingungen**

| Nr. | Verfahrensbedingungen | |
|---|---|---|
| 1 | Temperatur: | 500 °C |
| | Sauerstoffgehalt: | 2 - 10 Vol.-% |
| | Verweildauer: | 60 min |
| 2* | Aufwärmzone A: | 205 - 295 °C |
| | Temperatur Pyrolysezone B1: | 430 - 445 °C |
| | Temperatur Pyrolysezone B2: | 515 - 650 °C |
| | Sauerstoffgehalt Pyrolysezone B1: | 2 Vol.-% |
| | Sauerstoffgehalt Pyrolysezone B2: | 10 Vol.-% |
| | Verweildauer Pyrolysezone B1: | 26 min |
| | Verweildauer Pyrolysezone B2: | 24 min |
| | Abkühlzone C: | 80 - 150 °C |
| 3 | Temperatur: | 500 °C |
| | Sauerstoffgehalt: | 2 Vol.-% |
| | Verweildauer: | 60 min |
| 4 | Aufwärmzone A: | 205 - 295 °C |
| | Temperatur Pyrolysezone B1: | 430 - 445 °C |
| | Temperatur Pyrolysezone B2: | 515 - 650 °C |
| | Sauerstoffgehalt Pyrolysezone B1: | 2 Vol.-% |
| | Sauerstoffgehalt Pyrolysezone B2: | 5 Vol.-% |
| | Verweildauer Pyrolysezone B1: | 26 min |
| | Verweildauer Pyrolysezone B2: | 24 min |
| | Abkühlzone C: | 80 - 150 °C |
| 5 | Temperatur: | 500 °C |
| | Sauerstoffgehalt: | 2 - 10 Vol.-% |
| | Verweildauer: | 60 min |

| | | |
|---|---|---|
| *erfindungsgemäß | | |

Die Oberflächenstruktur, der Anteil der Pyrolyserückstände sowie die sauerstoffhaltigen Gruppen auf der Oberfläche der durch die Rezyklierung in verschiedenen Pyrolyseanlagen erhaltenen rezyklierten Kohlenstofffasern werden mittels der nachfolgend beschriebenen Messmethoden bestimmt.

### B) Messmethoden und Ergebnisse

### a) Lichtmikroskopische Untersuchungen der rezyklierten Kohlenstofffasern

Die Oberflächenbeschaffenheit sowie die Anwesenheit von Pyrolyserückständen wird mittels Rasterelektronenmikroskopie (*Scanning Electron Microscopy,* auch *SEM* genannt) untersucht. Geeignete Rasterelektronenmikroskope sind dem Fachmann wohlbekannt. In diesem Zusammenhang können z. B. Rasterelektronenmikroskope des Typs JEOL 6400 F oder des Typs Hitachi S-3200 verwendet werden. Die Auflösung der rasterelektronenmikroskopischen Daten wird dabei durch die Auflösung des Rasterelektronenmikroskops bestimmt. Die mittels der Rasterelektronenmikroskopie erhaltenen Ergebnisse für die verschiedenen Pyrolyseanlagen sind in der nachfolgenden Tabelle 3 dargestellt.

**Tabelle 3: Ergebnisse der rasterelektronenmikroskopischen Untersuchung**

| Nr. | Ergebnis rasterelektronenmikroskopische Untersuchungen |
|---|---|
| 1 | rauhe Oberfläche in Form von Rillen und Vertiefungen, keine sichtbaren Beschädigungen der Faseroberfläche, keine Pyrolyserückstände an der Faseroberfläche, Kunststoffmatrix vollständig entfernt |
| 2* | rauhe Oberfläche in Form von Rillen und Vertiefungen, keine sichtbaren Beschädigungen der Faseroberfläche, keine Pyrolyserückstände an der Faseroberfläche, Kunststoffmatrix vollständig entfernt |
| 3 | kaum Rillen oder Vertiefungen in der Oberfläche, teilweise Beschädigung der Kohlenstofffaser, Vielzahl von Pyrolyserückständen an der Faseroberfläche |
| 4 | kaum Rillen oder Vertiefungen in der Oberfläche, Beschädigung der Kohlenstofffaser, Vielzahl von Pyrolyserückständen an der Faseroberfläche |
| 5 | rauhe Oberfläche in Form von Rillen und Vertiefungen, keine Beschädigung der Kohlenstofffaser, Pyrolyserückstände an der Faseroberfläche |

| | |
|---|---|
| *erfindungsgemäß | |

Es wurde überraschend gefunden, dass nur bei Verwendung der erfindungsgemäßen Pyrolyseanlage mit einem indirekt beheizten Drehrohrofen mit Austrittsöffnungen in Kombination mit den erfindungsgemäßen Verfahrensbedingungen rezyklierte Kohlenstofffasern erhalten werden, welche keine signifikanten Beschädigungen der Faseroberfläche aufweisen, jedoch infolge der Oxidation während der Rezyklierung eine rauhe Oberfläche in Form von Rillen und Vertiefungen besitzen. Weiterhin weisen die rezyklierten Kohlenstofffasern bei Verwendung der erfindungsgemäßen Pyrolyseanlagen in Kombination mit der erfindungsgemäßen Verfahrensführung keinerlei Pyrolyserückstände auf (vgl. Probe Nr. 2), so dass weder die Einarbeitbarkeit noch die mechanischen Eigenschaften, insbesondere die Steifigkeit und die Zugdehnung, noch die elektrischen Eigenschaften durch die Rezyklierung signifikant beeinflusst werden (vgl. Probe Nr. 2). Insbesondere weisen die rezyklierten Kohlenstofffasern bei erfindungsgemäßer Verfahrensführung (vgl. Probe Nr. 2) eine nahezu identische Steifigkeit sowie eine lediglich um etwa 5 % bis 10 % geringere Zugdehnung als Kohlenstoffprimärfasern auf. Die Verwendung einer Pyrolyseanlage, welche einen indirekt beheizten Drehrohrofen ohne Austrittsöffnungen umfasst, resultiert in rezyklierten Kohlenstofffasern, welche eine signifikante Menge an Pyrolyserückständen aufweisen (vgl. Probe Nr. 3); dies ist insbesondere auf den geringen Sauerstoffgehalt zurückzuführen, da das Pyrolysegas aufgrund fehlender Austrittsöffnungen während der Pyrolyse nicht aus dem Drehrohr entweichen kann. Auch der Einsatz einer Pyrolyseanlage, welche ein indirekt beheiztes Drehrohr ohne Austrittsöffnungen, aber mit zwei Behandlungszonen umfasst, resultiert in rezyklierten Kohlenstofffasern, welche eine signifikante Menge an Pyrolyserückständen aufweisen (vgl. Probe Nr. 4). Die Anwesenheit von großen Mengen an Pyrolysegas direkt an den rezyklierten Kohlenstofffasern verhindert eine hohe Sauerstoffkonzentration an der Oberfläche der rezyklierten Kohlenstofffasern, welche jedoch für die Entfernung der Pyrolyserückstände und die teilweise Oxidation der Oberfläche der rezyklierten Kohlenstofffasern erforderlich ist. Weiterhin findet bei höheren Sauerstoffmengen eine Verbrennung der Pyrolysegase statt, welche aufgrund der stark exothermen Reaktion zu einer lokalen Temperaturerhöhung führt und so die rezyklierten Kohlenstofffasern schädigt. Die Verwendung einer Pyrolyseanlage mit einem Bandofen resultiert in rezyklierten Kohlenstofffasern, welche aufgrund der zu geringen Temperatur in Kombination mit der fehlenden Durchmischung während der Pyrolyse eine signifikante Menge an Pyrolyserückständen aufweisen (vgl. Probe Nr. 5).

### b) Kontaktwinkelmessung mittels Wilhelmy-Methode

Die Kontaktwinkelmessungen an rezyklierten Kohlenstofffasern, welche mit den verschiedenen Pyrolyseanlagen erhalten sind, werden mittels eines Tensiometers, z. B. eines Tensiometers K100SF der Firma KRÜSS GmbH, Hamburg, Deutschland, bestimmt. Die Kontaktwinkelmessungen werden als Einzelfasermessungen gegenüber Wasser durchgeführt.

Hierzu werden zunächst die jeweiligen rezyklierten Kohlenstofffasern auf eine Länge von 0,8 bis 1 cm zerkleinert. Die Zerkleinerung der jeweiligen rezyklierten Kohlenstofffasern kann beispielsweise durch Hacken in einer hierfür üblichen, dem Fachmann an sich bekannten Schneidevorrichtung erfolgen, wobei die Zerkleinerung grundsätzlich mittels Nass- oder Trockenverfahren durchgeführt werden kann.

Die zerkleinerten rezyklierten Kohlenstofffasern werden mit Hilfe eines Probenhalters am Kraftaufnehmer (Waagesystem) des Tensiometers fixiert, die Testflüssigkeit - im vorliegenden Fall Wasser - wird in ein Messgefäß (Glas, Durchmesser 70 mm, Volumen ca. 70 ml) gefüllt und in eine Temperiereinheit des Tensiometers unter dem Kraftaufnehmer positioniert.

Zunächst erfolgt die Bestimmung der benetzten Länge der jeweiligen Einzelfasern gegenüber n-Heptan. Die zur Messung benötigten Parameter der n-Heptan-Testflüssigkeit und des Wassers sind in nachfolgender Tabelle wiedergegeben.

**Tabelle 4: Parameter der Testflüssigkeiten**

| Testflüssigkeit | σ [mN/m] | ρ [g/cm³] |
|---|---|---|
| n-Heptan | 20,4 | 0,684 |
| Wasser | 72,80 | 0,998 |

Die Messung der Kontaktwinkel sowie der benetzten Länge wird bei einer Temperatur von (23 °C ± 0,5) °C durchgeführt, wobei die Bestimmung des dynamischen Kontaktwinkels als Fortschreitewinkel erfolgt. Pro rezyklierter Kohlenstofffaser wird jeweils eine Doppelbestimmung durchgeführt.

Die Detektionsgeschwindigkeit beträgt 6 mm/min, die Messgeschwindigkeit beträgt 1 mm/min, die Empfindlichkeit beträgt 0,0004 mg, und die Eintauchtiefe der Faser (Position) beträgt 5 mm.

Auf den am Kraftaufnehmer registrierten Kraftänderungen an der rezyklierten Kohlenstofffaser im Kontakt mit Wasser und in Abhängigkeit der Position, der Oberflächenspannung des Wassers und der vorher bestimmten benetzen Länge der rezyklierten Kohlenstofffaser wird mittels einer Software (z. B. Labdesk Software der Firma KRÜSS GmbH, Hamburg, Deutschland) der Kontaktwinkel automatisiert bestimmt bzw. berechnet, wobei im vorliegenden Fall die Bestimmung als Online-Kontaktwinkel erfolgt.

Die benetzte Länge der rezyklierten Kohlenstofffasern sowie die Kontaktwinkel sind in nachfolgender Tabelle 5 wiedergegeben.

**Tabelle 5: Benetzte Länge sowie Kontaktwinkel der rezyklierten Kohlenstofffasern**

| Nr. | Benetzte Länge [mm] | Kontaktwinkel [°] |
|---|---|---|
| 1 | 0,025 ± 0,000 | 69,26 ± 0,22 |
| 2* | 0,025 ± 0,001 | 66,35 ± 0,11 |
| 3 | 0,023 ± 0,001 | 83,45 ± 0,04 |
| 5 | 0,025 ± 0,001 | 76,16 ± 0,82 |

| | | |
|---|---|---|
| *erfindungsgemäß | | |

Der Kontaktwinkel für die Probe Nr. 4 konnte aufgrund der teilweisen Zerstörung der rezyklierten Kohlenstofffasern nicht bestimmt werden. Weiterhin wurde überraschend herausgefunden, dass bei Rezyklierung unter Verwendung der erfindungsgemäßen Pyrolyseanlage in Kombination mit der erfindungsgemäßen Verfahrensführung eine Oxidation der Oberfläche stattfindet, so dass eine hydrophile Oberfläche resultiert (Probe Nr. 2). Dies wird durch den geringeren Kontaktwinkel gegenüber der Probe Nr. 3 verdeutlicht, welche aufgrund des geringeren Sauerstoffgehalts während der Pyrolyse keine hydrophile Oberfläche aufweist. Auch die Probe Nr. 5 weist eine hydrophile Oberfläche auf, jedoch werden aufgrund des Einsatzes eines Bandofens mittels Rasterelektronenmikroskopie signifikante Mengen an Pyrolyseresten auf der Oberfläche der rezyklierten Kohlenstofffasern festgestellt, wie zuvor bereits ausgeführt.

Insgesamt wurde überraschend gefunden, dass nur bei Einsatz der erfindungsgemäßen Pyrolyseanlage in Kombination mit der erfindungsgemäßen Verfahrensführung eine Oxidation der Oberfläche der rezyklierten Kohlenstofffasern stattfindet, jedoch ohne diese signifikant zu beschädigen, so dass die mechanischen Eigenschaften der erfindungsgemäßen rezyklierten Kohlenstofffasern erhalten bleiben. Durch die hydrophilere Oberfläche erfolgt eine bessere Einarbeitbarkeit in Kunststoffe, Baustoffe oder zementäre Systeme im Vergleich zu Kunststoffprimärfasern, welche einen Kontaktwinkel oberhalb von 75° aufweisen (d. h. schlechter benetzbar sind).

### c) Gravimetrische und thermogravimetrische Analyse (TGA)

Die gravimetrische Bestimmung des Pyrolyserückstands kann durch Suspendieren einer genau ermittelten Menge der jeweiligen rezyklierten Kohlenstofffasern in einem Lösungsmittel, wie Dichlormethan, nachfolgender Behandlung der Suspension im Ultraschallbad, Filtration durch ein grobes Sieb, welches nur die Kohlenstofffasern zurückhält, und Rückwaage der getrockneten rezyklierten Kohlenstofffasern erfolgen. Der Anteil der Pyrolyserückstände ergibt sich aus der Differenz zwischen dem Gewicht der rezyklierten Kohlenstofffasern vor und nach der Behandlung mit dem Lösungsmittel, wie Dichlormethan.

Vorliegend wurde der Anteil der Pyrolyserückstände jedoch mittels thermogravimetrischer Analyse (TGA) bestimmt. Die thermogravimetrische Analyse (TGA) kann mit dem Fachmann an sich bekannten Messapparaten durchgeführt werden. Vorliegend werden die durch den Einsatz verschiedener Pyrolyseanlagen erhaltenen rezyklierten Kohlenstofffasern zunächst fein zerkleinert, wobei die Zerkleinerung mit dem Fachmann an sich bekannten Zerkleinerungsmethoden, insbesondere unter Verwendung von Schneidevorrichtungen oder Mühlen, wie Hammermühlen, Pralltellermühlen, Siebkorbmühlen, durchgeführt werden kann. Im Anschluss an die Zerkleinerung der jeweiligen Probe wird 1 mg der zerkleinerten rezyklierten Kohlenstofffasern, welche unter Einsatz der verschiedenen Pyrolyseanlagen erhalten sind, in die Messvorrichtung überführt und die thermogravimetrische Analyse mit den folgenden Parametern durchgeführt: Die Luftstromrate beträgt 20 cm³/s, die Aufheizrate der Temperatur beträgt 10 °C/min, und die Aufzeichnungsrate beträgt 1/s. Die bis etwa 550 °C verdampfenden Rückstände, bei welchen es sich um die Pyrolyserückstände handelt, werden durch Wiegen der Probe vor und nach der thermogravimetrischen Analyse bestimmt. Die Bestimmung kann beispielsweise mittels einer Mikrowaage erfolgen.

Für die Proben Nr. 1 und 2 konnten keine Gewichtsverluste festgestellt werden, so dass die erfindungsgemäße Pyrolyseanlage in Kombination mit der erfindungsgemäßen Verfahrensführung nicht in signifikanten Mengen an Pyrolyserückständen resultiert. Insbesondere weisen die mit der erfindungsgemäßen Pyrolyseanlage und der erfindungsgemäßen Verfahrensführung hergestellten rezyklierten Kohlenstofffasern Pyrolyserückstände von weniger als 0,1 Gew.-% (d. h. unterhalb der Nachweisgrenze) auf. Die nichterfindungsgemäßen Proben Nr. 3 bis 5 weisen jeweils signifikante Mengen an Pyrolyserückständen von jeweils mehr als 5 Gew.-% auf, weshalb sie eine schlechtere Einarbeitbarkeit in Kunststoffe besitzen. Zudem wirkt sich der hohe Anteil an Pyrolyserückständen in den Proben Nr. 3 bis 5 negativ auf die elektrischen Eigenschaften der rezyklierten Kohlenstofffasern aus.

### d) Röntgenphotoelektronenspektroskopie (XPS)

Schließlich wurden die Art und Menge der sauerstoffhaltigen Gruppen auf der Oberfläche der durch den Einsatz verschiedener Pyrolyseanlagen hergestellten rezyklierten Kohlenstofffasern mittels Röntgenphotoelektronenspektroskopie (XPS) bestimmt.

Die jeweiligen rezyklierten Kohlenstofffasern werden bündelweise auf einen Abstandshalter aus Edelstahl mit einem Durchmesser von 1 cm aufgebracht, welcher mit doppelseitigem Klebeband versehen ist. Die Enden des rezyklierten Kohlenstofffaserbündels werden anschließend auf dem Abstandshalter durch die Verwendung eines weiteren Klebebands fixiert. Auf diesem Abstandshalter werden alle sechs Proben im Abstand von etwa 5 mm platziert.

Die Röntgenphotoelektronenspektroskopie kann mit dafür geeigneten Messgeräten, beispielsweise einem Kratos AXIS ULTRA, mit einer monochromatischen Al-Kα-Röntgenelektronenquelle (1486.6 eV) bei einem Emissionsstrom von 15 mA und einem Anodenpotential von 10 kV durchgeführt werden. Die Spektren werden im Bereich von 0 bis 1100 eV aufgenommen, wobei die Durchlassenergie 80 eV beträgt und die Schrittweite auf 0,5 eV eingestellt wird. Alle Spektren werden mit einem 90°-Abstrahlwinkel aufgenommen. Es werden jeweils drei Positionen in der Mitte der Probe vermessen, wobei die Oberfläche der Probe jeweils 300 µm x 700 µm beträgt.

Die Zusammensetzung der Oberfläche wird mittels einer Software, wie beispielsweise CasaXPS, berechnet.

Wie von der Anmelderin überraschend festgestellt, weisen die erfindungsgemäß rezyklierten Kohlenstofffasern der Proben Nr. 1 und 2 höhere Konzentrationen an Keto- und Carboxylat-Gruppen an der Oberfläche auf als die nichterfindungsgemäßen Proben Nr. 3 und 4. Die Probe Nr. 5 weist ebenfalls einen höheren Anteil an Keto- und Carboxylat-Gruppen auf als die nichterfindungsgemäß rezyklierten Kohlenstofffasern der Proben Nr. 3 und 4, jedoch sind auf der Oberfläche der rezyklierten Kohlenstofffasern der Probe Nr. 5 aufgrund der verwendeten Pyrolyseanlage in Kombination mit der verwendeten Verfahrensführung signifikante Mengen an Pyrolyserückständen zu finden, welche die Einarbeitbarkeit in Kunststoffe erschweren sowie die elektrischen Eigenschaften der rezyklierten Kohlenstofffasern negativ beeinflussen.

Der erhöhte Anteil an sauerstoffhaltigen Gruppen, insbesondere Keto- und Carboxylat-Gruppen, führt zu einer hydrophileren Oberfläche der erfindungsgemäßen rezyklierten Kohlenstofffasern. Diese hydrophilere Oberfläche führt zu einer besseren Einarbeitbarkeit aufgrund der besseren Benetzbarkeit der Oberfläche.

**Bezugszeichenliste:**

| | | | |
|---|---|---|---|
| 1 | Pyrolyseofen | 23 | Gasbrenner |
| 2 | CFK-Material | 24 | Heizgasleitungen |
| 3 | Eintragstation | 25 | Anschluss |
| 4 | Schütte | 26 | Förderelement |
| 5 | Transportband | P | Pyrolysevorrichtung |
| 6 | Austragstation | A | Aufwärmzone |
| 7 | Kohlenstoff-Fasermaterial | B1 | erste Pyrolysezone |
| 8 | Gasabzugsvorrichtung | B2 | zweite Pyrolysezone |
| 9 | Pyrolysegas | C | Abkühlzone |
| 10 | Steuerungseinheit | CFK | kohlenstofffaserhaltiger Kunststoff |
| 11 | Drehrohr | RF | rezyklierte Kohlenstofffasern |
| 12 | Austrittsöffnungen | 1 | Kohlenstofffprimärfaser |
| 13 | Gehäuse | | (nicht erfindungsgemäß) |
| 14 | Abfuhrleitung | 1' | rezyklierte Kohlenstofffaser |
| 15 | Heizsektion | | (nicht erfindungsgemäß) |
| 16 | Kühlsektion | 1" | rezyklierte Kohlenstofffaser (erfindungsgemäß) |
| 17 | Sprühdüsen | 2 | Rillen einer rezyklierten Kohlenstofffaser 1' (nicht erfindungsgemäß) |
| 18 | Auffangwanne | | |
| 19 | Abschnitte | 2' | Rillen einer rezyklierten Kohlenstofffaser 1" (erfindungsgemäß) |
| 19.1 | Aufwärmzone A | | |
| 19.2 | erste Pyrolysezone B1 | 3 | Pyrolyse- bzw. Verkokungsrückstand |
| 19.3 | zweite Pyrolysezone B2 | | |
| 19.4 | Abkühlzone C | | |
| 20 | Lufteintritt | | |
| 21 | Steuerventil | | |
| 22 | Mischelemente | | |

## Patentansprüche

1. Pyrolyseanlage zur Rückgewinnung von Kohlenstofffasern aus kohlenstofffaserhaltigen Kunststoffen, insbesondere aus kohlenstofffaserverstärkten Kunststoffen, vorzugsweise aus kohlenstofffaserhaltigen und/oder kohlenstofffaserverstärkten Verbundwerkstoffen,
mit einem langgestreckten, im Betrieb kontinuierlich arbeitenden Pyrolyseofen (1) zur kontinuierlichen Pyrolyse von CFK-Material (2),
mit einer Eintragstation (3) zum Eintragen von zu verarbeitendem CFK-Material (2) in den Pyrolyseofen (1) an dessen einem Ende,
mit einer Austragstation (6) zum Austragen von rückgewonnenem Kohlenstoff-Fasermaterial (7) aus dem Pyrolyseofen (1) an dessen anderem Ende,
mit einer Gasabzugsvorrichtung (8) für im Pyrolyseofen (1) erzeugtes Pyrolysegas (9) und
mit einer Steuerungseinrichtung (10), insbesondere zur Regelung zumindest einzelner Bestandteile des Gases im Pyrolyseofen (1), insbesondere zur Regelung des Sauerstoffanteils des Gases im Pyrolyseofen (1),
wobei der Pyrolyseofen (1) ein indirekt beheizter Drehrohrofen ist, der zumindest folgende Bestandteile aufweist:
ein langgestrecktes, die Aufnahme für das zu verarbeitende CFK-Material (2) bildendes Drehrohr (11), das mit der Eintragstation (3) und der Austragstation (6) in Verbindung steht, wobei das Drehrohr (11) zumindest auf einem Teil seiner Länge auf seinem Mantel mit Austrittsöffnungen (12) zum Abführen von bei der Pyrolyse entstehendem Pyrolysegas (9) versehen ist, und
ein das Drehrohr (11) zumindest zum Teil umgebendes, nach außen isoliertes Gehäuse (13) mit Durchtritten für die Eintragstation (3) und gegebenenfalls auch für die Austragstation (6) und mit Abfuhrleitungen (14) insbesondere für das Pyrolysegas (9), wobei im Gehäuse (13) entlang der Länge des Drehrohrs (11) mehrere Abschnitte (19) mit unterschiedlich oder verschieden voneinander regelbaren Gastemperaturen vorgesehen sind;
**dadurch gekennzeichnet,**
**dass** die Austrittsöffnungen (12) im Drehrohr (11) zumindest in dem Abschnitt mit der höchsten Gastemperatur vorgesehen sind;
**dass** der Pyrolyseofen (1) verschiedene Abschnitte (19) aufweist, nämlich mindestens eine Aufwärmzone (19.1), eine erste Pyrolysezone (19.2), eine zweite Pyrolysezone (19.3) und eine Abkühlzone (19.4), und die Zusammensetzung des Gases und die Temperatur im Pyrolyseofen (1) in den verschiedenen Abschnitten (19) des Drehrohrs (11) unterschiedlich regelbar sind, nämlich mit einem definierten Sauerstoffanteil G(B1) und mit einer definierten Temperatur T(B1) in der ersten Pyrolysezone (19.2) und mit einem definierten Sauerstoffanteil G(B2) und mit einer definierten Temperatur T(B2) in der zweiten Pyrolysezone (19.3); und
**dass** die Pyrolyseanlage weiterhin eine in Prozessrichtung vor oder stromaufwärts zu der Eintragstation (3) angeordnete Zerkleinerungsvorrichtung zur Zerkleinerung von zu verarbeitendem CFK-Material (2) aufweist.

2. Pyrolyseanlage nach Anspruch 1, wobei das Drehrohr (11) eine erste, von der Eintragstation (3) ausgehende Heizsektion (15) und eine zweite, daran anschließende und zur Austragstation (6) führende Kühlsektion (16) aufweist.

3. Pyrolyseanlage nach Anspruch 2,
wobei in der Kühlsektion (16) das Drehrohr (11) mit Wasser kühlbar ausgebildet ist und/oder
wobei das Drehrohr (11) in der Kühlsektion (16) keine Austrittsöffnungen (12) aufweist.

4. Pyrolyseanlage nach einem der vorangehenden Ansprüche,
wobei die Austrittsöffnungen (12) über den Umfang des Drehrohrs (11) im Wesentlichen gleichmäßig verteilt angeordnet sind; und/oder
wobei die Austrittsöffnungen (12) in ihrer Größe verstellbar sind.

5. Pyrolyseanlage nach einem der vorangehenden Ansprüche,
wobei das Drehrohr (11) von der Eintragstation (3) zur Austragstation (6) hin abfallend geneigt angeordnet ist; und/oder
wobei das Drehrohr (11) im Inneren mit Mischelementen (22), insbesondere mit Wendeblechen, versehen ist und/oder wobei das Drehrohr (11) mit Mischelementen (22) einerseits und einem Förderelement (26), insbesondere einer Förderschnecke, vorzugsweise einer archimedischen Förderschnecke, andererseits versehen ist.

6. Pyrolyseanlage nach einem der vorangehenden Ansprüche,
wobei die Eintragstation (3) als Eintragschleuse ausgeführt ist.

7. Pyrolyseanlage nach einem der vorangehenden Ansprüche, wobei die Beheizung des Pyrolyseofens (1) von mindestens einem außen angeordneten Gasbrenner aus über Heizgasleitungen (24) im Gehäuse (13) erfolgt.

8. Verwendung einer Pyrolyseanlage gemäß einem der vorangehenden Ansprüche zur Rückgewinnung von Kohlenstofffasern aus kohlenstofffaserhaltigen Kunststoffen, insbesondere aus kohlenstofffaserverstärkten Kunststoffen, vorzugsweise aus kohlenstofffaserhaltigen und/oder kohlenstofffaserverstärkten Verbundwerkstoffen.

9. Verfahren zur Rückgewinnung von Kohlenstofffasern aus kohlenstofffaserhaltigen Kunststoffen, insbesondere aus kohlenstofffaserverstärkten Kunststoffen, vorzugsweise aus kohlenstofffaserhaltigen und/oder kohlenstofffaserverstärkten Verbundwerkstoffen,
wobei ein Gegenstand auf Basis eines Kohlenstofffasern enthaltenden Kunststoffs, welcher Kohlenstofffasern in einer Kunststoffmatrix umfasst, einer mehrstufigen Pyrolyse in Gegenwart von Sauerstoff unterzogen wird, wobei bei der Pyrolyse der Kunststoff der Kunststoffmatrix unter Erhalt der Kohlenstofffasern zersetzt wird,
wobei die Pyrolyse in einer Pyrolyseanlage gemäß einem der vorangehenden Ansprüche mit einem Pyrolyseofen (1) durchgeführt wird, wobei der Pyrolyseofen (1) mindestens die folgenden Behandlungszonen, nämlich die folgenden Abschnitte (19) des Drehrohrs (11), in der nachfolgend spezifizierten Abfolge umfasst und der Gegenstand in dieser Abfolge die nachfolgenden Behandlungszonen durchläuft:
(A) eine Aufwärmzone A (19.1), in welcher der zu behandelnde und/oder zu rezyklierende Gegenstand auf eine definierte Temperatur T(A) erwärmt wird,
(B1) nachfolgend eine erste Pyrolysezone B1 (19.2), in welcher bei einer definierten Temperatur T(B1) und einem definierten Sauerstoffgehalt G(B1) eine Pyrolyse des Kunststoffs der Kunststoffmatrix des zu behandelnden Gegenstands einsetzt und/oder durchgeführt wird,
(B2) nachfolgend eine zweite Pyrolysezone B2 (19.3), in welcher bei einer definierten Temperatur T(B2) und einem definierten Sauerstoffgehalt G(B2) eine abschließende Pyrolyse des nach der Pyrolysezone B1 (19.2) noch verbleibenden Kunststoffs der Kunststoffmatrix des zu behandelnden Gegenstands bis zur zumindest im Wesentlichen vollständigen Entfernung durchgeführt wird,
(C) nachfolgend eine Abkühlzone C (19.4) zum Abkühlen der aus der zweiten Pyrolysezone B2 (19.3) erhaltenen rezyklierten Kohlenstofffasern RF,
wobei der Sauerstoffgehalt G(B2) in der zweiten Pyrolysezone B2 (19.3) gegenüber dem Sauerstoffgehalt G(B1) in der ersten Pyrolysezone B1 (19.2) um 3 Vol.-% bis 25 Vol.-% erhöht wird und wobei die Temperatur T(B2) in der zweiten Pyrolysezone B2 (19.3) gegenüber der Temperatur T(B1) in der ersten Pyrolysezone B1 (19.2) um 25 °C bis 300 °C erhöht wird.

10. Pyrolytisch aus kohlenstofffaserhaltigen Kunststoffen rezyklierte Kohlenstofffasern,
wobei die rezyklierten Kohlenstofffasern erhältlich sind durch ein Verfahren gemäß Anspruch 9 und
wobei die rezyklierten Kohlenstofffasern:
• eine Benetzbarkeit gegenüber Wasser, bestimmt als tensiometrisch gemessener Kontaktwinkel gemäß der Wilhelmy-Methode mittels Einzelfasermessung bei (23 ± 0,5) °C, von höchstens 75° aufweisen,
• einen Anteil an Pyrolyserückständen von weniger als 0,5 Gew.-%, bezogen auf die rezyklierten Kohlenstofffasern und gravimetrisch bestimmt, aufweisen,
• an ihrer Oberfläche sauerstoffhaltige funktionelle Gruppen, nämlich polare und/oder hydrophile Gruppen, ausgewählt aus Phenol-, Carboxyl-, Carbonyl-, Aldehyd-, Keto-, Hydroxy- und/oder Oxogruppen, aufweisen, bestimmt mittels Elektronenspektroskopie zur chemischen Analyse (ESCA), vorzugsweise mittels Röntgenphotoelektronenspektroskopie (XPS), und
• an ihrer Oberfläche Rillen, Riefen, Vertiefungen, Furchen, Kratzer oder Krater aufweisen.

11. Rezyklierte Kohlenstofffasern nach Anspruch 10,
wobei die rezyklierten Kohlenstofffasern eine Benetzbarkeit gegenüber Wasser, bestimmt als tensiometrisch gemessener Kontaktwinkel gemäß der Wilhelmy-Methode mittels Einzelfasermessung bei (23 ± 0,5) °C, von höchstens 73°, vorzugsweise höchstens 70°, besonders bevorzugt höchstens 68°, noch mehr bevorzugt höchstens 65°, ganz besonders bevorzugt höchstens 60°, aufweisen und/oder wobei die rezyklierten Kohlenstofffasern eine Benetzbarkeit gegenüber Wasser, bestimmt als tensiometrisch gemessener Kontaktwinkel gemäß der Wilhelmy-Methode mittels Einzelfasermessung bei (23 ± 0,5) °C, im Bereich von 30° bis 75°, insbesondere 35° bis 73°, vorzugsweise 38° bis 70°, besonders bevorzugt 40° bis 68°, noch mehr bevorzugt 45° und 65°, ganz besonders bevorzugt 50° bis 60°, aufweisen und/oder
wobei die rezyklierten Kohlenstofffasern einen Anteil an Pyrolyserückständen im Bereich von 0,001 bis weniger als 0,5 Gew.-%, insbesondere im Bereich von 0,01 bis weniger als 0,5 Gew.-%, vorzugsweise im Bereich von 0,05 bis weniger als 0,5 Gew.-%, bevorzugt im Bereich von 0,1 bis weniger als 0,5 Gew.-%, bezogen auf die Kohlenstofffasern, aufweisen, jeweils gravimetrisch, vorzugsweise mittels Thermogravimetrie, bestimmt.

12. Rezyklierte Kohlenstofffasern nach Anspruch 10 oder 11,
wobei die rezyklierten Kohlenstofffasern im unzerkleinerten Zustand eine Faserlänge im Bereich von 0,01 bis 5 m, insbesondere im Bereich von 0,05 bis 3 m, vorzugsweise im Bereich von 0,1 bis 2 m, bevorzugt im Bereich von 0,2 bis 1 m, aufweisen und/oder
wobei die rezyklierten Kohlenstofffasern eine Zugfestigkeit im Bereich von 1.000 bis 6.000 MPa, insbesondere im Bereich von 1.500 bis 5.000 MPa, vorzugsweise im Bereich von 2.000 bis 4.000 MPa, bevorzugt im Bereich von 2.500 bis 3.500 MPa, aufweisen und/oder
wobei die rezyklierten Kohlenstofffasern einen Elastizitätsmodul im Bereich von 20 bis 1.000 GPa, insbesondere im Bereich von 50 bis 800 GPa, vorzugsweise im Bereich von 75 bis 600 GPa, bevorzugt im Bereich von 100 bis 400 GPa, weiter bevorzugt im Bereich von 150 bis 300 GPa, aufweisen und/oder
wobei die rezyklierten Kohlenstofffasern einen mittleren Faserdurchmesser im Bereich von 0,1 bis 100 µm, insbesondere im Bereich von 1 bis 50 µm, vorzugsweise im Bereich von 2 bis 25 µm, bevorzugt im Bereich von 3 bis 15 µm, besonders bevorzugt im Bereich von 4 bis 10 µm, aufweisen und/oder
wobei die rezyklierten Kohlenstofffasern auf ihrer Oberfläche mindestens ein Behandlungsmittel, insbesondere ausgewählt aus der Gruppe von (i) duroplastischen Kunststoffen, insbesondere Epoxidharzen; (ii) thermoplastischen Kunststoffen, insbesondere Polyolefinharzen; (iii) Dispergiermitteln, insbesondere Fettaminethoxylaten und/oder Dialkylenglykolen; (iv) Entschäumern, insbesondere Polydialkylsiloxanen; sowie deren Mischungen und Kombinationen, aufweisen.

13. Verwendung von rezyklierten Kohlenstofffasern gemäß einem der vorangehenden Ansprüche 10 bis 12 als Additiv, insbesondere als Additiv für Kunststoffe, Baustoffe oder zementäre Systeme oder zur Herstellung von kohlenstofffaserhaltigen Kunststoffen oder zur Inkorporierung in Kunststoffen, insbesondere zur Compoundierung, oder zur Herstellung von Kohlenstofffasern enthaltenden Formkörpern, Formen und Flächenmaterialien.

14. Kunststoffe, Baustoffe oder zementäre Systeme, umfassend rezyklierte Kohlenstofffasern gemäß einem der vorangehenden Ansprüche 10 bis 12 und/oder hergestellt unter Verwendung von rezyklierten Kohlenstofffasern gemäß einem der vorangehenden Ansprüche 10 bis 12.

15. Formkörper, Formen und Flächenmaterialien, insbesondere in Form von Kompositmaterialien oder Compounds, umfassend rezyklierte Kohlenstofffasern gemäß einem der vorangehenden Ansprüche 10 bis 12 und/oder hergestellt unter Verwendung von rezyklierten Kohlenstofffasern gemäß einem der vorangehenden Ansprüche 10 bis 12.

## Claims

1. Pyrolysis plant for the recovery of carbon fibers made from carbon fiber-containing plastics, in particular from carbon fiber reinforced plastic, preferably of carbon fiber-containing and/or carbon fiber-reinforced composite materials,
- with an elongated continuously operating pyrolysis furnace (1) for continuous pyrolysis of CFRP material (2),
- with an entry station (3) for introducing the CFRP material (2) to be processed into the pyrolysis furnace (1) at one end,
- with a discharge station (6) for discharging recycled carbon fiber material (7) from the pyrolysis furnace (1) at the other end,
- with a gas extraction device (8) for the pyrolysis gas (9) produced in the pyrolysis furnace (1), and
- with a control device (10), in particular for the regulation at least of individual components of the gas in the pyrolysis furnace (1), in particular for regulating the oxygen content of the gas in the pyrolysis furnace (1),
wherein the pyrolysis furnace (1) is an indirectly heated rotary kiln comprising at least the following components:
- an elongated rotary pipe (11) forming the receptacle for the CFRP material (2) to be processed and connected to the entry station (3) and the discharge station (6), wherein the rotary pipe (11) is provided at least over a part of its length with a mantle with outlet openings (12) for discharging pyrolysis gas (9) resulting from the pyrolysis, and
- a housing (13) at least partially surrounding the rotary pipe (11) and insulated on the outside with passages for the entry station (3) and possibly also for the discharge station (6) and discharge lines (14), in particular for the pyrolysis gas (9), wherein a plurality of sections (19) with different, or different from each other, controllable gas temperatures are provided in the housing (13) along the length of the rotating pipe (11);
**characterized in that**
the outlet openings (12) are provided in the rotary pipe (11) at least in the section having
the highest gas temperature;
the pyrolysis furnace (1) comprises several sections (19), namely at least a heating zone (19.1), a first pyrolysis zone (19.2), a second pyrolysis zone (19.3) and a cooling zone (19.4), while the composition of the gas and the temperature in the pyrolysis furnace (1) in the various sections (19) of the rotary pipe (11) are differently regulated, namely with a defined proportion of oxygen G(B1) and with a defined temperature T(B1) in the first pyrolysis zone (19.2), and with a defined oxygen fraction G(B2) and with a defined temperature T(B2) in the second pyrolysis (19.3); and
the pyrolysis plant further comprises a crushing device arranged in the process direction in front of or upstream of the entry station (3) for crushing the CFRP material (2) to be processed.

2. Pyrolysis plant according to claim 1, wherein the rotary pipe (11) comprises a first heating section (15) originating at the entry station (3), and a second subsequent cooling section (16) leading to the discharge station (6).

3. Pyrolysis plant according to claim 2,
wherein the rotary pipe (11) is cooled by water in the cooling section (16), and/or
wherein the rotary pipe (11) has no outlet openings (12) in the cooling section (16).

4. Pyrolysis plant according to any one of the preceding claims,
wherein the outlet openings (12) are distributed substantially evenly over the circumference of the rotary pipe (11), and/or
wherein the outlet openings (12) are adjustable in their size.

5. Pyrolysis plant according to any one of the preceding claims,
wherein the rotary pipe (11) is arranged to slope downwards from the entry station (3) to the discharge station (6), and/or
wherein the rotary pipe (11) is provided with mixing elements (22) in the interior, in particular with turning plates, and/or wherein the rotary pipe (11) is provided with mixing elements (22) on the one hand, and a conveying element (26), in particular a worm conveyor, preferably an Archimedean screw conveyor, on the other hand.

6. Pyrolysis plant according to any one of the preceding claims, wherein the entry station (3) is designed as an entry lock.

7. Pyrolysis plant according to any one of the preceding claims, wherein the heating of the pyrolysis furnace (1) is carried out via at least an externally arranged gas burner via fuel gas lines (24) in the housing (13).

8. Use of a pyrolysis plant according to one of the preceding claims for the recovery of carbon fibers made from carbon fiber-containing plastics, in particular from carbon fiber reinforced plastic, preferably of carbon fiber-containing and/or carbon fiber reinforced composite materials.

9. Method for the recovery of carbon fibers made from carbon fiber-containing plastics, in particular from carbon fiber reinforced plastic, preferably carbon fiber-containing and/or carbon fiber-reinforced composite materials,
wherein an object based on a plastic containing carbon fibers, which comprises carbon fibers in a plastic matrix, is subjected to multi-stage pyrolysis in the presence of oxygen,
wherein the plastic of the plastic matrix is decomposed in order to obtain the carbon fibers though the pyrolysis,
wherein the pyrolysis is carried out in a pyrolysis plant according to one of the preceding claims with a pyrolysis furnace (1), wherein the pyrolysis furnace (1) comprises at least the following treatment zones, namely the following sections (19) of the rotary pipe (11) comprise the subsequently specified sequence and the object passes through the subsequent treatment zones:
(A) a heating zone A (19.1), in which the object to be treated and/or recycled is heated to a defined temperature T(A),
(B1) then a first pyrolysis zone B1 (19.2), in which a pyrolysis of the plastic of the plastic matrix of the object to be treated is carried out at a given temperature T(B1) and a defined oxygen content G(B1), and/or
(B2) then a second pyrolysis zones B2 (19.3), in which a final pyrolysis of the plastic of the plastic matrix of the object to be treated remaining after the pyrolysis B1 (19.2) is carried out at a given temperature T(B2) and a defined oxygen content G(B2) up to at least substantially complete removal,
(C) then a cooling zone C (19.4) for the cooling of the recycled RF carbon fiber received from the second pyrolysis zone B2 (19.3),
wherein the oxygen content G(B2) in the second pyrolysis zone B2 (19.3) compared to the oxygen content of G(B1) in the first pyrolysis zone B1 (19.2) is increased by 3 vol.-% to 25 vol.-%, and wherein the temperature T(B2) in the second pyrolysis zone B2 (19.3) compared to the temperature T(B1) in the first pyrolysis zone B1 (19.2) is increased by 25 °C to 300 °C.

10. Recycled carbon fibers pyrolytically obtained from carbon fiber-containing plastics,
wherein the recycled carbon fibers are obtainable by a process according to claim 9, and
wherein the recycled carbon fibers:
• have a wettability compared to water of at most 75°, determined as the tensiometrically measured contact angle according to the Wilhelmy method using single fiber measurement at (23 ± 0.5) °C,
• have a proportion of pyrolysis residues of less than 0.5 wt.-%, based on the recycled carbon fiber and gravimetrically determined,
• have oxygen-containing functional groups at their surface, namely, polar and/or hydrophilic groups selected from phenolic, carboxyl, carbonyl, aldehyde, keto, hydroxyl and/or oxo groups, determined by means of electron spectroscopy for chemical analysis (ESCA), preferably by means of X-ray photoelectron spectroscopy (XPS), and
• have grooves, ribs, indentations, furrows, scratches or craters at their surface.

11. Recycled carbon fiber according to claim 10,
wherein the recycled carbon fibers have a wettability compared to water, determined as the tensiometrically measured contact angle according to the Wilhelmy method using single fiber measurement at (23 ± 0.5) °C, of at most 73°, preferably at most 70°, particularly preferably at most 68 °, more preferably not more than 65 °, most preferably at most 60 °, and/or the recycled carbon fibers have a wettability compared to water, determined as the tensiometrically measured contact angles according to the Wilhelmy method using single fiber measurement at (23 ± 0.5)°C, in the range of 30° to 75°, in particular 35° to 73°, preferably 38° to 70°, particularly preferably 40° to 68°, more preferably 45° and 65°, most preferably 50° to 60°, and/or
wherein the recycled carbon fibers have a proportion of pyrolysis residues in the range of 0.001 to less than 0.5 wt.-%, in particular in the range of 0.01 to less than 0.5 wt.-%, preferably in the range of 0.05 to less than 0.5 wt.-%, more preferably in the range of 0.1 to less than 0.5 wt.-%, based on the carbon fibers, in each case gravimetrically determined, preferably by means of thermogravimetry.

12. Recycled carbon fiber according to claim 10 or 11,
wherein the recycled carbon fibers in the uncrushed state have a fiber length in the range of 0.01 to 5 m, in particular in the range of 0.05 to 3 m, preferably in the range of 0.1 to 2 m, more preferably in the range of 0.2 to 1 m, and/or
wherein the recycled carbon fiber has a tensile strength in the range of 1000 to 6000 MPa, in particular in the range of 1500 to 5000 MPa, preferably in the range of 2000 to 4000 MPa, more preferably in the range of 2500 to 3500 MPa, and/or
wherein the recycled carbon fibers have a modulus of elasticity in the range of 20 to 1000 GPa, in particular in the range of 50 to 800 GPa, preferably in the range of 75 to 600 GPa, more preferably in the range of 100 to 400 GPa, most preferably in the range of 150 to 300 GPa, and/or
wherein the recycled carbon fibers have a mean fiber diameter in the range of 0.1 to 100 µm, especially in the range of 1 to 50 µm, preferably in the range 2 to 25 µm, more preferably in the range of 3 to 15 µm, most preferably in the range of 4 to 10 µm, and/or
wherein the recycled carbon fibers have on their surface at least one treating agent, in particular selected from the group of (i) thermosetting plastics, in particular epoxy resins; (ii) thermoplastic plastics, in particular polyolefin resins; (iii) dispersing agents, in particular fatty amine ethoxylates and/or dialkylene glycols; (iv) defoamers, in particular polydialkylsiloxanes, as well as mixtures and combinations thereof.

13. Use of recycled carbon fibers according to one of the preceding claims 10 to 12 containing as an additive, in particular as an additive for plastics, building materials or cement-containing systems or for the production of carbon fiber-containing plastics or for incorporation into plastics, particularly for compounding, or for the production of molded bodies, molds and surface materials containing carbon fibers.

14. Plastics, building materials or cementitious systems, comprising recycled carbon fibers according to one of the preceding claims 10 to 12 and/or produced using recycled carbon fibers according to one of the preceding claims 10 to 12.

15. Molded bodies, molds and surface materials, in particular in the form of composite materials or compounds comprising recycled carbon fibers according to one of the preceding claims 10 to 12, and/or produced using recycled carbon fibers according to one of the preceding claims 10 to 12.

## Revendications

1. Installation de pyrolyse pour la récupération de fibres de carbone à partir de plastiques contenant des fibres de carbone, en particulier à partir de plastiques renforcés par des fibres de carbone, de préférence à partir de matériaux composites contenant des fibres de carbone et/ou renforcés par des fibres de carbone,
comportant un four de pyrolyse (1), allongé, travaillant en continu en cours d'exploitation, pour la pyrolyse continue d'un matériau CFK (plastique renforcé par des fibres de carbone ) (2),
comportant une station d'alimentation (3) pour introduire dans le four de pyrolyse (1), en l'une de ses extrémités, le matériau CFK (2) à mettre en oeuvre,
comportant une station de décharge (6) pour évacuer du four de pyrolyse (1), en son autre extrémité, le matériau de fibres de carbone (7) récupéré,
comportant un dispositif évent de gaz (8), pour le gaz de pyrolyse (9) produit dans le four de pyrolyse (1), et
comportant un dispositif de commande (10), en particulier pour la régulation d'au moins des constituants individuels du gaz dans le four de pyrolyse (1), en particulier pour la régulation de la proportion d'oxygène dans le gaz dans le four de pyrolyse (1),
le four de pyrolyse (1) étant un four tubulaire rotatif à chauffage indirect, qui comprend au moins les constituants suivants:
un tube rotatif (11), allongé, formant la réception du matériau CFK (2) à mettre en oeuvre, tube rotatif qui est relié à la station d'alimentation (3) et à la station de décharge (6), le tube rotatif (11) étant, au moins sur une partie de sa longueur, sur sa surface latérale, pourvu d'ouvertures de sortie (12), pour évacuer le gaz de pyrolyse (9) qui se forme lors de la pyrolyse, et
une enveloppe (13), isolée vers l'extérieur, entourant le tube rotatif (11) au moins en partie, comprenant des passages pour la station d'alimentation (3) et éventuellement aussi pour la station de décharge (6), et comportant des conduites d'évacuation (14), en particulier pour le gaz de pyrolyse (9), plusieurs segments (19), ayant des températures de gaz pouvant être régulées séparément ou différemment les unes des autres, étant prévus dans l'enveloppe (13) le long de la longueur du tube rotatif (11),
**caractérisée en ce que**
les ouvertures de sortie (12) dans le tube rotatif (11) sont prévus au moins dans le segment présentant la température du gaz la plus élevée ;
le four de pyrolyse (1) comprend différents segments (19), plus précisément au moins une zone de chauffage (19.1), une première zone de pyrolyse (19.2), une deuxième zone de pyrolyse (19.3) et une zone de refroidissement (19.4), et la composition du gaz et la température dans le four de pyrolyse (1) peuvent être régulées séparément dans les différents segments (19) du tube rotatif (11), plus précisément avec une proportion d'oxygène G(B1) définie et avec une température T(B1) définie dans la première zone de pyrolyse (19.2), et avec une proportion d'oxygène G(B2) définie et une température T(B2) définie dans la deuxième zone de pyrolyse (19.3) ; et
l'installation de pyrolyse comprend en outre un dispositif de broyage, disposé dans la direction du procédé en amont, ou en avant de la station d'alimentation (3), pour broyer le matériau CFK (2) à mettre en oeuvre.

2. Installation de pyrolyse selon la revendication 1, dans laquelle le tube rotatif (11) comprend une première section de chauffage (15), partant de la station d'alimentation (3), et une deuxième section de refroidissement (16), située ensuite, et conduisant à la station de décharge (6).

3. Installation de pyrolyse selon la revendication 2,
dans laquelle, dans la section de refroidissement (16), le tube rotatif (11) est conçu de façon à pouvoir être refroidi par de l'eau, et/ou
dans laquelle le tube rotatif (11) ne présente dans la section de refroidissement (16) aucune ouverture de sortie (12).

4. Installation de pyrolyse selon l'une des revendications précédentes,
dans laquelle les ouvertures de sortie (12) sont disposées en étant réparties d'une manière essentiellement uniforme sur le périmètre du tube rotatif (11) ; et/ou
dans laquelle la taille des ouvertures de sortie (12) est réglable.

5. Installation de pyrolyse selon l'une des revendications précédentes,
dans laquelle le tube rotatif (11) est disposé en étant incliné vers le bas, de la station d'alimentation (3) vers la station de décharge (6) ; et/ou
dans laquelle le tube rotatif (11) est, dans son volume intérieur, pourvu d'éléments mélangeurs (22), en particulier de déflecteurs, et/ou dans laquelle le tube rotatif (11) est pourvu d'une part d'éléments mélangeurs (22), et d'autre part d'un élément transporteur (26), en particulier une vis transporteuse, de préférence une vis transporteuse d'Archimède.

6. Installation de pyrolyse selon l'une des revendications précédentes,
dans laquelle la station d'alimentation (3) est configurée comme un sas d'entrée.

7. Installation de pyrolyse selon l'une des revendications précédentes, dans laquelle le chauffage du four de pyrolyse (1) est réalisé, en partant d'au moins un brûleur de gaz disposé extérieurement, par l'intermédiaire de conduites de gaz chaud (24) dans l'enveloppe (13).

8. Utilisation d'une installation de pyrolyse selon l'une des revendications précédentes pour la récupération de fibres de carbone à partir de plastiques contenant des fibres de carbone, en particulier à partir de plastiques renforcés par des fibres de carbone, de préférence à partir de matériaux composites contenant des fibres de carbone et/ou renforcés par des fibres de carbone.

9. Procédé pour la récupération de fibres de carbone à partir de plastiques contenant des fibres de carbone, en particulier à partir de plastiques renforcés par des fibres de carbone, de préférence à partir de matériaux composites contenant des fibres de carbone et/ou renforcés par des fibres de carbone,
- dans lequel un objet, à base d'un plastique contenant des fibres de carbone, qui comprend des fibres de carbone dans une matrice plastique, est soumis à une pyrolyse en plusieurs étapes en présence d'oxygène, la matrice plastique étant, lors de la pyrolyse du plastique, décomposée avec obtention des fibres de carbone,
dans lequel la pyrolyse est mise en oeuvre dans une installation de pyrolyse selon l'une des revendications précédentes avec un four de pyrolyse (1), le four de pyrolyse (1) comprenant au moins les zones de traitement suivantes, plus précisément les segments suivants (19) du tube rotatif (11), selon la séquence spécifiée ci-après, et l'objet passe, dans cet ordre, par les zones de traitement suivantes :
(A) une zone de chauffage A (19.1), dans laquelle l'objet à traiter et/ou à recycler est chauffé à une température définie T(A),
(B1) puis une première zone de pyrolyse B1 (19.2), dans laquelle on utilise et/ou met en oeuvre, à une température définie T(B1) et à une teneur en oxygène définie G(B1), une pyrolyse du plastique de la matrice pyrolyse de l'objet à traiter,
(B2) puis une deuxième zone de pyrolyse B2 (19.3), dans laquelle, à une température définie T(B2) et à une teneur définie en oxygène G(B2), une pyrolyse finale du plastique, restant encore après la zone de pyrolyse (B1) (19.2) de la matrice plastique de l'objet à traiter, est mise en oeuvre jusqu'à une élimination au moins pour l'essentiel complète,
(C) puis une zone de refroidissement C (19.4) pour refroidir les fibres de carbone recyclées RF obtenues à partir de la deuxième zone de pyrolyse B2 (19.3),
la teneur en oxygène G(B2) dans la deuxième zone de pyrolyse B2 (19.3) subissant par comparaison avec la teneur en oxygène G(B1) dans la première zone de pyrolyse B1 (19.2) une augmentation de 3 % en volume -à 25 % en volume, et la température T(B2) subissant dans la deuxième zone de pyrolyse B2 (19.3) par rapport à la température T(B1) dans la première zone de pyrolyse B1 (19.2) une augmentation de 25°C à 300°C.

10. Fibres de carbone recyclées par pyrolyse à partir de plastiques contenant des fibres de carbone,
les fibres de carbone recyclées pouvant être obtenues par un procédé selon la revendication 9, et
les fibres de carbone recyclées
- présentant une mouillabilité par rapport à l'eau, déterminée par l'angle de contact mesuré par voie tensiométrique par la méthode de Wilhelmy par mesure d'une fibre individuelle à (23 ± 0,5)°C, d'au plus 75°,
- présentent une proportion de résidus de pyrolyse inférieure à 0,5 % en poids, par rapport aux fibres de carbone recyclées, et déterminée par voie gravimétrique,
- présentent sur leur surface des groupes fonctionnels oxygénés, plus précisément des groupes polaires et/ou hydrophiles, choisis parmi les groupes phénol, carboxyle, carbonyle, aldéhyde, céto, hydroxy et/ou oxo, déterminés par spectroscopie électronique pour analyse chimique (ESCA), de préférence par spectroscopie photoélectronique aux rayons X (SPS), et
- présentent sur leur surface des rainures, des rayures, des renfoncements, des sillons, des éraflures ou des cratères.

11. Fibres de carbone recyclées selon la revendication 10,
les fibres de carbone recyclées présentant une mouillabilité vis-à-vis de l'eau, déterminée par l'angle de contact mesuré par voie tensiométrique par la méthode de Wilhelmy par la mesure d'une fibre individuelle, à (23 ± 0,5)°C d'au plus 73°, de préférence d'au plus 70°, d'une manière particulièrement préférée d'au plus 68°, d'une manière encore plus préférée d'au plus 65°, d'une manière tout particulièrement préférée d'au plus 60°, et/ou les fibres de carbone recyclées présentant une mouillabilité vis-à-vis de l'eau, déterminée par l'angle de contact mesuré par voie tensiométrique par la méthode de Wilhelmy par mesure d'une fibre individuelle à (23 ± 0,5)°C comprise dans la plage de 30° à 75°, en particulier de 35° à 73°, de préférence de 38° à 70°, d'une manière particulièrement préférée de 40° à 68°, d'une manière encore plus préférée de 45° à 65°, d'une manière tout particulièrement préférée de 50° à 60°, et/ou
les fibres de carbone recyclées présentant une proportion de résidus de pyrolyse comprise dans la plage de 0,001 à moins de 0,5% en poids, en particulier dans la plage de 0,01 à moins de 0,5 % en poids, de préférence dans la plage de 0,05 à moins de 0,5 % en poids, préférentiellement dans la plage de 0,1 à moins de 0,5 % en poids, par rapport aux fibres de carbone, déterminée dans chaque cas par voie gravimétrique, de préférence par thermogravimétrie.

12. Fibres de carbone recyclées selon la revendication 10 ou 11,
les fibres de carbone recyclées présentant, à l'état non broyé, une longueur de fibre comprise dans la plage de 0,01 à 5 m, en particulier dans la plage de 0,05 à 3 m, de préférence dans la plage de 0,1 à 2 m, préférentiellement dans la plage de 0,2 à 1 m, et/ou
les fibres de carbone recyclées présentant une résistance à la traction dans la plage de 1000 à 6000 MPa, en particulier dans la plage de 1500 à 5000 MPa, de préférence dans la plage de 2000 à 4000 MPa, préférentiellement dans la plage de 2500 à 3500 MPa, et/ou
les fibres de carbone recyclées présentant un module d'élasticité dans la plage de 20 à 1000 GPa, en particulier dans la plage de 50 à 800 GPa, de préférence dans la .plage de 75 à 600 GPa, préférentiellement dans la plage de 100 à 400 GPa, d'une manière encore plus préférée dans la plage de 150 à 300 GPa, et/ou
les fibres de carbone recyclées présentant un diamètre moyen des fibres dans la plage de 0,1 à 100 µm, en particulier dans la plage de 1 à 50 µm, de préférence dans la plage de 2 à 25 µm, préférentiellement dans la plage de 3 à 15 µm, d'une manière particulièrement préférée dans la plage de 4 à 10 µm, et/ou
les fibres de carbone recyclées présentant sur leur surface au moins un agent de traitement, en particulier choisi dans le groupe (i) des plastiques thermodurcissables, en particulier des résines époxy ; (ii) des plastiques thermoplastiques, en particulier des résines de polyoléfine ; (iii) des dispersants, en particulier des produits d'éthoxylation d'aminés grasses et/ou des dialkylèneglycols ; (iv) des antimoussants, en particulier des polydialkysiloxanes ; ainsi que des mélanges et combinaisons de ceux-ci.

13. Utilisation de fibres de carbone recyclées selon l'une des revendications précédentes 10 à 12 en tant qu'additif, en particulier en tant qu'additif pour plastiques, matériaux de construction ou systèmes cimentaires, ou pour la fabrication de plastiques contenant des fibres de carbone, ou pour incorporation dans des plastiques, en particulier pour le mélange, ou pour fabriquer des objets moulés, des moules et des matériaux bidimensionnels contenant des fibres de carbone.

14. Plastiques, matériaux de construction ou systèmes cimentaires, comprenant des fibres de carbone recyclées selon l'une des revendications précédentes 10 à 12 et/ou fabriqués par utilisation de fibres de carbone recyclées selon l'une des revendications précédentes 10 à 12.

15. Objets moulés, moules et matériaux bidimensionnels, en particulier sous forme de matériaux composites ou de mélanges, comprenant des fibres de carbone recyclées selon l'une des revendications précédentes 10 à 12 et/ou fabriqués par utilisation de fibres de carbone recyclées selon l'une des revendications précédentes 10 à 12.
